(19)

**Europäisches Patentamt**
**European Patent Office**
**Office européen des brevets**

(11) **EP 4 769 258 A1**

(12) **EUROPEAN PATENT APPLICATION**

(43) Date of publication:
**01.07.2026 Bulletin 2026/27**

(21) Application number: **25227149.9**

(22) Date of filing: **24.12.2025**

(51) International Patent Classification (IPC):
**G06Q 10/04** (2023.01)      **G06N 20/00** (2019.01)
**G06Q 40/12** (2023.01)

(52) Cooperative Patent Classification (CPC):
**G06Q 40/12; G06N 3/08; G06N 20/00; G06Q 10/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.12.2024 US 202419001628**

(71) Applicant: **HighRadius Corporation**
**Houston, TX 77042 (US)**

(72) Inventors:
• **Kunwar, Anupam**
  **500081 Hyderabad (IN)**
• **Halder, Rohit**
  **500081 Hyderabad (IN)**
• **Shrivastava, Apoorva**
  **500081 Hyderabad (IN)**
• **Syed, Saad**
  **500081 Hyderabad (IN)**
• **Mishra, Indivar**
  **500081 Hyderabad (IN)**
• **Pattanaik, Aditya Narayan**
  **500081 Hyderabad (IN)**
• **Agrawal, Aditya**
  **500081 Hyderabad (IN)**

(74) Representative: **Caldon, Giuliano et al**
**Gallo & Partners S.r.l.**
**Via Rezzonico, 6**
**35131 Padova (IT)**

(54) **MACHINE LEARNING BASED SYSTEM AND METHOD FOR FORECASTING CASH FLOW**

(57)    A machine learning based (ML-based) method and system for forecasting cash flow, is disclosed. Initially, the data associated with business units are obtained from data sources. The data are pre-processed to generate pre-processed data. Features associated with financial information are determined for horizons based on the pre-processed data using a plurality of input AI models. Feature combinations are generated by integrating the features associated with the financial information, for each horizon of the horizons. Forecasts are generated for each horizon for a pre-determined time interval, using a stacked AI model including forecasting models. The generated forecasts for the cash flow of the business units, are provided as an output, to the users on user interfaces associated with electronic devices associated with the users.

100

**FIG. 1**

EP 4 769 258 A1

**Description**

**FIELD OF INVENTION**

Embodiments of the present disclosure relate to machine learning based (ML-based) systems, and more particularly relates to a ML-based method and system for forecasting cash flow for one or more business units.

**BACKGROUND**

Cash Forecasting is the process of estimating a company's future cash inflows and outflows over a specific period of time typically short to medium term. The cash forecasting process ensures the business maintains sufficient liquidity to fulfill its financial commitments.

Complexity of revenue streams and recording of transactions vary across organizations and conventional in-house cash forecasting techniques are very susceptible to large error due to at least one of: economic conditions, market trends, interest rates and other unexpected events. There is no industry-standard forecast model that handles equivalent complexity and uncertainty.

Further, the conventional in-house cash forecasting techniques may involve basic moving averages and expect manual inputs. The conventional in-house cash forecasting techniques lack in flexibility and customization. The conventional in-house cash forecasting techniques may depend mainly on at least one of: aging, ledgers, and manual instincts, which results in less accurate predictions. The conventional in-house cash forecasting techniques may further face limitations in scalability and performance as an organization grows.

Further, the conventional in-house cash forecasting techniques may be less accurate and lead to increased errors. These traditional techniques struggle to effectively manage future transactions for organizations and are heavily reliant on manual processes. They often provide minimal granular information and have difficulty in handling infrequent off-cycle payments as well as delays in cash receipts.

Hence, there is a need for an improved machine learning based (ML-based) system and method for forecasting cash flow for one or more business units, in order to address the aforementioned issues.

**SUMMARY**

This summary is provided to introduce a selection of concepts, in a simple manner, which is further described in the detailed description of the disclosure. This summary is neither intended to identify key or essential inventive concepts of the subject matter nor to determine the scope of the disclosure.

In accordance with an embodiment of the present disclosure, a machine-learning based (ML-based) method for forecasting cash flow, is disclosed.

The ML-based method further comprises obtaining, by one or more hardware processors, data associated with one or more business units from one or more data sources.

The ML-based method further comprises pre-processing, by the one or more hardware processors, the data to generate pre-processed data.

The ML-based method further comprises determining, by the one or more hardware processors, one or more features associated with one or more financial information for one or more horizons based on the pre-processed data using a plurality of input artificial intelligence (AI) models.

The ML-based method further comprises generating, by the one or more hardware processors, one or more feature combinations by integrating the one or more features associated with the one or more financial information, for each horizon of the one or more horizons.

The ML-based method further comprises generating, by the one or more hardware processors, one or more forecasts for each horizon for a pre-determined time interval, using a stacked AI model comprising one or more forecasting models. In an embodiment, each feature combination of the one or more feature combinations is analyzed as an individual input for each forecasting model of the one or more forecasting models for generating the one or more forecasts for each horizon.

The ML-based method further comprises providing, by the one or more hardware processors, the generated one or more forecasts for the cash flow of the one or more business units, as an output, to the one or more users on one or more user interfaces associated with one or more electronic devices associated with the one or more users.

In an embodiment, pre-processing the data comprises standardizing, by the one or more hardware processors, the data by transforming the data into an organized format being adaptable for performing an intelligent AI-inference process. In an embodiment, standardizing the data comprises at least one of: standardizing one or more column names, converting date and numeric formats across one or more dataset fields, handling null records, standardizing one or more financial transactions by currency conversion, and removing one or more intra-company financial transactions in the one or more financial transactions.

In another embodiment, pre-processing the data further comprises performing, by the one or more hardware processors, the intelligent AI-inference process for adapting the standardized data for ingestion by the plurality of input AI models. In an embodiment, performing the intelligent AI-inference process comprises at least one of: (a) grouping, by the one or more hardware processors, one or more information associated with equivalent entities of the one or more business units; (b) generating, by the one or more hardware processors, one or more synthetic invoices with unpaid open amount upon identifying one or more partially paid invoices; (c) aggregating, by the one or more hardware processors, one or more invoices with information associated with in-period invoice creation and clearance, on week-level; (d) updating, by the one or more hardware processors, a clearing date of the one or more invoices with posting of payments; and (e) automatically detecting, by the one or more hardware processors, the data associated with at least one of: the one or more invoices, one or more payments, one or more deductions, and one or more credit memos, for ingestion by the plurality of input AI models.

In yet another embodiment, pre-processing the data further comprises performing, by the one or more hardware processors, a noise removal process for the data corresponding to each input AI model of the plurality of input AI models. In an embodiment, performing the intelligent AI-inference process comprises at least one of: (a) filtering, by the one or more hardware processors, the data associated with the one or more invoices posted and cleared within a same week, across training data to restrict adding noise to one or more user payment patterns; (b) filtering, by the one or more hardware processors, the data associated with at least one of: one or more manually adjusted invoices, one or more invoice reversals with at least one of: a credit and debit note, and one or more prepaid invoices; (c) filtering, by the one or more hardware processors, the data associated with horizons with abnormal deduction claim rates in history during computing projected deduction claim rate for a forecast period; (d) filtering, by the one or more hardware processors, the data associated with at least one of: one or more prepaid sales orders and one or more purchase orders, along with clearance of one or more corresponding invoices occurring in a week; and (e) filtering, by the one or more hardware processors, the data associated with at least one of: one or more credits that are blocked and the one or more credits that are posted and cleared within a same week, across the training data to restrict adding the noise to one or more user credit claim patterns.

In yet another embodiment, determining the one or more features associated with the one or more financial information using the plurality of input AI models, comprises: (a) determining, by the one or more hardware processors, a payment date of one or more open invoices at a time of forecast based on one or more historical payment patterns, using a first input AI model of the plurality of input AI models; and (b) computing, by the one or more hardware processors, an expected amount from the one or more open invoices across n number of weeks from a week of forecast run, based on the determined payment date of the one or more invoices, using the first input AI model of the plurality of input AI models.

In yet another embodiment, determining the one or more features associated with the one or more financial information using the plurality of input AI models, further comprises determining, by the one or more hardware processors, at least one of: an expected creation and clearance of one or more invoices, one or more credit memos, and pre-deductions across the one or more horizons, using a second input AI model.

In yet another embodiment, determining the one or more features associated with the one or more financial information using the plurality of input AI models, further comprises: (a) determining, by the one or more hardware processors, a deduction to be claimed for the n number of weeks from the week of the forecast run, using a third input AI model, wherein a value associated with the n number of weeks depends on a week cutoff from the first input AI model; and (b) computing, by the one or more hardware processors, a deduction claim rate using at least one of: one or more closed accounts receivable (AR) invoices, and one or more actuals from bank statements, based on an optimum accuracy in historical time period, using the third input AI model.

In yet another embodiment, determining the one or more features associated with the one or more financial information using the plurality of input AI models, further comprises: (a) determining, by the one or more hardware processors, an expected payment against at least one of: one or more sales orders and one or more purchase orders, based on an average time taken from posting of at least one of: the one or more sales orders and the one or more purchase orders, to clearance of the one or more invoices linked to the at least one of: the one or more sales orders and the one or more purchase orders, on a user level, using a fourth input AI model; and (b) computing, by the one or more hardware processors, an expected amount from at least one of: the one or more sales orders and the one or more purchase orders, across n number of weeks from a week of forecast run, based on the determined payment date of the one or more invoices, using the fourth input AI model, wherein a value of the n number of weeks depends on a distribution of an actual clearance of at least one of: the one or more sales orders and the one or more purchase orders, across one or more weeks.

In yet another embodiment, determining the one or more features associated with the one or more financial information using the plurality of input AI models, further comprises determining, by the one or more hardware processors, at least one of: an expected creation and clearance of one or more invoices, one or more credit memos, and pre-deductions across the one or more horizons, using a second input AI model.

In yet another embodiment, determining the one or more features associated with the one or more financial information using the plurality of input AI models, further comprises: (a) determining, by the one or more hardware processors, a deduction to be claimed for the n number of weeks from the week of the forecast run, using a third input AI model, wherein a value associated with the n number of weeks depends on a week cutoff from the first input AI model; and (b) computing, by the one or more hardware processors, a deduction claim rate using at least one of: one or more closed accounts receivable (AR) invoices, and one or more actuals from bank statements, based on an optimum accuracy in historical time period, using the third input AI model.

In yet another embodiment, determining the one or more features associated with the one or more financial information using the plurality of input AI models, further comprises: (a) determining, by the one or more hardware processors, an expected payment against at least one of: one or more sales orders and one or more purchase orders, based on an average time taken from posting of at least one of: the one or more sales orders and the one or more purchase orders, to clearance of the one or more invoices linked to the at least one of: the one or more sales orders and the one or more purchase orders, on a user level, using a fourth input AI model; and (b) computing, by the one or more hardware processors, an expected amount from at least one of: the one or more sales orders and the one or more purchase orders, across n number of weeks from a week of forecast run, based on the determined payment date of the one or more invoices, using the fourth input AI model, wherein a value of the n number of weeks depends on a distribution of an actual clearance of at least one of: the one or more sales orders and the one or more purchase orders, across one or more weeks.

In yet another embodiment, determining the one or more features associated with the one or more financial information using the plurality of input AI models, further comprises determining, by the one or more hardware processors, an expected credit application against one or more open invoices at a time of the forecast based on at least one of: one or more historical credit application patterns and a claim rate of the one or more users, using a fifth input AI model.

In yet another embodiment, determining the one or more features associated with the one or more financial information using the plurality of input AI models, further comprises determining, by the one or more hardware processors, cash flow for a predetermined horizon based on at least one of: one or more historical trends and seasonality with time series data, using a sixth input AI model.

In yet another embodiment, the ML-based method further comprises training, by the one or more hardware processors, the one or more forecasting models of the stacked AI model incrementally on each feature combination of the one or more feature combinations for each horizon of the one or more horizons, using an incremental learning technique. the incremental learning technique is configured to adapt the one or more forecasting models to learn knowledge of the stacked AI model in addition to previously acquired information for generating the one or more feature combinations.

In yet another embodiment, the ML-based method further comprises assessing, by the one or more hardware processors, an accuracy of the one or more forecasting models of the stacked AI model in generating the one or more forecasts for each horizon for a pre-determined time interval. In an embodiment, assessing the accuracy of the stacked AI model comprises: (a) generating, by the one or more hardware processors, the one or more forecasts for each horizon for the pre-determined time interval; (b) ranking, by the one or more hardware processors, the one or more forecasts based on one or more parameters comprising at least one of: weighted accuracy, R2-score, a first absolute error percentile for the pre-determined time interval, and a second absolute error percentile for the pre-determined time interval; and (c) assessing, by the one or more hardware processors, the accuracy of the stacked AI model based on the ranking of the one or more forecasts.

In yet another embodiment, the ML-based method further comprises selecting, by the one or more hardware processors, an optimized stacked AI model for generation of the one or more forecasts based on the one or more parameters and the accuracy of the one or more forecasting models.

In yet another embodiment, the ML-based method further comprises (a) monitoring, by the one or more hardware processors, performance of the stacked AI model for a time duration; (b) determining, by the one or more hardware processors, whether the performance of the stacked AI model with the data, is below a threshold value; (c) fine-tuning, by the one or more hardware processors, the stacked AI model with at least one of: a plurality of parameters, one or more optimized features and horizon combinations; and (d) evaluating, by the one or more hardware processors, the performance of the fine-tuned stacked AI model using a weighted average accuracy across the one or more forecasts for one or more horizons.

In one aspect, a machine learning based (ML-based) system for forecasting cash flow, is disclosed. The ML-based system includes one or more hardware processors and a memory coupled to the one or more hardware processors. The memory includes a plurality of subsystems in the form of programmable instructions executable by the one or more hardware processors.

The plurality of subsystems comprises a data obtaining subsystem configured to obtain data associated with one or more business units from one or more data sources.

The plurality of subsystems further comprises a data pre-processing subsystem configured to pre-process the data to generate pre-processed data.

The plurality of subsystems further comprises a feature determining subsystem configured to determine one or more features associated with one or more financial information for one or more horizons based on the pre-processed data using a plurality of input artificial intelligence (AI) models.

The plurality of subsystems further comprises a feature combination generating subsystem configured to generate one or more feature combinations by integrating the one or more features associated with the one or more financial information, for each horizon of the one or more horizons.

The plurality of subsystems further comprises a forecast generating subsystem configured to generate one or more forecasts for each horizon for a pre-determined time interval, using a stacked AI model comprising one or more forecasting models, In an embodiment, each feature combination of the one or more feature combinations is analyzed as an individual input for each forecasting model of the one or more forecasting models for generating the one or more forecasts for each horizon.

The plurality of subsystems further comprises an output subsystem configured to provide the generated one or more forecasts for the cash flow of the one or more business units, as an output, to the one or more users on one or more user interfaces associated with one or more electronic devices associated with the one or more users.

In another aspect, a non-transitory computer-readable storage medium having instructions stored therein that, when executed by a hardware processor, causes the processor to perform method steps as described above.

To further clarify the advantages and features of the present disclosure, a more particular description of the disclosure will follow by reference to specific embodiments thereof, which are illustrated in the appended figures. It is to be appreciated that these figures depict only typical embodiments of the disclosure and are therefore not to be considered limiting in scope. The disclosure will be described and explained with additional specificity and detail with the appended figures.

## BRIEF DESCRIPTION OF DRAWINGS

The disclosure will be described and explained with additional specificity and detail with the accompanying figures in which:

FIG. 1 is a block diagram illustrating a computing environment with a machine learning based (ML-based) system for forecasting cash flow for one or more business units, in accordance with an embodiment of the present disclosure;

FIG. 2 is a detailed view of the ML-based system for forecasting the cash flow for the one or more business units, in accordance with another embodiment of the present disclosure;

FIG. 3 is an overview of a stacked artificial intelligence (AI) model for forecasting the cash flow, in accordance with another embodiment of the present disclosure;

FIG. 4A-4E is an exemplary tabular view depicting generation of one or more features using a first input AI model (e.g., an invoice payment date model), in accordance with another embodiment of the present disclosure;

FIG. 5 is a graphical representation depicting generation of one or more feature combinations using a plurality of input AI models, in accordance with another embodiment of the present disclosure;

FIG. 6A-6D is an exemplary tabular view depicting generation of one or more features using a second input AI model (e.g., a future sales/expense model), in accordance with another embodiment of the present disclosure;

FIG. 7A-7E is an exemplary tabular view depicting generation of one or more features using a third input AI model (e.g., a deductions claim rate model), in accordance with another embodiment of the present disclosure;

FIG. 8A-8E is an exemplary tabular view depicting generation of the one or more features using a fourth input AI model (e.g., a sales order (SO) - purchase order (PO) model), in accordance with another embodiment of the present disclosure;

FIG. 9A-9F is an exemplary tabular view depicting generation of the one or more features using a fifth input AI model (e.g., a credit application model), in accordance with another embodiment of the present disclosure;

FIG. 10 is an overall architecture of the stacked AI model, in accordance with another embodiment of the present disclosure;

FIG. 11 is a training architecture depicting a training process of one or more forecasting models of the stacked AI model, in accordance with another embodiment of the present disclosure;

FIG. 12A-12F is an exemplary tabular view depicting generation of one or more forecasts for each horizon for a pre-determined time interval, using the stacked AI model, in accordance with another embodiment of the present disclosure;

FIG. 13 is a graphical representation depicting a performance of the stacked AI model across different models for one or more horizons, in accordance with another embodiment of the present disclosure;

FIG. 14 is a graphical representation depicting an accuracy comparison of the stacked AI model with different models for one or more horizons, in accordance with another embodiment of the present disclosure; and

FIG. 15 is a flow chart illustrating a machine-learning based (ML-based) method for forecasting the cash flow for the one or more business units, in accordance with an embodiment of the present disclosure;

Further, those skilled in the art will appreciate that elements in the figures are illustrated for simplicity and may not have necessarily been drawn to scale. Furthermore, in terms of the construction of the device, one or more components of the device may have been represented in the figures by conventional symbols, and the figures may show only those specific details that are pertinent to understanding the embodiments of the present disclosure so as not to obscure the figures with details that will be readily apparent to those skilled in the art having the benefit of the description herein.

## DETAILED DESCRIPTION OF THE DISCLOSURE

For the purpose of promoting an understanding of the principles of the disclosure, reference will now be made to the embodiment illustrated in the figures and specific language will be used to describe them. It will nevertheless be understood that no limitation of the scope of the disclosure is thereby intended. Such alterations and further modifications in the illustrated system, and such further applications of the principles of the disclosure as would normally occur to those skilled in the art are to be construed as being within the scope of the present disclosure. It will be understood by those skilled in the art that the foregoing general description and the following detailed description are exemplary and explanatory of the disclosure and are not intended to be restrictive thereof.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

The terms "comprise", "comprising", or any other variations thereof, are intended to cover a non-exclusive inclusion, such that one or more devices or sub-systems or elements or structures or components preceded by "comprises... a" does not, without more constraints, preclude the existence of other devices, sub-systems, additional sub-modules. Appearances of the phrase "in an embodiment", "in another embodiment" and similar language throughout this specification may, but not necessarily do, all refer to the same embodiment.

Unless otherwise defined, all technical and scientific terms used herein have the same meaning as commonly understood by those skilled in the art to which this disclosure belongs. The system, methods, and examples provided herein are only illustrative and not intended to be limiting.

A computer system (standalone, client or server computer system) configured by an application may constitute a "module" (or "subsystem") that is configured and operated to perform certain operations. In one embodiment, the "module" or "subsystem" may be implemented mechanically or electronically, so a module includes dedicated circuitry or logic that is permanently configured (within a special-purpose processor) to perform certain operations. In another embodiment, a "module" or "subsystem" may also comprise programmable logic or circuitry (as encompassed within a general-purpose processor or other programmable processor) that is temporarily configured by software to perform certain operations.

Accordingly, the term "module" or "subsystem" should be understood to encompass a tangible entity, be that an entity that is physically constructed, permanently configured (hardwired) or temporarily configured (programmed) to operate in a certain manner and/or to perform certain operations described herein.

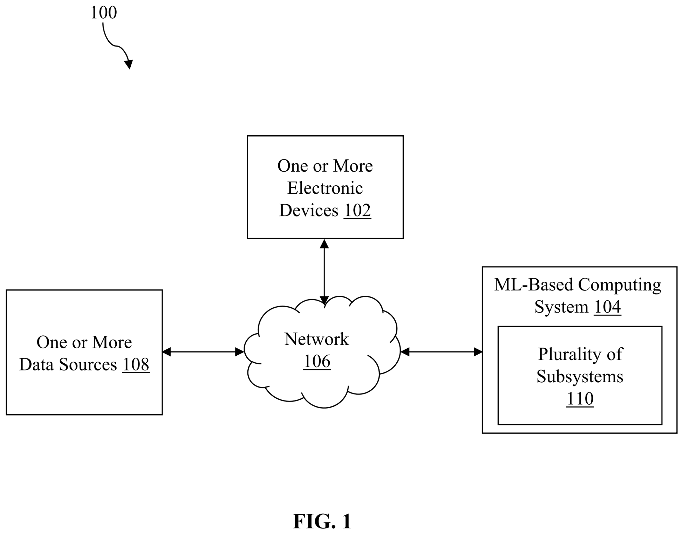

Referring now to the drawings, and more particularly to **FIG. 1** through **FIG. 15,** where similar reference characters denote corresponding features consistently throughout the figures, there are shown preferred embodiments and these embodiments are described in the context of the following exemplary system and/or method.

**FIG. 1** is a block diagram illustrating a computing environment 100 with a machine learning based (ML-based) system 104 for forecasting cash flow for one or more business units, in accordance with an embodiment of the present disclosure. According to **FIG. 1,** the computing environment 100 includes one or more electronic devices 102 that are communicatively coupled to the ML-based system 104 through a network 106. The one or more electronic devices 102 through which one or more end users receive output results from the ML-based system 104.

The present invention is configured to generate one or more forecasts for the one or more business units. The ML-based system 104 is initially configured to obtain data associated with the one or more business units from one or more data sources 108. In an embodiment, the data may be encrypted and decrypted by the ML-based system 104, so that one or more third party users cannot be authenticated to manipulate the data.

The ML-based system 104 is further configured to pre-process the data to generate pre-processed data. The ML-based system 104 is further configured to determine one or more features associated with one or more financial information for one or more horizons based on the pre-processed data using a plurality of input artificial intelligence (AI) models. The ML-based system 104 is further configured to generate one or more feature combinations by integrating the one or more features associated with the one or more financial information, for each horizon of the one or more horizons.

The ML-based system 104 is further configured to generate one or more forecasts for each horizon for a pre-determined time interval, using a stacked AI model comprising one or more forecasting models. In an embodiment, each feature combination of the one or more feature combinations is analyzed as an individual input for each forecasting model of the one or more forecasting models for generating the one or more forecasts for each horizon. The ML-based system 104 is further configured to provide the generated one or more forecasts for the cash flow of the one or more business units, as an output, to the one or more users on one or more user interfaces associated with one or more electronic devices associated with the one or more users.

In an embodiment, the one or more users may include at least one of: one or more data analysts, one or more business analysts, one or more cash analysts, one or more financial analysts, one or more collection analysts, one or more debt collectors, one or more professionals associated with cash and collection management, and the like. In an embodiment, the one or more business units may include at least one of: one or more customers, one or more organizations, one or more corporations, one or more parent companies, one or more subsidiaries, one or more joint ventures, one or more partnerships, one or more governmental bodies, one or more associations, and one or more legal entities, and the like.

The ML-based system 104 may be hosted on a central server including at least one of: a cloud server or a remote server. Further, the network 106 may be at least one of: a Wireless-Fidelity (Wi-Fi) connection, a hotspot connection, a Bluetooth connection, a local area network (LAN), a wide area network (WAN), any other wireless network, and the like. In an embodiment, the one or more electronic devices 102 may include at least one of: a laptop computer, a desktop computer, a tablet computer, a Smartphone, a wearable device, a Smart watch, and the like.

Further, the computing environment 100 includes the one or more data sources 108 communicatively coupled to the ML-based system 104 through the network 106. In an embodiment, the one or more data sources 108 may store the one or more documents. In an embodiment, the one or more data sources 108 includes at least one of: one or more relational databases, one or more object-oriented databases, one or more data warehouses, one or more cloud-based databases, and the like. In another embodiment, a format of the data obtained from the one or more documents may include at least one of: a comma-separated values (CSV) format, a JavaScript Object Notation (JSON) format, an Extensible Markup Language (XML), spreadsheets, and the like.

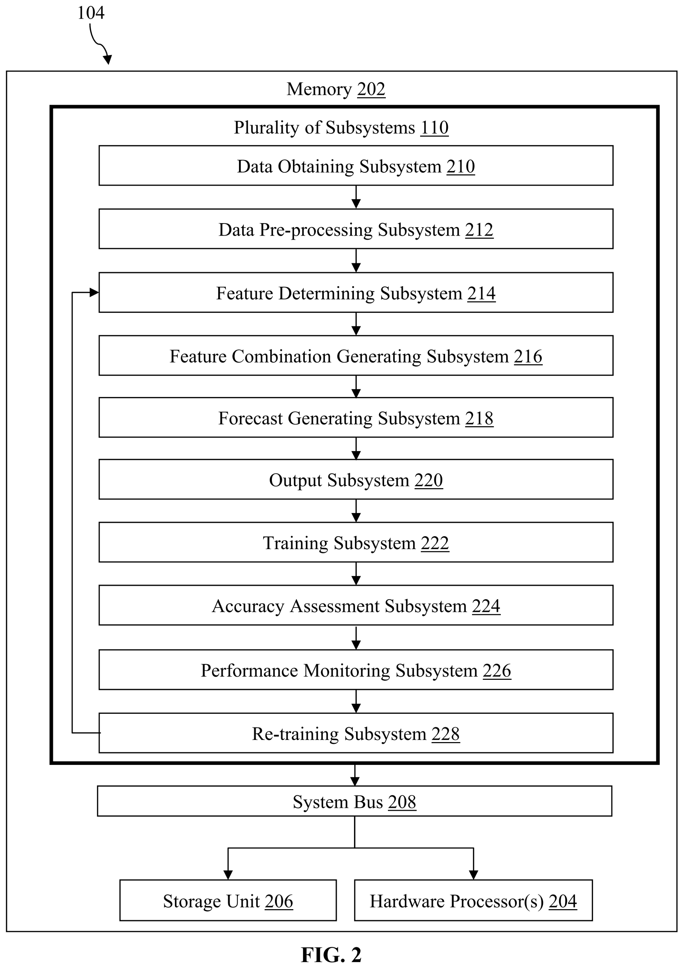

Furthermore, the one or more electronic devices 102 include at least one of: a local browser, a mobile application, and the like. Furthermore, the one or more end users may use a web application through the local browser, the mobile application to communicate with the ML-based system 104. In an embodiment of the present disclosure, the ML-based system 104 includes a plurality of subsystems 110. Details on the plurality of subsystems 110 have been elaborated in subsequent paragraphs of the present description with reference to **FIG. 2.**

**FIG. 2** is a detailed view of the ML-based system 104 for forecasting the cash flow for the one or more business units, in accordance with another embodiment of the present disclosure. The ML-based system 104 includes a memory 202, one or more hardware processors 204, and a storage unit 206. The memory 202, the one or more hardware processors 204, and the storage unit 206 are communicatively coupled through a system bus 208 or any similar mechanism. The memory 202 includes the plurality of subsystems 110 in the form of programmable instructions executable by the one or more hardware processors 204.

The plurality of subsystems 110 includes a data obtaining subsystem 210, a data pre-processing subsystem 212, a feature determining subsystem 214, a feature combination generating subsystem 216, a forecast generating subsystem 218, an output subsystem 220, a training subsystem 222, an accuracy assessment subsystem 224, a performance monitoring subsystem 226, and a re-training subsystem 228. The brief details of the plurality of subsystems 110 have been elaborated in a below table.

| Plurality of Subsystems 110 | Functionality |
|---|---|
| Data obtaining subsystem 210 | The data obtaining subsystem 210 is configured to obtain the data associated with one or more business units from the one or more data sources 108. |
| Data pre-processing subsystem 212 | The data pre-processing subsystem 212 is configured to pre-process the data to generate the pre-processed data. |
| Feature determining subsystem 214 | The feature determining subsystem 214 is configured to determine the one or more features associated with the one or more financial information for the one or more horizons based on the pre-processed data using the plurality of input AI models. |
| Feature combination generating subsystem 216 | The feature combination generating subsystem 216 is configured to generate the one or more feature combinations by integrating the one or more features associated with the one or more financial information, for each horizon of the one or more horizons. |
| Forecast generating subsystem 218 | The forecast generating subsystem 218 is configured to generate the one or more forecasts for each horizon for the pre-determined time interval, using the stacked AI model comprising the one or more forecasting models. |

(continued)

| Plurality of Subsystems 110 | Functionality |
|---|---|
| Output subsystem 220 | The output subsystem 220 is configured to provide the generated one or more forecasts for the cash flow of the one or more business units, as the output, to the one or more users on the one or more user interfaces associated with the one or more electronic devices 102 associated with the one or more users. |
| Training subsystem 222 | The training subsystem 222 is configured to train the one or more forecasting models of the stacked AI model incrementally on each feature combination of the one or more feature combinations for each horizon of the one or more horizons, using an incremental learning technique. |
| Accuracy assessment subsystem 224 | The accuracy assessment subsystem 224 is configured to assess an accuracy of the one or more forecasting models of the stacked AI model in generating the one or more forecasts for each horizon for a pre-determined time interval. |
| Performance monitoring subsystem 226 | The performance monitoring subsystem 226 is configured to monitor performance of the stacked AI model for a time duration. |
| Re-training subsystem 228 | The re-training subsystem 228 is configured to re-train the one or more forecasting models of the stacked AI model over a plurality of time intervals by adjusting one or more values of one or more parameters, when an accuracy of the one or more forecasting models of the stacked AI model, is below a predetermined accuracy threshold value. |

The one or more hardware processors 204, as used herein, means any type of computational circuit, including, but not limited to, at least one of: a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The one or more hardware processors 204 may also include embedded controllers, including at least one of: generic or programmable logic devices or arrays, application specific integrated circuits, single-chip computers, and the like.

The memory 202 may be non-transitory volatile memory and non-volatile memory. The memory 202 may be coupled for communication with the one or more hardware processors 204, being a computer-readable storage medium. The one or more hardware processors 204 may execute machine-readable instructions and/or source code stored in the memory 202. A variety of machine-readable instructions may be stored in and accessed from the memory 202. The memory 202 may include any suitable elements for storing data and machine-readable instructions, including at least one of: read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 202 includes the plurality of subsystems 110 stored in the form of machine-readable instructions on any of the above-mentioned storage media and may be in communication with and executed by the one or more hardware processors 204.

The storage unit 206 may be a cloud storage, a Structured Query Language (SQL) data store, a noSQL database or a location on a file system directly accessible by the plurality of subsystems 110.

The plurality of subsystems 110 includes the data obtaining subsystem 210 that is communicatively connected to the one or more hardware processors 204. The data obtaining subsystem 210 is configured to obtain the data associated with the one or more business units from the one or more data sources 108. In an embodiment, the one or more data sources 108 may include data including at least one of: invoices, payments, debit and credit notes against purchases and sales, extracted from an Enterprise Resource Planning (ERP) system. The one or more data sources 108 may further include bank or ledger statements including bank transactions against all financial activities.

The one or more data sources 108 may further include procure-to-pay module data associated with at least one of: customer specific promise to pay date against invoices and the customer who commits to pay the committed amount on the promise to pay date. The one or more data sources 108 may further include deduction and pre-deduction data associated with at least one of: one or more deductions claimed, and deduction to be claimed in future (i.e., claims corresponding to trade promotion and non-trade promotion). The one or more data sources 108 may further include data associated with at least one of: sales orders (SO) and purchase orders (PO) ordered by the one or more business units.

In an embodiment, the data associated with at least one of: extracted data from the ERP, bank or ledger statements, and SO and PO extracts, are fetched from one or more data sources on a daily basis and stored in a SQL warehouse. The data are then fetched for model consumption on cloud virtual machines (VMs). In an embodiment, the required data field includes at least one of: sales/purchase order date, posting date, due date, promise to pay date, clearing date, transaction date, vendor/customer name, vendor/customer identity (ID), payment terms, sales/purchase order number, invoice number, payment IDs, invoice amount, discount amount, transaction amount across the one or more data sources 108. In an embodiment, there are no data privacy considerations involved in a data input stage as personal information including name, social security number, and address, are not fetched from the one or more data sources.

The plurality of subsystems 110 includes the data pre-processing subsystem 212 that is communicatively connected to the one or more hardware processors 204. The data pre-processing subsystem 212 is configured to pre-process the data to generate the pre-processed data. In an embodiment, pre-processing the data may include standardizing the data by transforming the data into an organized format being adaptable for performing an intelligent AI-inference process. In an embodiment, standardizing the data may include at least one of: standardizing one or more column names, converting date and numeric formats across one or more dataset fields, handling null records, standardizing one or more financial transactions by currency conversion, and removing one or more intra-company financial transactions in the one or more financial transactions.

The column name standardization may include one or more information varies from one or more types of enterprise resource planning (ERP). The column name standardization by a column name standardization module is configured to determine whether one or more dataset headers including the data having uniformity and clarity, providing data analysis and interpretation of the data. The datetime and numeric conversion is configured to standardize date and numeric formats across the one or more data fields. The null records are imputed/dropped based on at least one of: one or more seasonal trends and an impact of the null records with one or more values (i.e., absolute amount values).

The currency conversion by a currency conversion module is configured to standardize one or more financial transactions based on one or more functional currencies of the one or more business units to synchronize one or more transactional data across one or more sources, for consistency of the data. The intra-company removal is configured to remove/filter the one or more financial transactions between the one or more business units of the one or more entities. The nature of the above said one or more financial transactions adds noise in the process of intelligent ai-inferences and the plurality of input AI-Models.

In an embodiment, pre-processing the data may further include performing the intelligent AI-inference process for adapting the standardized data for ingestion by the plurality of input AI models. In an embodiment, performing the intelligent AI-inference process may include grouping one or more information associated with equivalent entities of the one or more business units. In a non-limiting example, the one or more information associated with equivalent entities of the one or more business units can be grouped by ML-based systems and methods disclosed in US Patent Application No. 18/942,821.

In another embodiment, performing the intelligent AI-inference process may further include generating one or more synthetic invoices with unpaid open amount upon identifying one or more partially paid invoices. Each synthetic invoice of the one or more synthetic invoices may include a posting date of a transaction date of partial payments. In an embodiment, a due date may get adjusted based on payment terms.

In yet another embodiment, performing the intelligent AI-inference process may further include aggregating one or more invoices with information associated with in-period invoice creation and clearance, on week-level. In yet another embodiment, performing the intelligent AI-inference process may further include updating a clearing date of the one or more invoices with posting of payments. In general practise, there may be delays in linking closed invoices with remittance. The clearing date of the one or more invoices doesn't reflect the date of posting of the payments. Hence, the clearing date of the one or more invoices are updated with the posting of the payments. In yet another embodiment, performing the intelligent AI-inference process may further include automatically detecting the data associated with at least one of: the one or more invoices, one or more payments, one or more deductions, and one or more credit memos, in a pipeline for ingestion by the plurality of input AI models.

In an embodiment, pre-processing the data may further include performing a noise removal process for the data corresponding to each input AI model of the plurality of input AI models. In an embodiment, performing the noise removal process may include filtering the data associated with the one or more invoices posted and cleared within a same week, across training data to restrict adding noise to one or more user payment patterns. In another embodiment, performing the noise removal process may further include filtering the data associated with at least one of: one or more manually adjusted invoices, one or more invoice reversals with at least one of: a credit and debit note, and one or more prepaid invoices. The data may be at least one of: week on week trends and seasonality from the future sales/expenses data. In an embodiment, data points are filtered/dropped using statistical percentile based on horizon (e.g., horizon 0:99 percentile, horizon 1:97 percentile, horizon 2:95 percentile, horizon 4:92 percentile).

In yet another embodiment, performing the noise removal process may further include filtering the data associated with horizons with historically abnormal deduction claim rates during computing projected deduction claim rate for a forecast period. The abnormal deduction claim rates may include negative claim rates or claim rates with greater than 40%. In yet another embodiment, performing the noise removal process may further include systematically filtering the data associated with at least one of: one or more prepaid sales orders and one or more purchase orders, along with clearance of one or more corresponding invoices occurring in a week. In yet another embodiment, performing the noise removal process may further include filtering the data associated with at least one of: one or more credits that are blocked and the one or more credits that are posted and cleared within a same week, across the training data to restrict adding the noise to one or more user credit claim patterns.

The plurality of subsystems 110 includes the feature determining subsystem 214 that is communicatively connected to the one or more hardware processors 204. The feature determining subsystem 214 is configured to determine the one or more features associated with the one or more financial information for the one or more horizons based on the pre-processed data using the plurality of input artificial intelligence (AI) models. For determining the one or more features associated with the one or more financial information using the plurality of input AI models, the feature determining subsystem 214 is initially configured to determine a payment date of one or more open invoices at a time of forecast based on one or more historical payment patterns, using a first input AI model of the plurality of input AI models. In an embodiment, the first input AI model may be an invoice payment date model. The feature determining subsystem 214 is further configured to compute an expected amount from the one or more open invoices across $\pm n$ number of weeks from a week of forecast run, based on the determined payment date of the one or more invoices, using the first input AI model of the plurality of input AI models. In a non-limiting example, the payment pattern and payment date can be predicted/determined by ML-based computing systems and methods disclosed in US Patent Application No. 18/305,483. The value of $\pm n$ weeks depends on the distribution of the actual clearance of the one or more invoices across one or more weeks. The feature week (i) is computed as follows.

$$\text{feature}_{\text{Week i}} = \text{expected invoice payment (week start (i), weekend (i))} \quad ....\text{Eqn (1)}$$

In an embodiment, the feature determining subsystem 214 is configured to determine at least one of: an expected creation and clearance of one or more invoices, one or more credit memos, and pre-deductions across the one or more horizons, using a second input AI model, to generate forecasted future sales/expense. In an embodiment, the second input AI model may be a future sales/expense model. The feature "invoice" for horizon "i" is computed based on past in-period generation and clearance of the one or more invoices and forecast date. The feature "credit memo" for horizon "i" is computed based on past in-period generation and clearance of the one or more credit memos, and forecast date. The feature "pre-deductions" for horizon "i" is computed based on past in-period generation and clearance of the pre-deductions and forecast date.

In an embodiment, the feature determining subsystem 214 is configured to determine a deduction to be claimed for the $\pm n$ number of weeks from the week of the forecast run, using a third input AI model. In an embodiment, the third input AI model may be an deductions claim rate model. A value associated with the $\pm n$ number of weeks depends on a week cutoff obtained from the first input AI model. The feature determining subsystem 214 is configured to compute deductions claim rate using at least one of: one or more closed accounts receivable (AR) invoices, and one or more actuals from monthly bank statements, based on an optimum accuracy in historical time period, using the third input AI model, based on one or more algorithms (e.g., (a) Median Quarterly Deductions % over the last 3-5 years, (b) Median annual Deduction % over the last 2-4 years, and (c) Average Deduction % of Last 12 Months), based on the highest accuracy in the past 9 months. The deductions claim rate for month is computed as follows.

Monthly Ded % = (Total Invoices Cleared - Actuals From Bank Statement) / ( Total Invoices Cleared)         Eqn (2)

The forecasted deductions claim rate is computed as follows.

$$\text{Forecasted Ded \%} = \text{HPT}_{\text{9 Months}}(\text{ Median}_{\text{Quarterly}}, \text{Median }_{\text{Quarterly}}, \text{Mean}_{\text{12 Month}})..\text{Eqn (3)}$$

The feature week (i) is computed as follows.

$$\text{feature }_{\text{Week i}} = \text{forecasted ded \% * expected amount }_{\text{Week/horizon I}} \quad .... \text{ Eqn (4)}$$

In an embodiment, the feature determining subsystem 214 is configured to determine an expected payment against at least one of: one or more sales orders and one or more purchase orders, based on an average time taken from posting of at least one of: the one or more sales orders and the one or more purchase orders, to clearance of the one or more invoices linked to the at least one of: the one or more sales orders and the one or more purchase orders, on a user/customer level, using a fourth input AI model. In an embodiment, the fourth input AI model may be a sales order (SO)/purchase order (PO) model. The feature determining subsystem 214 is further configured to compute an expected amount from at least one of: the one or more sales orders and the one or more purchase orders, across $\pm n$ number of weeks from a week of forecast run, based on the determined payment date of the one or more invoices, using the fourth input AI model. The value of the $\pm n$ weeks depends on the distribution of the actual clearance of at least one of: the one or more sales orders and the one or more purchase orders across one or more weeks. The feature week (i) is computed as follows.

$$\text{feature } w_{eek} \text{ i} = \text{expected purchase or sales order payment (week start (i), week end (i))} \qquad \text{Eqn (5)}$$

In an embodiment, the feature determining subsystem 214 is configured to determine an expected credit application against one or more open invoices at a time of the forecast based on at least one of: one or more historical credit application patterns and a claim rate of the one or more users, using a fifth input AI model. In an embodiment, the fifth input AI model may be a credit application model. In an embodiment, the fifth input AI model of the plurality of input AI models is configured to determine the clearing date of open credits at a time of forecast based on historical payment behavior. The credit-application may be divided across $\pm n$ weeks from the week of forecast run. The value $\pm n$ weeks depends on the week cutoff obtained from the first input AI model (e.g., the invoice payment date model). The feature week (i) is computed as follows.

$$\text{feature }_{Week\ i} = \text{expected credit-application (week start (i), week end (i))}\ldots.\text{Eqn (6)}$$

In an embodiment, the fifth input AI model of the plurality of input AI models is configured to determine user level historical claim rate given as below.

$$\text{Claim rate} = \text{credit applied} / \text{total allocated credit} \qquad \ldots.\text{Eqn (7)}$$

An expected claim percentage is computed as follows.

$$\text{Expected Claim \%} = \text{HPT}_{9Months}(\ \text{Median}_{Quarterly}, \text{Median }_{Quarterly}, \text{Mean}_{12\ Month})..\text{Eqn (8)}$$

An expected credit claim is computed as follows.

$$\text{Expected Credit Claim} = \text{Expected Claim \%} * \text{total allocated credit} \qquad \ldots.\text{Eqn (9)}$$

The expected credit claim is prorated across the one or more weeks based on expected invoice payment from the first input AI model (e.g., the invoice payment date model). The feature week (i) is computed as follows.

$$\text{feature } w_{eek\ i} = \text{expected credit-application (week start (i), week end (i), expected credit claim, expected invoice payment)} \qquad \text{Eqn (10)}$$

In an embodiment, the feature determining subsystem 214 is configured to determine cash flow for a pre-determined horizon based on at least one of: one or more historical trends and seasonality with time series data, using a sixth input AI model. In an embodiment, the sixth input AI model may be a bank model or an automated bank model which uses the one or more historical trends and seasonality with time series data to determine cash flow for a predetermined horizon.

The plurality of subsystems 110 includes the feature combination generating subsystem 216 that is communicatively connected to the one or more hardware processors 204. The feature combination generating subsystem 216 is configured to generate the one or more feature combinations by integrating the one or more features associated with the one or more financial information, for each horizon of the one or more horizons. In an embodiment, the one or more features from the first input AI model (e.g., the invoice payment date model) is generated as -n-inv, -(n-1)-inv, ..., -2-inv, -1-inv, 0-inv, 1-inv, 2-inv, ..., (n-1)-inv, n-inv. If a specific groups of the one or more business units have a specific financing behavior including at least one of: invoice-factoring, same business unit and vendor, differentiable payment terms, differentiable cash application delays, the one or more feature sets may be segregated. The number of such-groups are configurable based on users feedback. The invoices of the business unit without specific financing behavior are -n_inv, -(n-1)_inv, ..., -2_inv, -1_inv, 0_inv, 1_inv, 2_inv, ..., (n-1)_inv, n_inv. The invoices of the business unit with differentiable cash application delays are - n_ADinv, -(n-1)_ADinv, ..., -2_ADinv, -1_ADinv, 0_ADinv, 1_ADinv, 2_ADinv, ..., (n-1)_ADinv, n_Adinv. The invoices of the business unit with invoice factoring are - n_IFinv, -(n-1)_IFinv, ..., -2_IFinv, -1_IFinv, 0_IFinv, 1_IFinv, 2_IFinv, ..., (n-1)_IFinv, n_Ifinv.

In an embodiment, the one or more features from the second input AI model (e.g., the future sales/expense model is generated as at least one of: (a) 0_fs_inv, 1_fs_inv, 2_fs_inv, 3_fs_inv, (b) 0_fs_cm, 1_fs_cm, 2_fs_cm, 3_fs_cm, and (c) 0_fs_pd, 1_fs_pd, 2_fs_pd, 3_fs_pd. In an embodiment, the one or more features from the third input AI model (e.g., the deductions claim rate model) is generated as -n_ded, -(n-1)_ded..., - 2_ded, -1_ded, 0_ded, 1_ded, 2_ded, ..., (n-1)_ded, n_ded. In an embodiment, the one or more features from the fourth input AI model (e.g., the sales order-purchase order model is generated as at least one of: (a) -n_so, -(n-1)_so, ..., -2_so, -1_so, 0_so, 1_so, 2_so, ..., (n-1)_so, n_so, for the sales order (SO) model, and (b) -n_so, -(n-1)_po, ..., -2_po, -1_so, 0_po, 1_so, 2_po, ..., (n-1)_po, n_po, for the purchase order (PO) model.

In an embodiment, the one or more features from the fifth input AI model (e.g., the credit application model is generated as -n_cm, -(n-1)_cm ..., -2_cm, -1_cm, 0_cm, 1_cm, 2_cm, ..., (n-1)_cm, n_cm, for customer level credit-application behavior. If a specific groups of the one or more business units have a specific financing behavior related to application of credits. The one or more feature sets may be segregated similar to the one or more features from the first input ai model (e.g., the invoice payment date model). The the one or more features from the fifth input AI model (e.g., the credit application model is generated as -n_cm, -(n-1)_cm ..., -2_cm, -1_cm, 0_cm, 1_cm, 2_cm, ..., (n-1)_cm, n_cm, for customer level historical claim rate.

The plurality of subsystems 110 includes the forecast generating subsystem 218 that is communicatively connected to the one or more hardware processors 204. The forecast generating subsystem 218 is configured to generate the one or more forecasts for each horizon for the pre-determined time interval (e.g., last 13 weeks), using the stacked AI model comprising one or more forecasting models. Each feature combination of the one or more feature combinations is analyzed as an individual input for each forecasting model of the one or more forecasting models for generating the one or more forecasts for each horizon. In an embodiment, the stacked AI model may include at least two different model types including a linear regression model for short and medium term (upto 0-41 days), and the bank model for long term (upto 42-365 days).

The plurality of subsystems 110 includes the training subsystem 222 that is communicatively connected to the one or more hardware processors 204. The training subsystem 222 is configured to train the one or more forecasting models of the stacked AI model incrementally on each feature combination of the one or more feature combinations for each horizon (e.g., horizon 0 : 0-6 days, horizon 1 : 0-13 days, .... horizon 5 : 0-41 days) of the one or more horizons with or without intercepts, using an incremental learning technique. In an example, for horizon 0 (0-6 days), the first linear regression model is trained with -n_inv; the second linear regression model is trained with -n_inv, -(n-1)_inv; and so on such that $k^{th}$ linear regression model is trained with (n-1)_inv, n_inv; the $k+1^{th}$ linear regression model is trained with n_inv; the $k+2^{th}$ linear regression model is trained with -n_inv, 0_fs_inv and continuously so forth.

In another example, for horizon 1 (0-13 days), the first linear regression model is trained with -n_inv; the first linear regression model is trained with -n_inv, -(n-1)_inv; and so on, such that the $k^{th}$ linear regression model is trained with (n-1)_inv, n_inv; the $k+1^{th}$ linear regression model is trained with n_inv; the $k+2^{th}$ linear regression model is trained with - n_inv, 1_fs_inv, and continuously so forth. In yet another example, for horizon 5 (0-41 days), the first linear regression model is trained with -n_inv; the first linear regression model is trained with -n_inv, -(n-1)_inv; and so on. Such that $k^{th}$ linear regression model is trained with (n-1)_inv, n_inv; the $k+1^{th}$ linear regression model is trained with n_inv; the k+2th linear regression model is trained with -n_inv, 2_fs_inv and continuously so forth.

The incremental learning is a methodology of machine learning used in the present disclosure enables the AI model to learn and enhances its knowledge progressively, without forgetting previously acquired information. In other words, the incremental learning technique is configured to adapt the one or more forecasting models to learn knowledge of the stacked AI model in addition to previously acquired information for generating the one or more feature combinations. The Incremental learning technique may provide efficient use of resources, real-time adaptation, efficient learning, learning from non-stationary data. For each incremental forecast week, the linear regression model is fitted on an additional data point. For example, the training data for forecast for week 1 is considered as training start date to (forecast week 1) - 1 week - horizon. The training data for forecast for week 2 is considered as training start date to (forecast week 2) - 1 week - horizon.

The plurality of subsystems 110 includes the output subsystem 220 that is communicatively connected to the one or more hardware processors 204. The output subsystem 220 is configured to provide the generated one or more forecasts for the cash flow of the one or more business units, as the output, to the one or more users on the one or more user interfaces associated with the one or more electronic devices 102 associated with the one or more users. The output of the AI model may include a day level forecast for the upcoming 365 Days in the functional currency of the one or more business units, which is saved in the S3 bucket. Further an agent is configured to upload the content of the file into the one or more data sources 108.

The plurality of subsystems 110 includes the accuracy assessment subsystem 224 that is communicatively connected to the one or more hardware processors 204. The accuracy assessment subsystem 224 is configured to assess an accuracy of the one or more forecasting models of the stacked AI model in generating the one or more forecasts for each horizon for a pre-determined time interval. For assessing the accuracy of the stacked AI model, the accuracy assessment subsystem 224 is initially configured to generate the one or more forecasts for each horizon for the pre-determined time interval (e.g., last 13 weeks). The accuracy assessment subsystem 224 is further configured to rank the one or more forecasts based on one or more parameters comprising at least one of: weighted accuracy, R2-score, a first absolute error percentile (e.g., 75%) for the pre-determined time interval, and a second absolute error percentile (e.g., 90%) for the pre-determined time interval.

In an embodiment, the weighted accuracy is computed by subtracting an absolute percentage error value from one. In an embodiment, the Absolute Percentage Error is computed over the forecasted value as the user actionability may be solely based on the forecast. For periods where the absolute difference between forecast and actual is greater than or equal to forecast or the actuals, the accuracy is assigned as 0%. The actual cashflow from bank statements are considered as weights.

In an embodiment, the R-squared is a proportion of variance in a dependent variable that is predictable from one or more independent variables. The R-squared parameter is computed by division of difference between Variance(Mean) and Variance(Pred), by the Variance(Mean), where Variance(Mean) = $(\sum i=1^n (x_i - x_{mean})^2)/N$ and Variance(Mean) = $(Yi=1^n (x_i - x_{pred})^2)/N$. In an embodiment, $x_i$ is the actual cashflow from the bank statements from the week for the horizon (e.g., Horizon 0 - actuals from day 0 to day 6 from forecast date, Horizon 1 - actuals from day 0 to day 13 from forecast date, and so on). N represents total number of data points.

The first absolute error percentile (e.g., 75%) for the pre-determined time interval represents the 75th percentile of the absolute error to forecast ratio that is a statistical measure used to assess the variability of the forecasting models. The second absolute error percentile (e.g., 90%) for the pre-determined time interval represents the 90th percentile of the absolute error to forecast ratio that is a statistical measure used to assess the variability of the forecasting models.

The accuracy assessment subsystem 224 is further configured to select an optimized stacked AI model for generation of the one or more forecasts based on the one or more parameters and the accuracy of the one or more forecasting models. For example, the plurality of input AI models with weighted percentage error in range of Weighted_Precentage_Error * $(1\pm0.15)$ for the minimum of (weighted percentage error) are selected. The plurality of input AI models with Abs_(Error/Forecast)_Percentile_90% in range of Abs_(Error/Forecast)_Percentile_90% * $(1\pm0.15)$ for the maximum of (Abs_(Error/Forecast)_Percentile_90%), are selected. The plurality of input AI models with Abs_(Error/Forecast)_Percentile_75% in range of Abs_(Error/Forecast)_Percentile_75% * $(1\pm0.15)$ for the maximum of (Abs_(Error/Forecast)_Percentile_75%), are selected. The model with the highest R-Squared score is selected, which enables each horizon to have a final model. In an embodiment, the bank model may utilize historical timeseries data related to cash flows available from the bank statements for considering weights.

In one embodiment, the generated one or more forecasts on a horizon level may be broken into a week-level. For example, in terms of horizon level forecasts, the horizon 0 includes cumulative forecast 0-6 days, the horizon 1 includes cumulative forecast 0-13 days, the horizon 2 includes cumulative forecast 0-20 days, and the horizon 52 includes cumulative forecast 0-364 days. In terms of week level forecasts, the week 0 forecast is computed as horizon 0 forecast. The week 0 forecast is computed as difference between horizon 1 forecast and horizon 0 forecast. The week 52 forecast is computed as difference between horizon 52 forecast and horizon 51 forecast. In an embodiment, the week level forecasts are broken down into day level based on prorated bank actuals for the past 12 weeks.

The plurality of subsystems 110 includes the performance monitoring subsystem 226 that is communicatively connected to the one or more hardware processors 204. The performance monitoring subsystem 226 is configured to monitor performance of the stacked AI model for a time duration. The performance monitoring subsystem 226 is further configured to determine whether the performance of the stacked AI model with the data, is below a threshold value. The performance monitoring subsystem 226 is further configured to fine-tune the stacked AI model with at least one of: a plurality of parameters, one or more optimized features and horizon combinations.

The performance monitoring subsystem 226 is further configured to evaluate the performance of the fine-tuned stacked AI model using a weighted average accuracy across the one or more forecasts for one or more horizons. In an embodiment, the weighted average accuracy is computed by subtracting an absolute percentage error value from one. In an embodiment, the Absolute Percentage Error is computed over the forecasted value as the user actionability may be solely based on the forecast. For periods where the absolute difference between forecast and actual is greater than or equal to forecast or the actuals, the accuracy is assigned as 0%.

The plurality of subsystems 110 includes the re-training subsystem 228 that is communicatively connected to the one or more hardware processors 204. The re-training subsystem 228 is configured to re-train the one or more forecasting models of the stacked AI model over a plurality of time intervals by adjusting the one or more values of the one or more parameters, when the accuracy of the one or more forecasting models of the stacked AI model, is below a predetermined accuracy threshold value. The re-training subsystem 228 is further configured to process the re-trained one or more forecasting models of the stacked AI model with the adjusted one or more values of the one or more parameters to optimize the accuracy of the one or more forecasting models of the stacked AI model.

The present invention may utilize one or more combinations of the plurality of input AI models across the one or more horizons, as given in a below table.

| Forecast Horizon | AI-Inferred Data Sources | Input AI Model |
|---|---|---|
| Short Term and Medium Term Forecast (0 - 41 days) | open invoice on sub-customer level | First input AI model (e.g., Invoice Payment Date Model) |
| | in-period invoice creation and clearance | Second input AI model (e.g., Future Sales/Expense Model) |
| | unapplied credit notes | Fifth input AI model (e.g., Credit Application Model) |
| | claimed deduction and open pre-deductions | Third input AI model (e.g., Deduction Claims Model) |
| | open purchase order and sales order on sub-customer level | Fourth input AI model (e.g., SO - PO Model) |
| Long Term Forecast ( 42 - 365 days) | Historical Bank Statements (1 Week to > 2 Years) using Historical Seasonality + Holiday effects + Recent Trends | Sixth input AI model (e.g., Bank Model) |

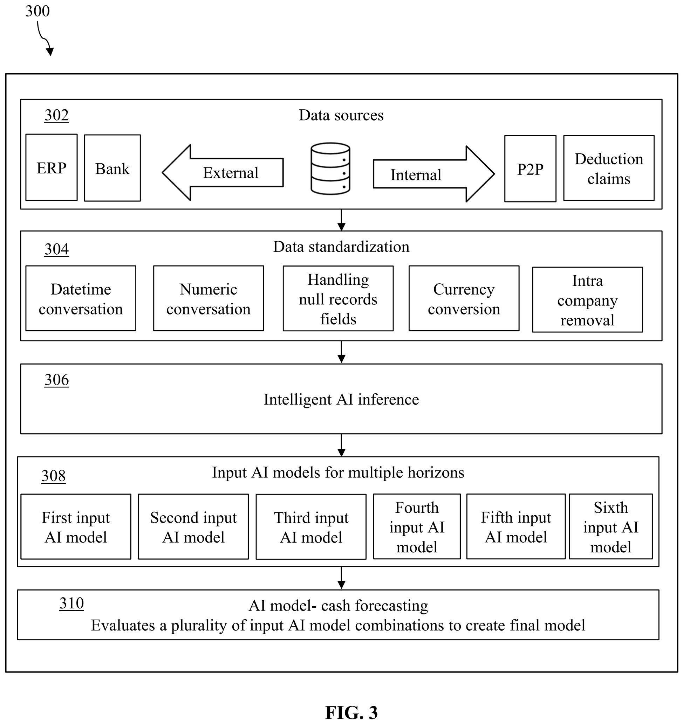

**FIG. 3** is an overview 300 of the stacked artificial intelligence (AI) model for forecasting the cash flow, in accordance with another embodiment of the present disclosure. At step 302, the data associated with the one or more business units are obtained from the one or more data sources 108. At step 304, the data are pre-processed to standardize the data. In an embodiment, standardizing the data comprises at least one of: standardizing the one or more column names, converting the date and numeric formats across the one or more dataset fields, the handling null records, standardizing the one or more financial transactions by currency conversion, and removing the one or more intra-company financial transactions in the one or more financial transactions.

At step 306, the data are further pre-processed to perform the intelligent AI-inference process for adapting the standardized data for ingestion by the plurality of input AI models. In an embodiment, performing the intelligent AI-inference process may include at least one of: (a) grouping the one or more information associated with the equivalent entities of the one or more business units, (b) generating the one or more synthetic invoices with the unpaid open amount upon identifying the one or more partially paid invoices, (c) aggregating the one or more invoices with the information associated with the in-period invoice creation and clearance, on the week-level, (d) updating the clearing date of the one or more invoices with posting of payments, and (e) automatically detecting the data associated with at least one of: the one or more invoices, the one or more payments, the one or more deductions, and the one or more credit memos, in the pipeline for ingestion by the plurality of input AI models. At step 308, the one or more feature combinations are generated by integrating the one or more features associated with the one or more financial information, for each horizon of the one or more horizons. At step 310, the one or more forecasts are generated for each horizon for the pre-determined time interval, using the stacked AI model comprising one or more forecasting models.

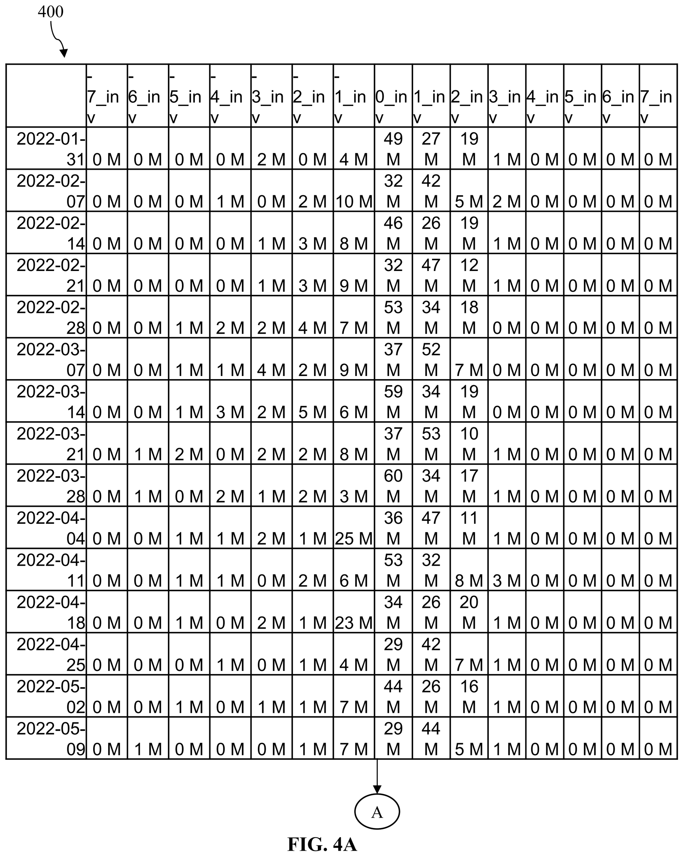

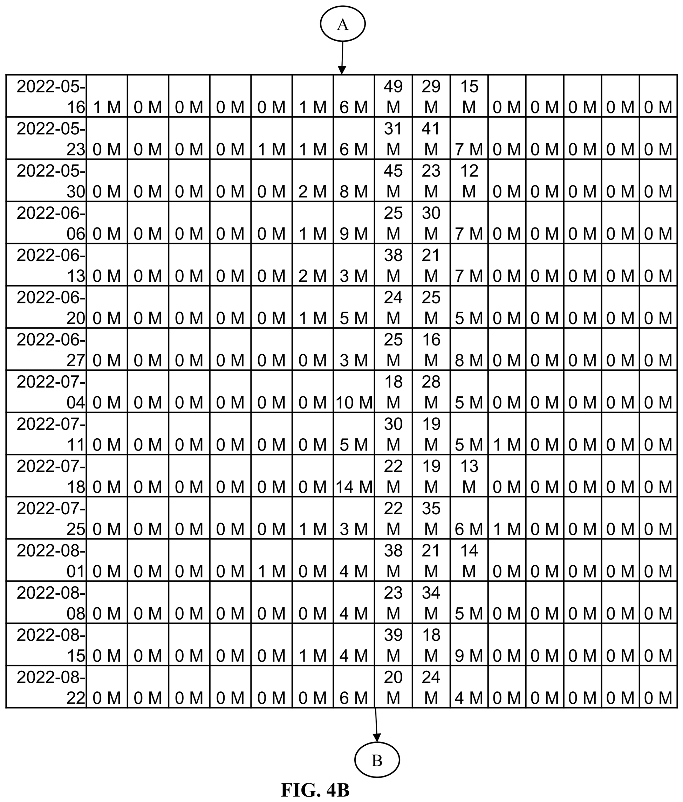

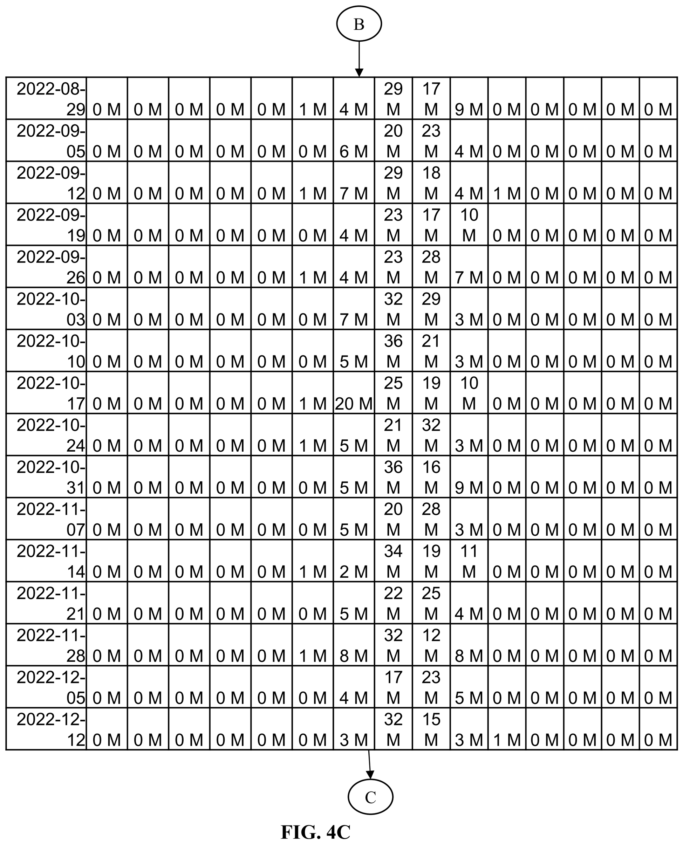

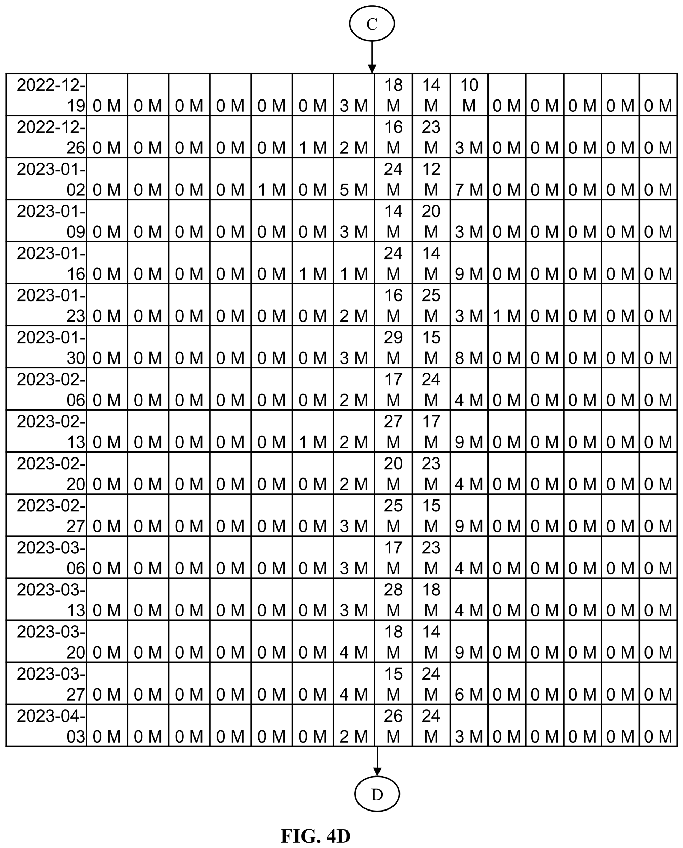

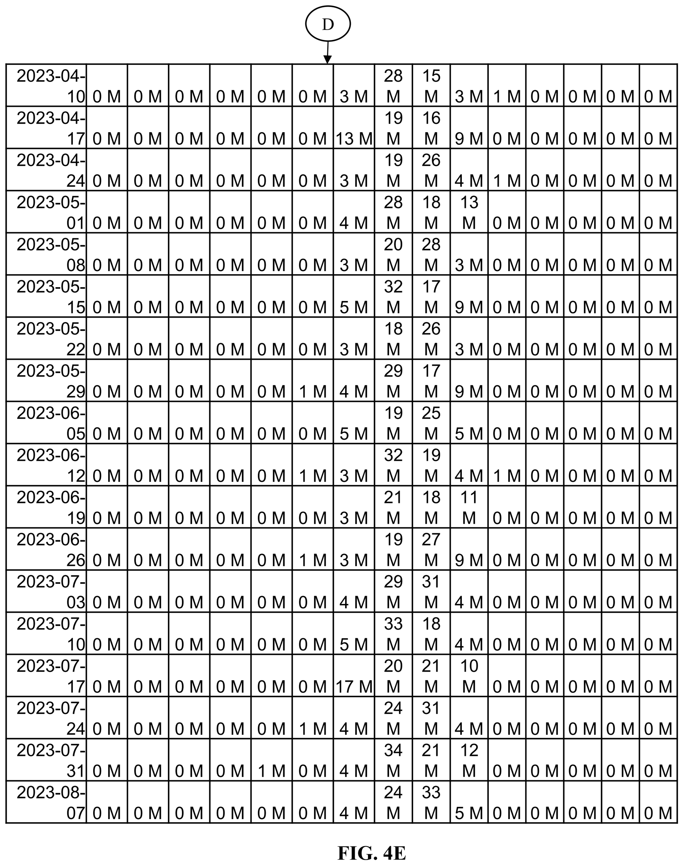

**FIG. 4A-4E** is an exemplary tabular view 400 depicting generation of the one or more features using a first input AI model (e.g., an invoice payment date model), in accordance with another embodiment of the present disclosure. The payment date of the one or more open invoices are determined at a time of the forecast based on the one or more historical payment patterns, using the first input AI model of the plurality of input AI models. In an embodiment, the first input AI model may be the invoice payment date model. The expected amount from the one or more open invoices is computed across $\pm n$ number of weeks from a week of forecast run, based on the determined payment date of the one or more invoices, using the first input AI model of the plurality of input AI models. In **FIG. 4A-4E,** the circular symbols with "A, B, C, and D" written inside are being used as an off-page connector. These are used for indicating that **FIG. 4A** continues in the subsequent pages as **FIG. 4B-4E.**

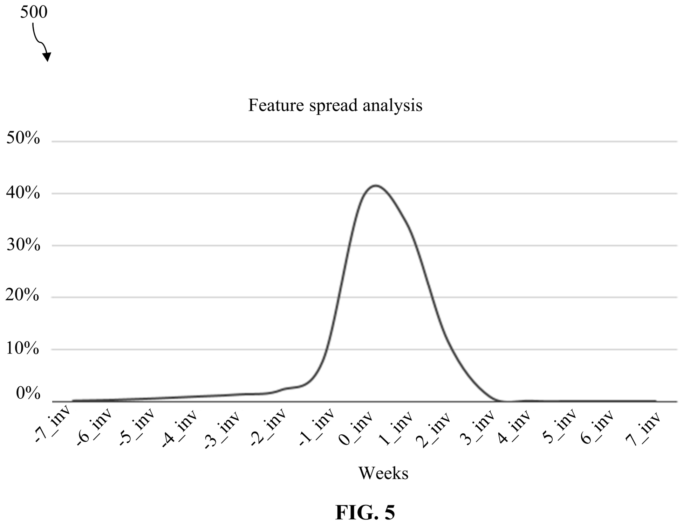

**FIG. 5** is a graphical representation 500 depicting generation of the one or more feature combinations using the plurality of input AI models, in accordance with another embodiment of the present disclosure. The value of the $\pm n$ weeks depends on the spread of the actual clearance of the one or more invoices across the one or more weeks. The spread of the cleared one or more invoices is the actual clearance observed in the respective expected weekly buckets. The tighter the spread from the first input AI model (e.g., the invoice payment date model), the better is the predictability for payment behavior. The feature week (i) is computed as follows.

$$\text{feature}_{\text{Week i}} = \text{expected invoice payment (week start (i), weekend (i))} \quad ....\text{Eqn (1)}$$

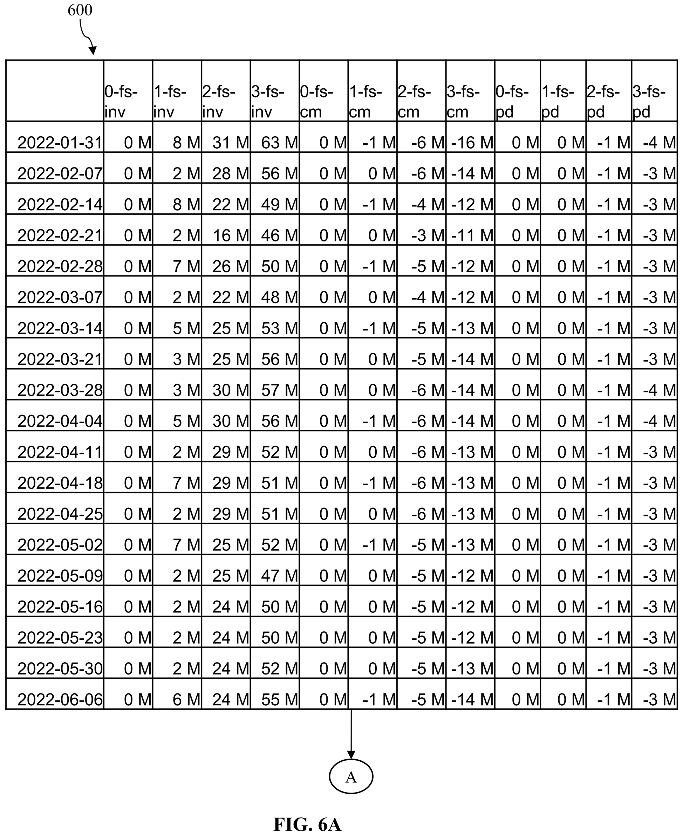

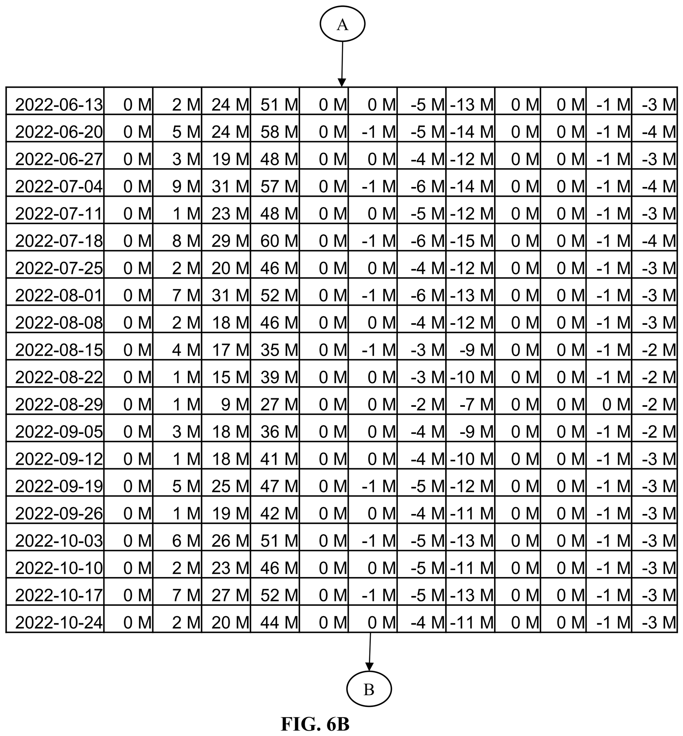

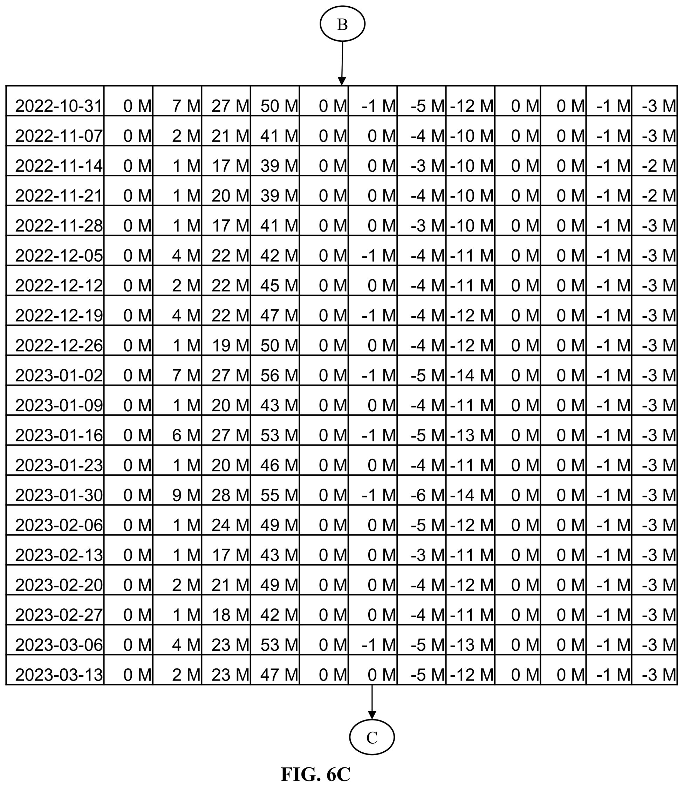

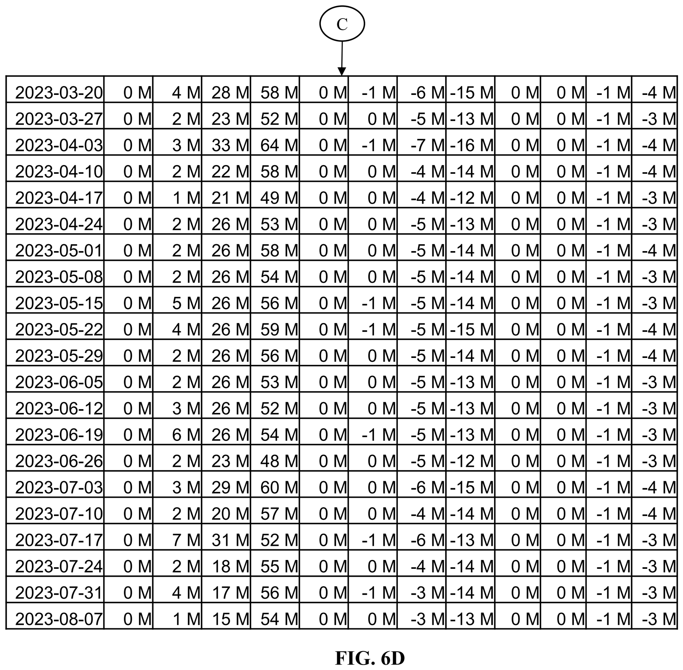

**FIG. 6A-6D** is an exemplary tabular view 600 depicting generation of the one or more features using the second input AI model (e.g., the future sales/expense model), in accordance with another embodiment of the present disclosure. At least one of: the expected creation and clearance of the one or more invoices, the one or more credit memos, and the pre-deductions, are determined across the one or more horizons, using the second input AI model, to generate forecasted future sales/expense. In an embodiment, the second input AI model may be the future sales/expense model. The feature "invoice" for horizon "i" is computed based on the past in-period generation and the clearance of the one or more invoices, and forecast date. The feature "creditmemo" for horizon "i" is computed based on the past in-period generation and the clearance of the one or more credit memos, and the forecast date. The feature "pre-deductions" for horizon "i" is computed based on the past in-period generation and the clearance of the pre-deductions, and the forecast date. In **FIG. 6A-6D,** the circular symbols with "A, B, and C" written inside are being used as an off-page connector. These are used for indicating that **FIG. 6A** continues in the subsequent pages as **FIG. 6B-6D.**

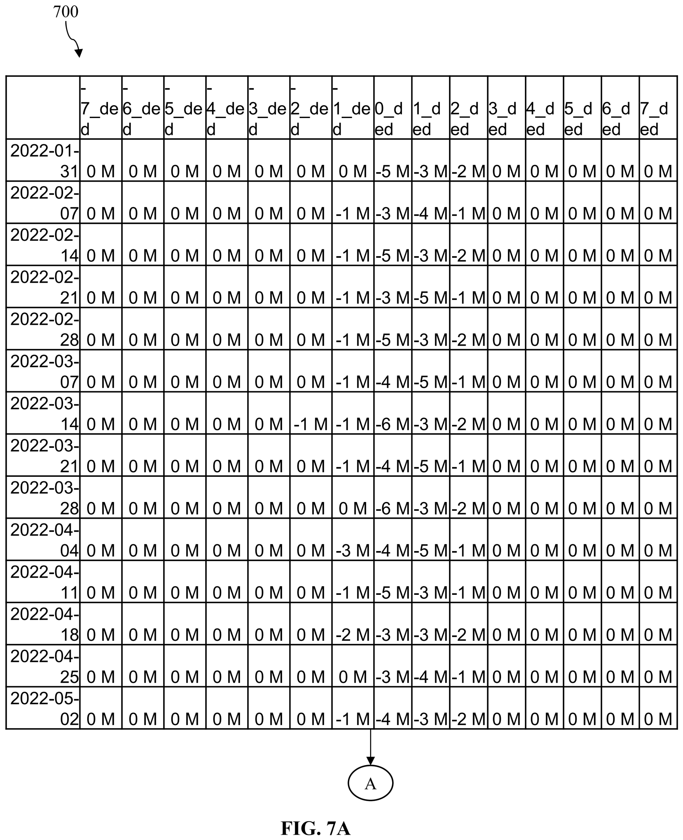

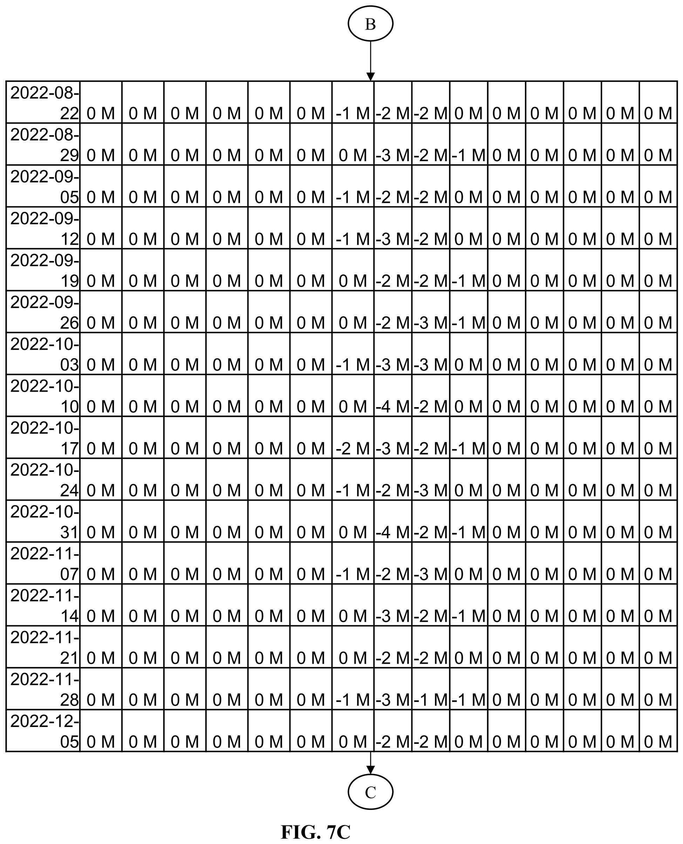

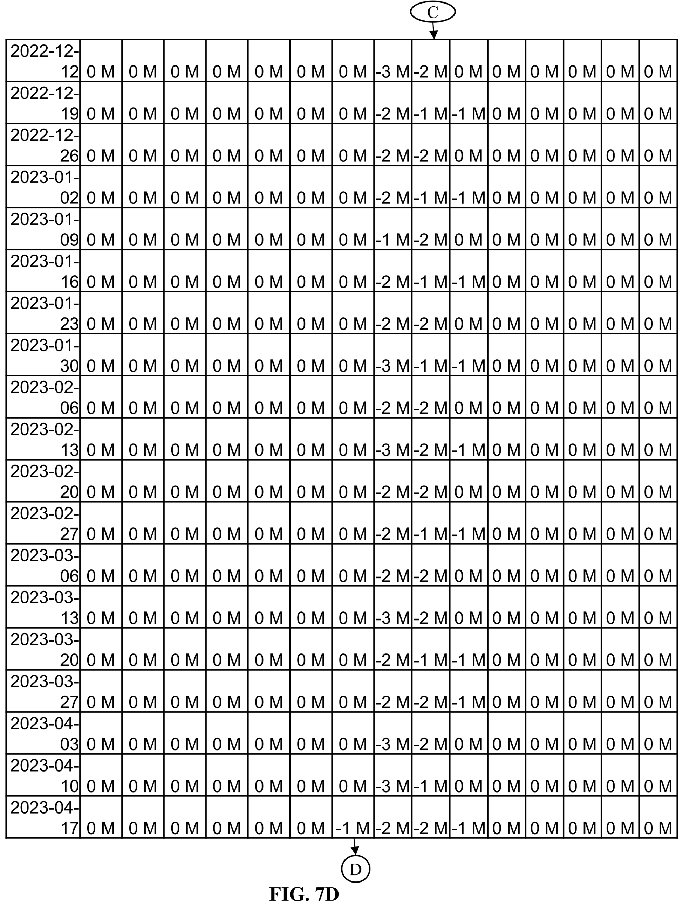

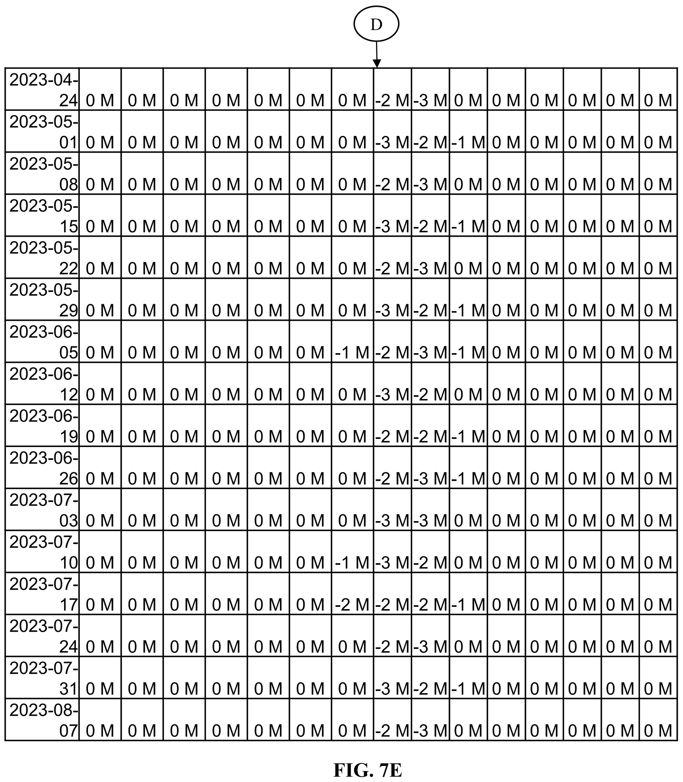

**FIG. 7A-7E** is an exemplary tabular view 700 depicting generation of the one or more features using the third input AI model (e.g., the deductions claim rate model), in accordance with another embodiment of the present disclosure. The deduction to be claimed is determined for the $\pm n$ number of weeks from the week of the forecast run, using the third input AI model. In an embodiment, the third input AI model may be the deductions claim rate model. The value associated with the $\pm n$ number of weeks depends on the week cutoff from the first input AI model. The feature determining subsystem 214 is configured to compute the deductions claim rate using at least one of: the one or more closed accounts receivable (AR) invoices, and the one or more actuals from bank statements monthly, based on the optimum accuracy in historical time period, using the third input AI model, based on the one or more algorithms (e.g., (a) Median Quarterly Deductions % over the last 3-5 years, (b) Median annual Deduction % over the last 2-4 years, and (c) Average Deduction % of Last 12 Months), based on the highest accuracy in the past 9 months. The deductions claim rate for month is computed as follows.

$$\text{Monthly Ded \%} = (\text{Total Invoices Cleared} - \text{Actuals From Bank Statement}) / (\text{Total Invoices Cleared}) \qquad \text{Eqn (2)}$$

The forecasted deductions claim rate is computed as follows.

$$\text{Forecasted Ded \%} = \text{HPT}_{9 \text{ Months}}(\text{Median}_{\text{Quarterly}}, \text{Median }_{\text{Quarterly}}, \text{Mean}_{12 \text{ Month}})..\text{Eqn (3)}$$

The feature week (i) is computed as follows.

$$\text{feature }_{\text{Week i}} = \text{forecasted ded \%} * \text{expected amount }_{\text{Week/horizon I}} \qquad \dots \text{Eqn (4)}$$

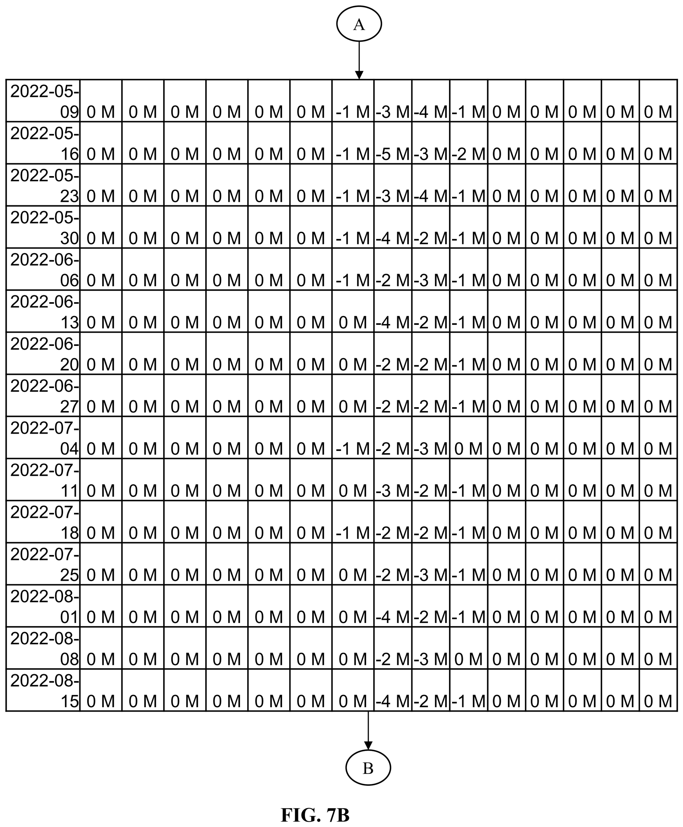

In **FIG. 7A-7E,** the circular symbols with "A, B, C and D" written inside are being used as an off-page connector. These are used for indicating that **FIG. 7A** continues in the subsequent pages as **FIG. 7B-7E.**

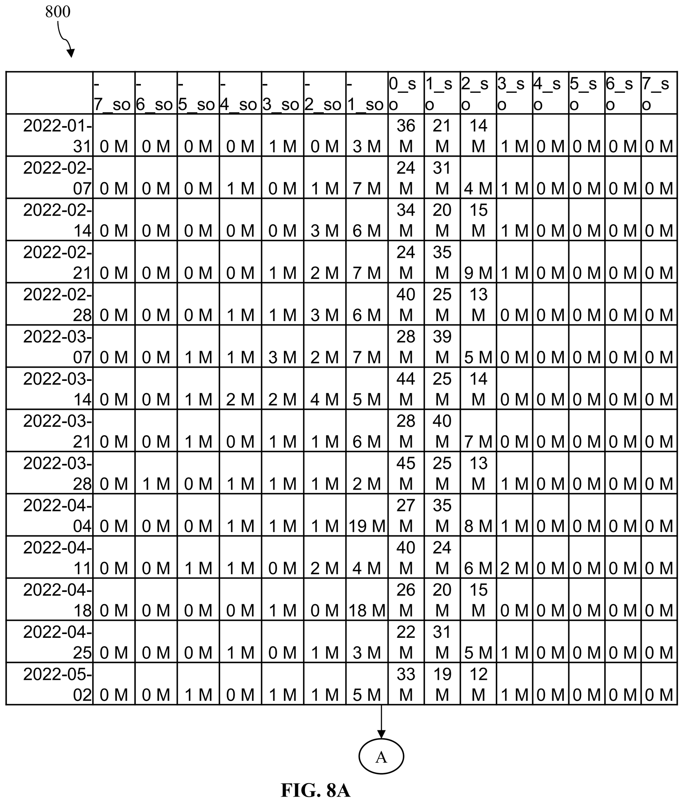

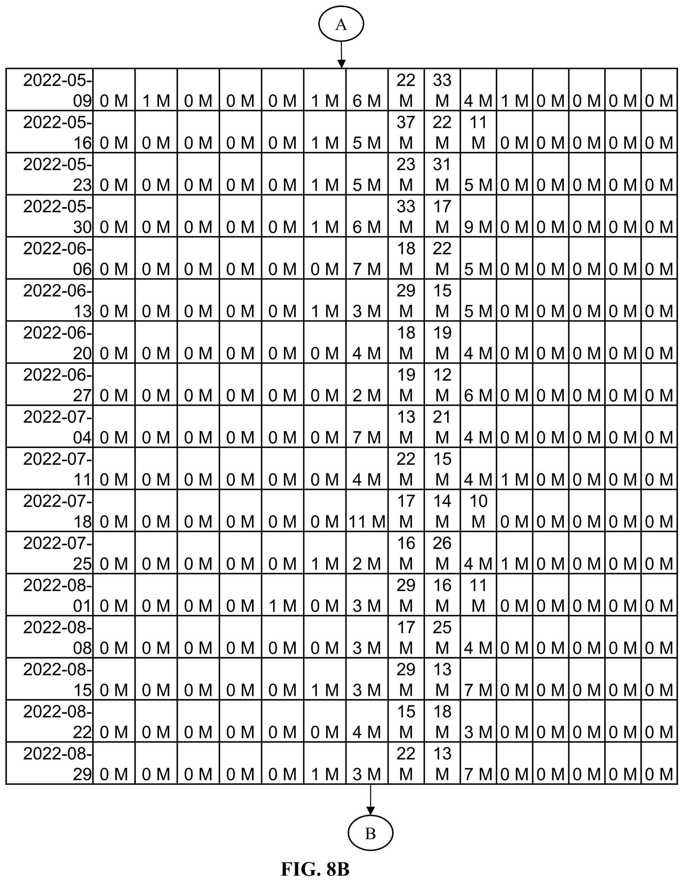

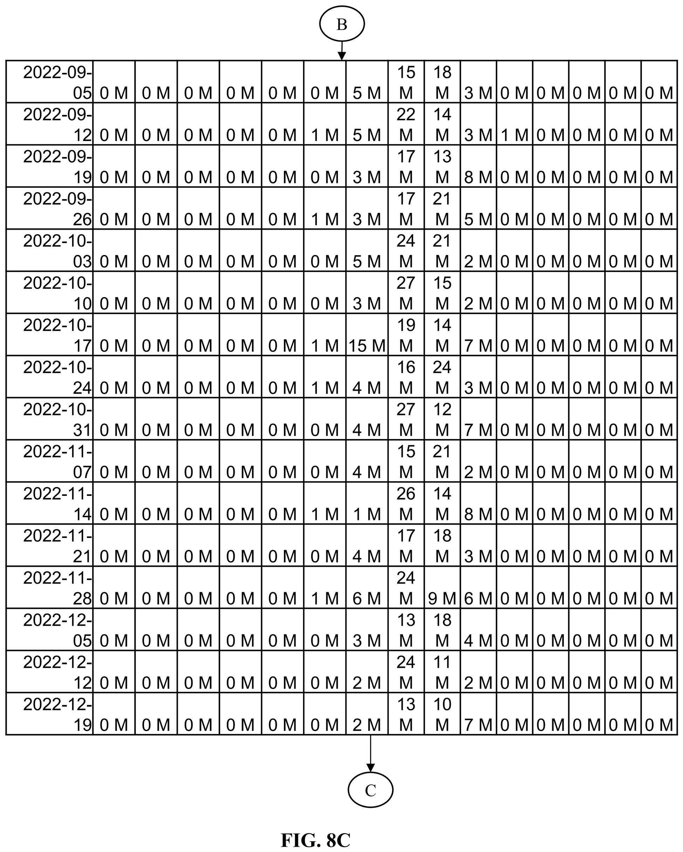

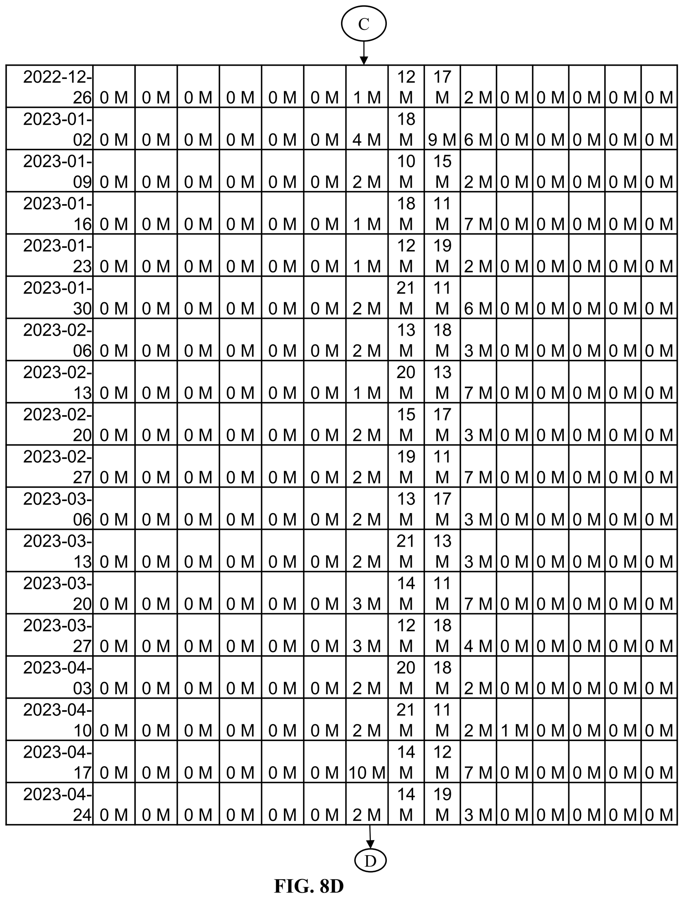

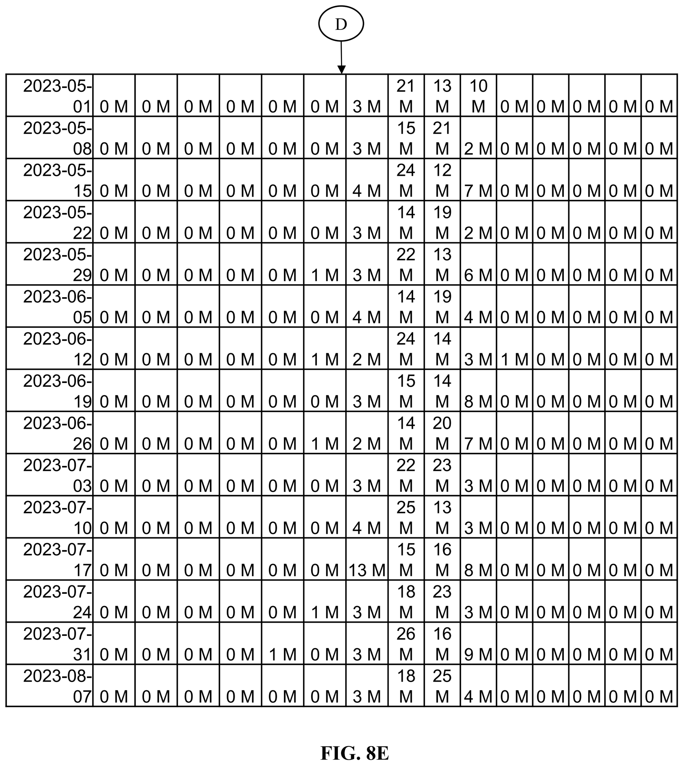

**FIG. 8A-8E** is an exemplary tabular view 800 depicting generation of the one or more features using the fourth input AI model (e.g., the sales order (SO) - purchase order (PO) model), in accordance with another embodiment of the present disclosure. In **FIG. 8A-8E,** the circular symbols with "A, B, C and D" written inside are being used as an off-page connector. These are used for indicating that **FIG. 8A** continues in the subsequent pages as **FIG. 8B-8E.**

The expected payment against at least one of: the one or more sales orders and the one or more purchase orders, based on the average time taken from posting of at least one of: the one or more sales orders and the one or more purchase orders, to clearance of the one or more invoices linked to the at least one of: the one or more sales orders and the one or more purchase orders, on the user/customer level, using the fourth input AI model. In an embodiment, the fourth input AI model may be the sales order (SO)/purchase order (PO) model. The expected amount from at least one of: the one or more sales orders and the one or more purchase orders, is computed across $\pm n$ number of weeks from the week of forecast run, based on the determined payment date of the one or more invoices, using the fourth input AI model. The value of the $\pm n$ weeks depends on the distribution of the actual clearance of at least one of: the one or more sales orders and the one or more purchase orders across one or more weeks. The feature week (i) is computed as follows.

$$\text{feature w}_{\text{eek}} \text{ i} = \text{expected purchase or sales order payment (week start (i), week end (i))} \qquad \text{Eqn (5)}$$

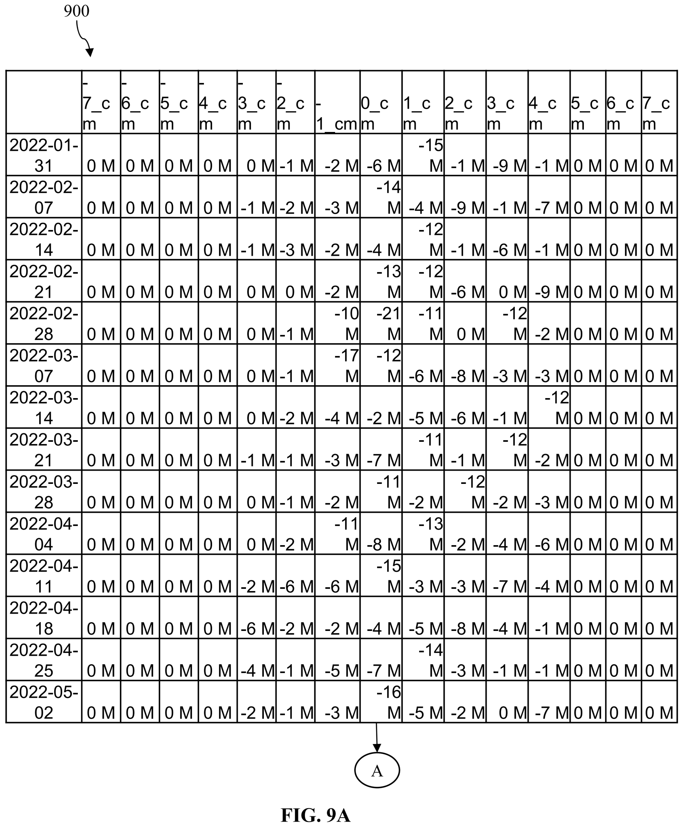

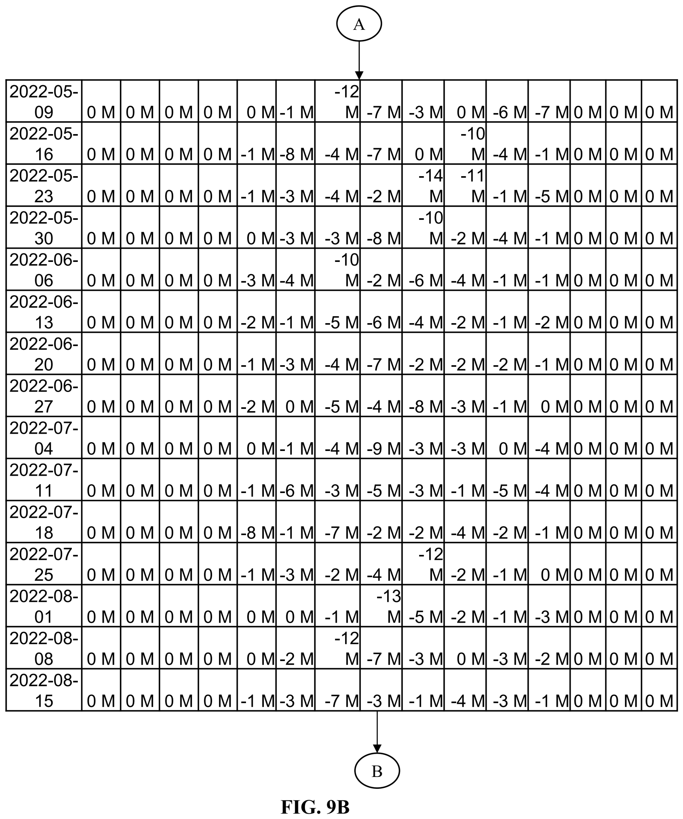

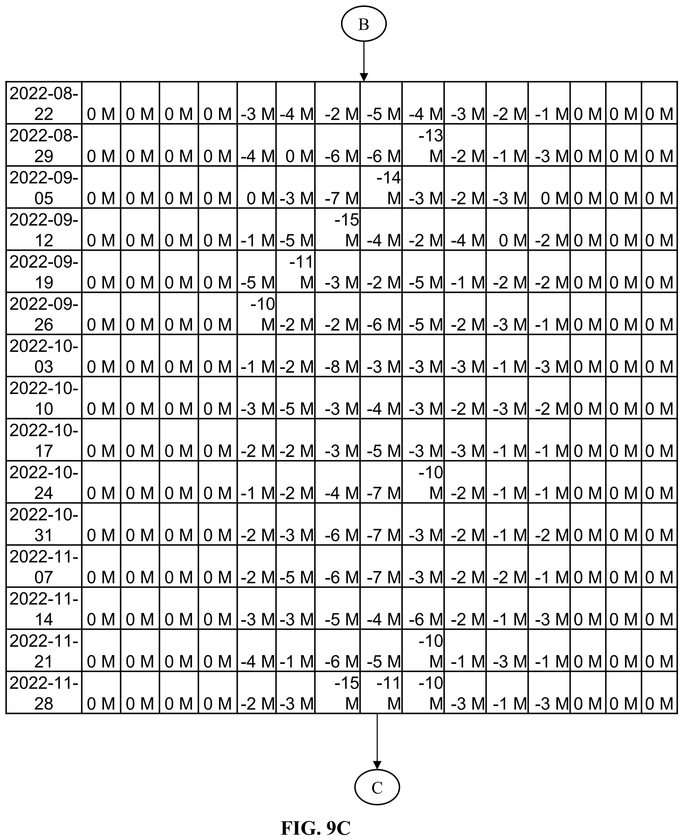

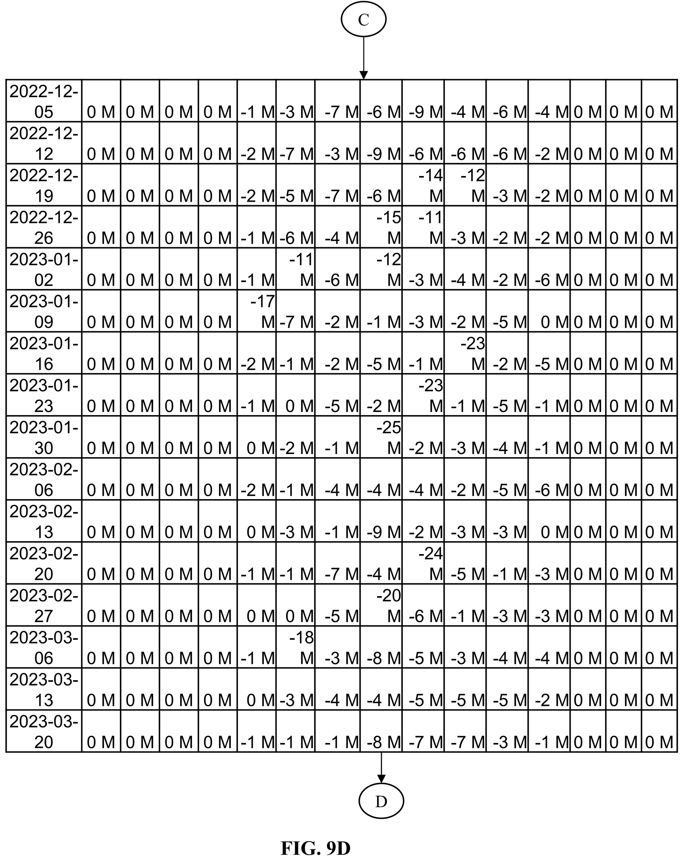

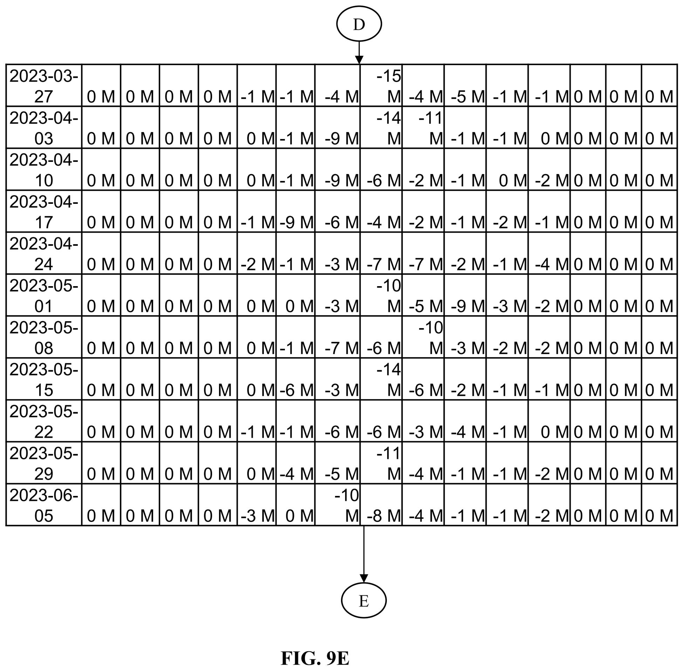

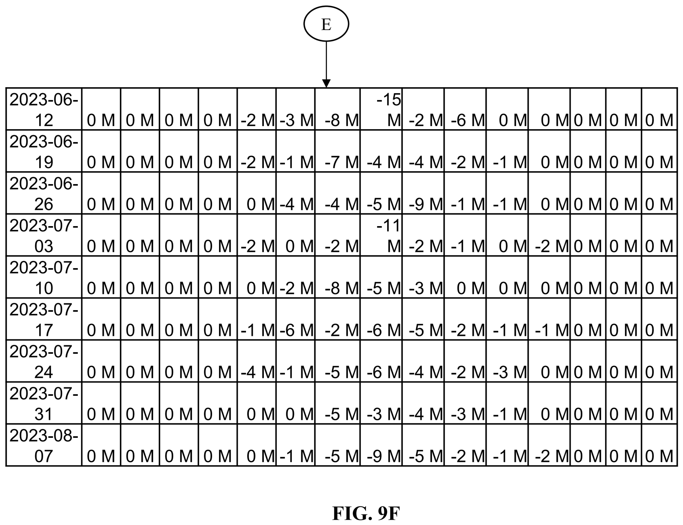

**FIG. 9A-9F** is an exemplary tabular view 900 depicting generation of the one or more features using the fifth input AI model (e.g., the credit application model), in accordance with another embodiment of the present disclosure. In **FIG. 9A-9F,** the circular symbols with "A, B, C, D and E" written inside are being used as an off-page connector. These are used for indicating that **FIG. 9A** continues in the subsequent pages as **FIG. 9B-9F.**

The expected credit application is computed against one or more open invoices at a time of the forecast based on at least one of: one or more historical credit application patterns and the claim rate of the one or more users, using the fifth input AI model. In an embodiment, the fifth input AI model may be the credit application model. In an embodiment, the fifth input AI model of the plurality of input AI models is configured to determine the clearing date of open credits at a time of forecast based on historical payment behavior. The credit-application may be divided across ±n weeks from the week of forecast run. The value ±n weeks depends on the week cutoff from the first input AI model (e.g., the invoice payment date model). The feature week (i) is computed as follows.

$$\text{feature}_{\text{Week i}} = \text{expected credit-application (week start (i), week end (i))}....\text{Eqn (6)}$$

In an embodiment, the fifth input AI model of the plurality of input AI models is configured to determine user level historical claim rate given as below.

$$\text{Claim rate} = \text{credit applied / total allocated credit} \qquad ....\text{Eqn (7)}$$

An expected claim percentage is computed as follows.

$$\text{Expected Claim \%} = \text{HPT}_{\text{9Months}}(\text{Median}_{\text{Quarterly}}, \text{Median}_{\text{Quarterly}}, \text{Mean}_{\text{12 Month}})..\text{Eqn (8)}$$

An expected credit claim is computed as follows.

$$\text{Expected Credit Claim} = \text{Expected Claim \%} * \text{total allocated credit} \qquad ....\text{Eqn (9)}$$

The expected credit claim is prorated across the one or more weeks based on expected invoice payment from the first input AI model (e.g., the invoice payment date model). The feature week (i) is computed as follows.

feature $w_{\text{eek i}}$ = expected credit-application (week start (i), week end (i), expected credit claim, expected invoice payment) $\qquad$ Eqn (10)

In an aspect, the cash flow for a predetermined horizon is determined based on at least one of: one or more historical trends and seasonality with time series data, using the sixth input AI model. In an embodiment, the sixth input AI model may be the bank model.

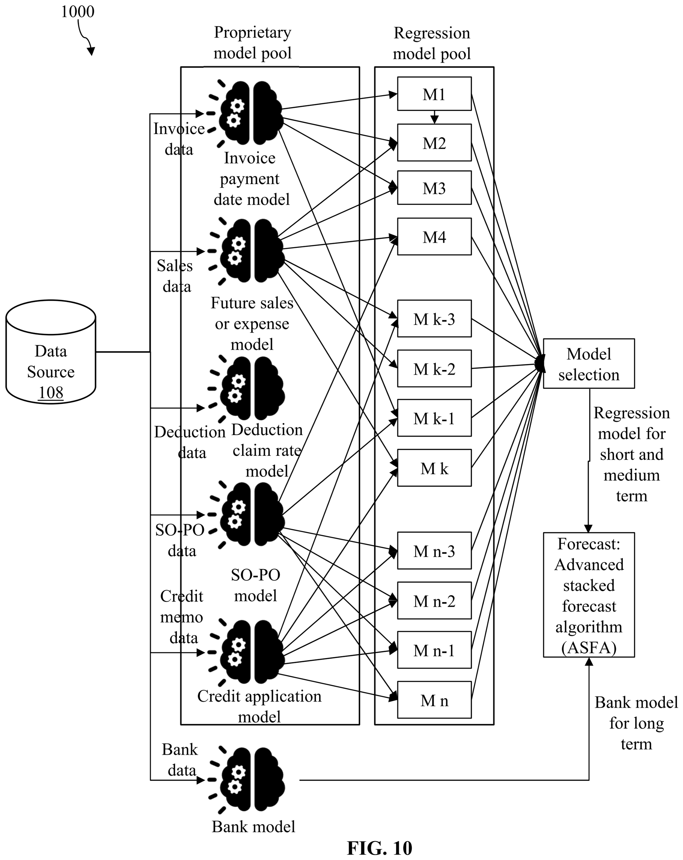

**FIG. 10** is an overall architecture 1000 of the stacked AI model (alternatively referred as to advanced stacked forecasting algorithm i.e., ASFA), in accordance with another embodiment of the present disclosure. The one or more forecasts are generated for each horizon for the pre-determined time interval (e.g., last 13 weeks), using the stacked AI model including the one or more forecasting models. Each feature combination of the one or more feature combinations is analyzed as the individual input for each forecasting model of the one or more forecasting models for generating the one or more forecasts for each horizon. In an embodiment, the stacked AI model may include at least two different model types including the linear regression model for short and medium term (up to 0-41 days), and the bank model for long term (up to 42-365 days).

As described in **FIG. 2,** the one or more forecasting models of the stacked AI model are trained incrementally on each feature combination of the one or more feature combinations for each horizon (e.g., horizon 0 : 0-6 days, horizon 1 : 0-13 days, .... horizon 5 : 0-41 days) of the one or more horizons with or without the intercepts, using the incremental learning technique. In an example, for horizon 0 (0-6 days), the first linear regression model is trained with -n_inv; the second linear regression model is trained with -n_inv, -(n-1)_inv; and so on such that $k^{th}$ linear regression model is trained with (n-1)_inv, n_inv; the $k+1^{th}$ linear regression model is trained with n_inv; the $k+2^{th}$ linear regression model is trained with -n_inv, 0_fs_inv and continuously so forth.

In another example, for horizon 1 (0-13 days), the first linear regression model is trained with -n_inv; the first linear regression model is trained with -n_inv, -(n-1)_inv; and so on, such that the $k^{th}$ linear regression model is trained with (n-1)_inv, n_inv; the $k+1^{th}$ linear regression model is trained with n_inv; the $k+2^{th}$ linear regression model is trained with - n_inv, 1_fs_inv, and continuously so forth. In yet another example, for horizon 5 (0-41 days), the first linear regression model is trained with -n_inv; the first linear regression model is trained with -n_inv, -(n-1)_inv; and so on. Such that $k^{th}$ linear regression model is trained with (n-1)_inv, n_inv; the $k+1^{th}$ linear regression model is trained with n_inv; the k+2th linear regression model is trained with -n_inv, 2_fs_inv and continuously so forth.

In an embodiment, the sixth input AI model (e.g., the Bank Model) for long term (up to 42-365 days) is generated using the automated timeseries generation model.

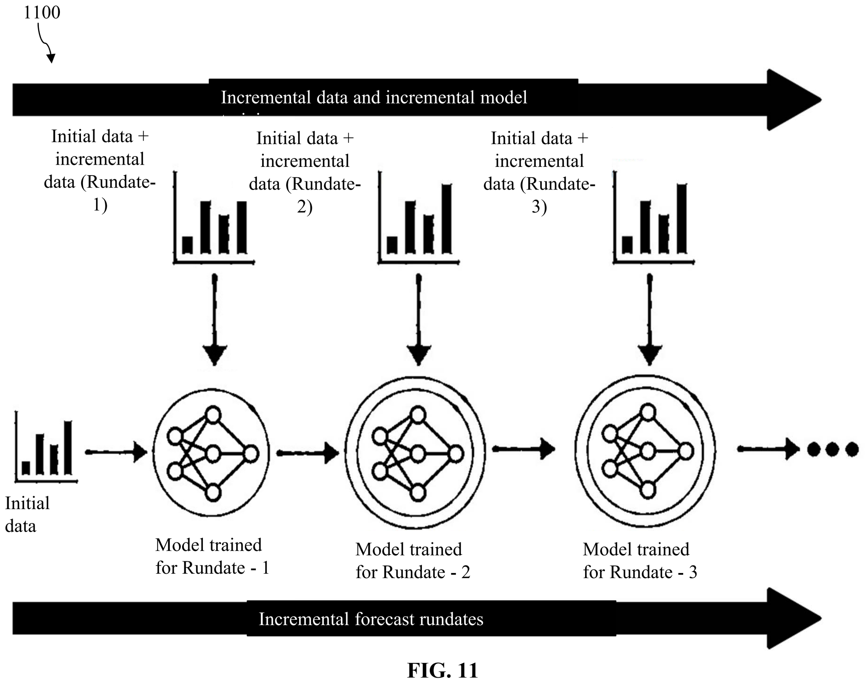

**FIG. 11** is a training architecture 1100 depicting a training process of one or more forecasting models of the stacked AI model, in accordance with another embodiment of the present disclosure. As described in **FIG. 2,** The incremental learning technique is configured to adapt the one or more forecasting models to learn the knowledge of the stacked AI model in addition to the previously acquired information for generating the one or more feature combinations. The Incremental learning technique may provide efficient use of resources, real-time adaptation, efficient learning, learning from non-stationary data. For each incremental forecast week, the linear regression model is fitted on an additional data point. For example, the training data for forecast for week 1 is considered as training start date to (forecast week 1) - 1 week - horizon. The training data for forecast for week 2 is considered as training start date to (forecast week 2) - 1 week - horizon.

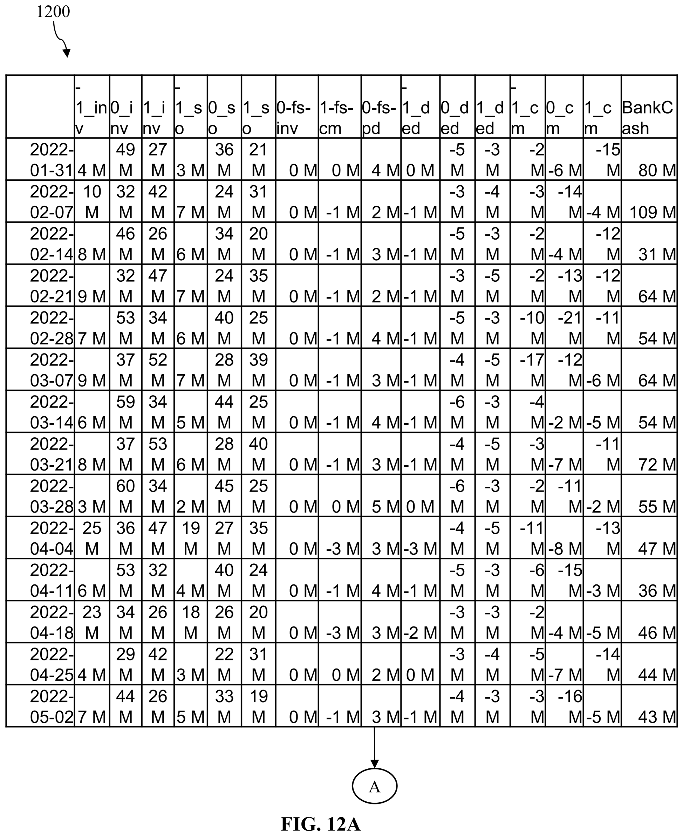

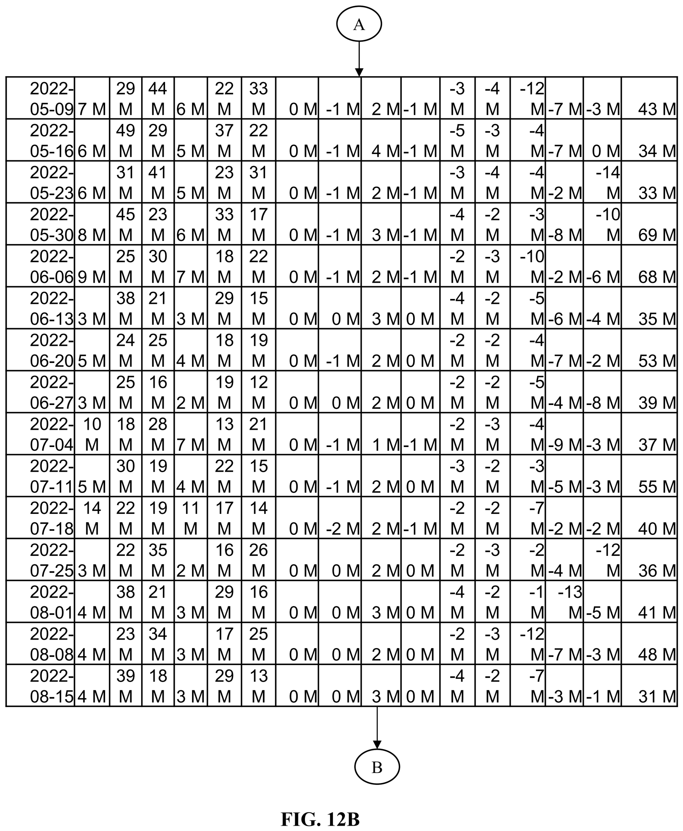

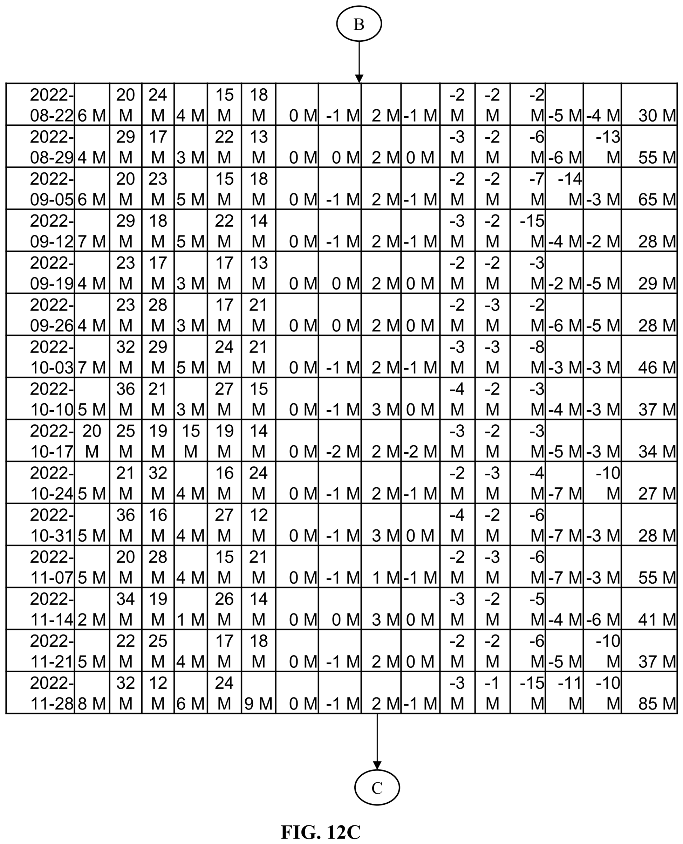

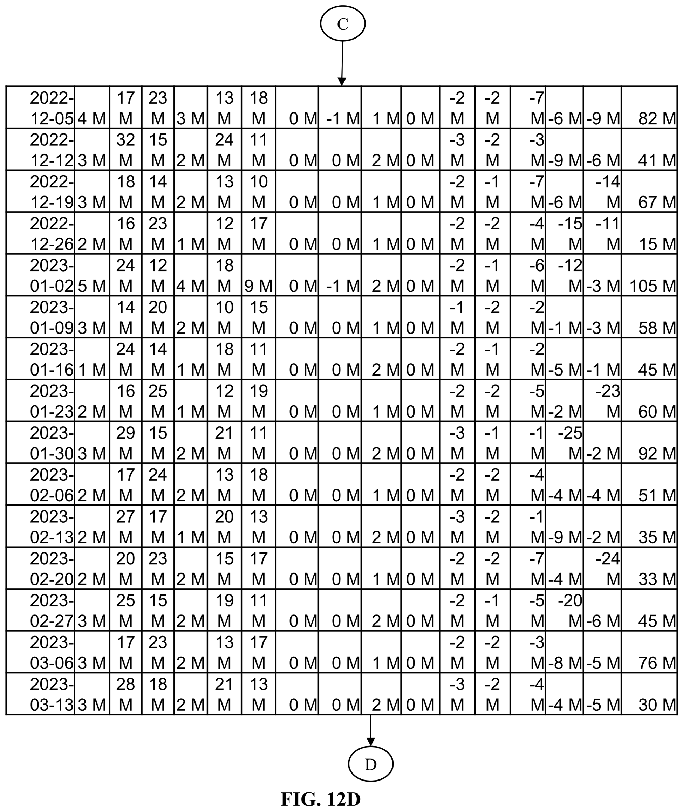

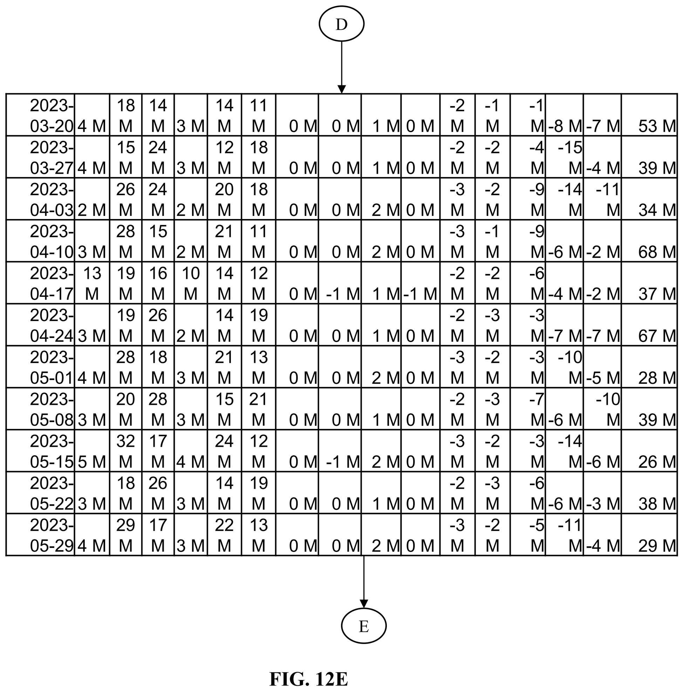

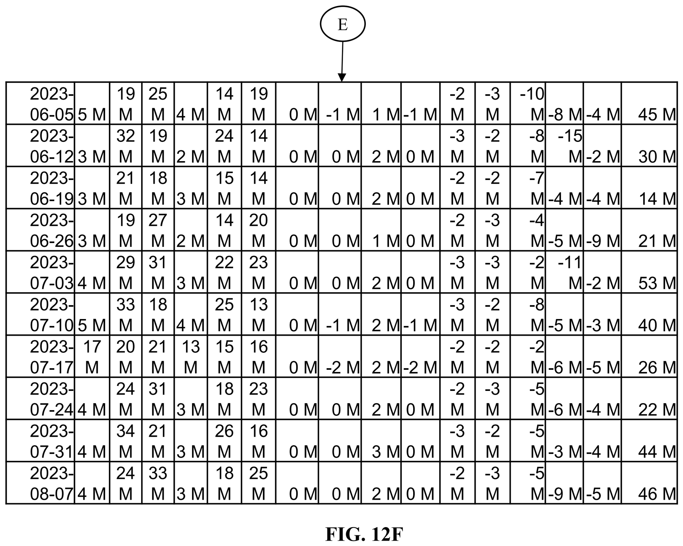

**FIG. 12A-12F** is an exemplary tabular view 1200 depicting generation of one or more forecasts for each horizon for a pre-determined time interval, using the stacked AI model, in accordance with another embodiment of the present disclosure. The exemplary tabular view 1200 depicts sample data for forecasting for each horizon for the pre-determined time interval. In **FIG. 12A-12F,** the circular symbols with "A, B, C, D and E" written inside are being used as an off-page connector. These are used for indicating that **FIG. 12A** continues in the subsequent pages as **FIG. 12B-12F.**

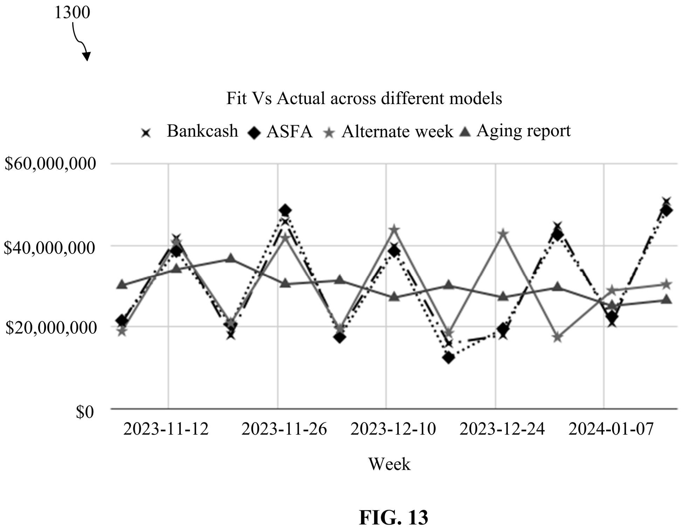

**FIG. 13** is a graphical representation 1300 depicting a performance of the stacked AI model across different models for one or more horizons, in accordance with another embodiment of the present disclosure. The performance of the final AI model is evaluated using the weighted average accuracy across for 13 forecast runs across the one or more horizons. The weighted accuracy is computed by subtracting an absolute percentage error value from one. In an embodiment, the Absolute Percentage Error is computed over the forecasted value as the user actionability may be solely based on the forecast. The comparative study of model performance across the plurality of input AI models for Horizon 0 (0-6 Days) is shown in **FIG. 13.**

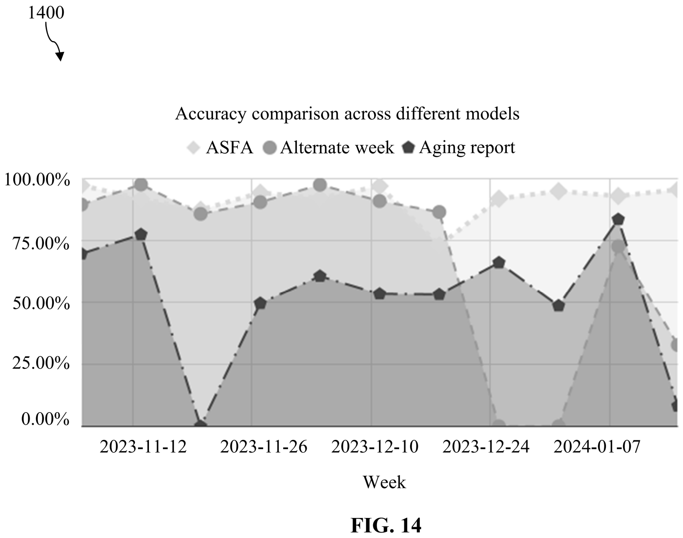

**FIG. 14** is a graphical representation 1400 depicting an accuracy comparison of the present stacked AI model (i.e., ASFA) with conventional models for one or more horizons, in accordance with another embodiment of the present disclosure. A comparative forecasting accuracy analysis is shown in below table, along with 75th and 90th Percentile Error.

| Model Performance (Horizon 0) | ASFA | Alternate Week | Aging Report |
|---|---|---|---|
| Horizon 0 Accuracy | 93% | 64% | 49% |
| 75% Error ($) | 3 M | 14 M | 15 M |
| 90% Error ($) | 3 M | 25 M | 16 M |

**FIG. 13** and **FIG. 14** highlights that the accuracy of the stacked AI model is remarkably high, and its forecast aligns closely with actual bank cash figures. In contrast, conventional techniques that rely on alternative week analysis and aging reports demonstrate comparatively lower performance accuracy.

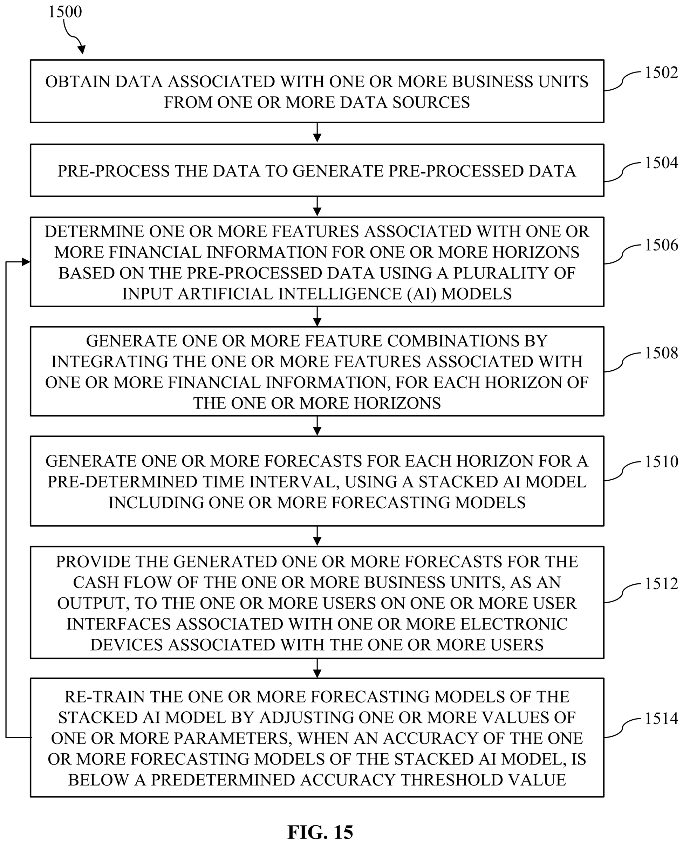

**FIG. 15** is a flow chart illustrating a machine-learning based (ML-based) method 1500 for forecasting the cash flow for the one or more business units, in accordance with an embodiment of the present disclosure.

At step 1502, the data associated with the one or more business units are obtained from the one or more data sources 108.

At step 1504, the data are pre-processed to generate the pre-processed data.

At step 1506, the one or more features associated with the one or more financial information are determined for the one or more horizons based on the pre-processed data using the plurality of input artificial intelligence (AI) models.

At step 1508, the one or more feature combinations are generated by integrating the one or more features associated with the one or more financial information, for each horizon of the one or more horizons.

At step 1510, the one or more forecasts are generated for each horizon for the pre-determined time interval, using the stacked AI model including the one or more forecasting models. In an embodiment, each feature combination of the one or more feature combinations is analyzed as the individual input for each forecasting model of the one or more forecasting models for generating the one or more forecasts for each horizon.

At step 1512, the generated one or more forecasts for the cash flow of the one or more business units, are provided as the output, to the one or more users on the one or more user interfaces associated with the one or more electronic devices 102 associated with the one or more users.

At step 1514, the one or more forecasting models of the stacked AI model are trained over the plurality of time intervals by adjusting the one or more values of the one or more parameters, when the accuracy of the one or more forecasting models of the stacked AI model, is below the predetermined accuracy threshold value.

The present invention has following advantages. The primary purpose of the present invention with the ML-based system 104 is to forecast the cash flow for the one or more business units. The present invention with the ML-based system 104 is configured to generate an accurate forecast, providing a lower 75th and 90th percentile error, which results in a narrower confidence interval band, allowing to make financial decisions with reduced interest-related risks. The forecasted cash across multiple cash flow categories may provide an estimate of the net-cash of the organization. The present invention with the ML-based system 104 is configured to assist the organization to invest, borrow, repay-debt and back up other financial decisions.

The present invention with the ML-based system 104 is accounted for multi-dimensional factors including at least one of: (a) trend, seasonality and cyclicity of business, (b) deduction claims pattern, (c) upcoming sales/expenses growth, (d) invoices awaiting settlements, (e) staged purchase and sales orders, (f) customer payment behavior, and (g) handling non-repeatable one-off events.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer-readable medium can be any apparatus that can comprise, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid-state memory, magnetic tape, a removable computer diskette, a random-access memory (RAM), a read-only memory (ROM), a rigid magnetic disk and an optical disk. Current examples of optical disks include compact disk-read only memory (CD-ROM), compact disk-read/write (CD-R/W) and DVD.

Input/output (I/O) devices (including but not limited to keyboards, displays, pointing devices, etc.) can be coupled to the ML-based system 104 either directly or through intervening I/O controllers. Network adapters may also be coupled to the ML-based system 104 to enable the data processing system to become coupled to other data processing systems or remote printers or storage devices through intervening private or public networks. Modems, cable modem and Ethernet cards are just a few of the currently available types of network adapters.

A representative hardware environment for practicing the embodiments may include a hardware configuration of an information handling/ML-based system 104 in accordance with the embodiments herein. The ML-based system 104 herein comprises at least one processor or central processing unit (CPU). The CPUs are interconnected via the system bus 208 to various devices including at least one of: a random-access memory (RAM), read-only memory (ROM), and an input/output (I/O) adapter. The I/O adapter can connect to peripheral devices, including at least one of: disk units and tape drives, or other program storage devices that are readable by the ML-based system 104. The ML-based system 104 can read the inventive instructions on the program storage devices and follow these instructions to execute the methodology of the embodiments herein.

The ML-based system 104 further includes a user interface adapter that connects a keyboard, mouse, speaker, microphone, and/or other user interface devices including a touch screen device (not shown) to the bus to gather user input. Additionally, a communication adapter connects the bus to a data processing network, and a display adapter connects the bus to a display device which may be embodied as an output device including at least one of: a monitor, printer, or transmitter, for example.

A description of an embodiment with several components in communication with each other does not imply that all such components are required. On the contrary, a variety of optional components are described to illustrate the wide variety of possible embodiments of the invention. When a single device or article is described herein, it will be apparent that more than one device/article (whether or not they cooperate) may be used in place of a single device/article. Similarly, where more than one device or article is described herein (whether or not they cooperate), it will be apparent that a single device/article may be used in place of the more than one device or article, or a different number of devices/articles may be used instead of the shown number of devices or programs. The functionality and/or the features of a device may be alternatively embodied by one or more other devices which are not explicitly described as having such functionality/-features. Thus, other embodiments of the invention need not include the device itself.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open-ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that are issued on an application based here on. Accordingly, the embodiments of the present invention are intended to be illustrative, but not limiting, of the scope of the invention, which is set forth in the following claims.

**Claims**

1. A machine-learning based (ML-based) method for forecasting cash flow, the ML-based method comprising:

   obtaining, by one or more hardware processors, data associated with one or more business units from one or more data sources;
   pre-processing, by the one or more hardware processors, the data to generate pre-processed data;
   determining, by the one or more hardware processors, one or more features associated with one or more financial information for one or more horizons based on the pre-processed data using a plurality of input artificial intelligence (AI) models;
   generating, by the one or more hardware processors, one or more feature combinations by integrating the one or more features associated with the one or more financial information, for each horizon of the one or more horizons;
   generating, by the one or more hardware processors, one or more forecasts for each horizon for a pre-determined time interval, using a stacked AI model comprising one or more forecasting models, wherein each feature combination of the one or more feature combinations is analyzed as an individual input for each forecasting model of the one or more forecasting models for generating the one or more forecasts for each horizon; and
   providing, by the one or more hardware processors, the generated one or more forecasts for the cash flow of the one or more business units, as an output, to the one or more users on one or more user interfaces associated with one or more electronic devices associated with the one or more users.

2. The ML-based method of claim 1, wherein pre-processing the data comprises standardizing, by the one or more hardware processors, the data by transforming the data into an organized format being adaptable for performing an intelligent AI-inference process,
   wherein standardizing the data comprises at least one of: standardizing one or more column names, converting date and numeric formats across one or more dataset fields, handling null records, standardizing one or more financial transactions by currency conversion, and removing one or more intra-company financial transactions in the one or more financial transactions.

3. The ML-based method of claim 2, wherein pre-processing the data further comprises performing, by the one or more hardware processors, the intelligent AI-inference process for adapting the standardized data for ingestion by the plurality of input AI models, wherein performing the intelligent AI-inference process comprises at least one of:

   grouping, by the one or more hardware processors, one or more information associated with equivalent entities of the one or more business units;
   generating, by the one or more hardware processors, one or more synthetic invoices with unpaid open amount upon identifying one or more partially paid invoices;
   aggregating, by the one or more hardware processors, one or more invoices with information associated with in-period invoice creation and clearance, on week-level;
   updating, by the one or more hardware processors, a clearing date of the one or more invoices with posting of payments; and
   automatically detecting, by the one or more hardware processors, the data associated with at least one of: the one or more invoices, one or more payments, one or more deductions, and one or more credit memos, for ingestion by the plurality of input AI models.

4. The ML-based method of claim 3, wherein pre-processing the data further comprises performing, by the one or more hardware processors, a noise removal process for the data corresponding to each input AI model of the plurality of input AI models, wherein performing the noise removal process comprises at least one of:

   filtering, by the one or more hardware processors, the data associated with the one or more invoices posted and cleared within a same week, across training data to restrict adding noise to one or more user payment patterns;

filtering, by the one or more hardware processors, the data associated with at least one of: one or more manually adjusted invoices, one or more invoice reversals with at least one of: a credit and debit note, and one or more prepaid invoices;

filtering, by the one or more hardware processors, the data associated with horizons with abnormal deduction claim rates in history during computing projected deduction claim rate for a forecast period;

filtering, by the one or more hardware processors, the data associated with at least one of: one or more prepaid sales orders and one or more purchase orders, along with clearance of one or more corresponding invoices occurring in a week; and

filtering, by the one or more hardware processors, the data associated with at least one of: one or more credits that are blocked and the one or more credits that are posted and cleared within a same week, across the training data to restrict adding the noise to one or more user credit claim patterns.

5. The ML-based method of claim 1, wherein determining the one or more features associated with the one or more financial information using the plurality of input AI models, comprises:

determining, by the one or more hardware processors, a payment date of one or more open invoices at a time of forecast based on one or more historical payment patterns, using a first input AI model of the plurality of input AI models; and

computing, by the one or more hardware processors, an expected amount from the one or more open invoices across n number of weeks from a week of forecast run, based on the determined payment date of the one or more invoices, using the first input AI model of the plurality of input AI models.

6. The ML-based method of claim 1, wherein determining the one or more features associated with the one or more financial information using the plurality of input AI models, further comprises determining, by the one or more hardware processors, at least one of: an expected creation and clearance of one or more invoices, one or more credit memos, and pre-deductions across the one or more horizons, using a second input AI model.

7. The ML-based method of claim 5, wherein determining the one or more features associated with the one or more financial information using the plurality of input AI models, further comprises:

determining, by the one or more hardware processors, a deduction to be claimed for the n number of weeks from the week of the forecast run, using a third input AI model, wherein a value associated with the n number of weeks depends on a week cutoff from the first input AI model; and

computing, by the one or more hardware processors, a deduction claim rate using at least one of: one or more closed accounts receivable (AR) invoices, and one or more actuals from bank statements, based on an optimum accuracy in historical time period, using the third input AI model.

8. The ML-based method of claim 1, wherein determining the one or more features associated with the one or more financial information using the plurality of input AI models, further comprises:

determining, by the one or more hardware processors, an expected payment against at least one of: one or more sales orders and one or more purchase orders, based on an average time taken from posting of at least one of: the one or more sales orders and the one or more purchase orders, to clearance of the one or more invoices linked to the at least one of: the one or more sales orders and the one or more purchase orders, on a user level, using a fourth input AI model; and

computing, by the one or more hardware processors, an expected amount from at least one of: the one or more sales orders and the one or more purchase orders, across n number of weeks from a week of forecast run, based on the determined payment date of the one or more invoices, using the fourth input AI model, wherein a value of the n number of weeks depends on a distribution of an actual clearance of at least one of: the one or more sales orders and the one or more purchase orders, across one or more weeks.

9. The ML-based method of claim 1, wherein determining the one or more features associated with the one or more financial information using the plurality of input AI models, further comprises determining, by the one or more hardware processors, an expected credit application against one or more open invoices at a time of the forecast based on at least one of: one or more historical credit application patterns and a claim rate of the one or more users, using a fifth input AI model.

10. The ML-based method of claim 1, wherein determining the one or more features associated with the one or more financial information using the plurality of input AI models, further comprises determining, by the one or more hardware processors, cash flow for a predetermined horizon based on at least one of: one or more historical trends and seasonality with time series data, using a sixth input AI model.

11. The ML-based method of claim 1, further comprising training, by the one or more hardware processors, the one or more forecasting models of the stacked AI model incrementally on each feature combination of the one or more feature combinations for each horizon of the one or more horizons, using an incremental learning technique, wherein the incremental learning technique is configured to adapt the one or more forecasting models to learn knowledge of the stacked AI model in addition to previously acquired information for generating the one or more feature combinations.

12. The ML-based method of claim 1, further comprising:

assessing, by the one or more hardware processors, an accuracy of the one or more forecasting models of the stacked AI model in generating the one or more forecasts for each horizon for a pre-determined time interval, wherein assessing the accuracy of the stacked AI model comprises:

generating, by the one or more hardware processors, the one or more forecasts for each horizon for the pre-determined time interval;
ranking, by the one or more hardware processors, the one or more forecasts based on one or more parameters comprising at least one of: weighted accuracy, R2-score, a first absolute error percentile for the pre-determined time interval, and a second absolute error percentile for the pre-determined time interval; and
assessing, by the one or more hardware processors, the accuracy of the stacked AI model based on the ranking of the one or more forecasts; and

selecting, by the one or more hardware processors, an optimized stacked AI model for generation of the one or more forecasts based on the one or more parameters and the accuracy of the one or more forecasting models.

13. The ML-based method of claim 1, further comprising:

monitoring, by the one or more hardware processors, performance of the stacked AI model for a time duration;
determining, by the one or more hardware processors, whether the performance of the stacked AI model with the data, is below a threshold value;
fine-tuning, by the one or more hardware processors, the stacked AI model with at least one of: a plurality of parameters, one or more optimized features and horizon combinations; and
evaluating, by the one or more hardware processors, the performance of the fine-tuned stacked AI model using a weighted average accuracy across the one or more forecasts for one or more horizons.

14. A machine learning based (ML-based) system for forecasting cash flow, the ML-based system comprising:

one or more hardware processors;
a memory coupled to the one or more hardware processors, wherein the memory comprises a plurality of subsystems in form of programmable instructions executable by the one or more hardware processors, and wherein the plurality of subsystems comprises:

a data obtaining subsystem configured to obtain data associated with one or more business units from one or more data sources;
a data pre-processing subsystem configured to pre-process the data to generate pre-processed data;
a feature determining subsystem configured to determine one or more features associated with one or more financial information for one or more horizons based on the pre-processed data using a plurality of input artificial intelligence (AI) models; and
a feature combination generating subsystem configured to generate one or more feature combinations by integrating the one or more features associated with the one or more financial information, for each horizon of the one or more horizons;
a forecast generating subsystem configured to generate one or more forecasts for each horizon for a pre-determined time interval, using a stacked AI model comprising one or more forecasting models, wherein each feature combination of the one or more feature combinations is analyzed as an individual input for each forecasting model of the one or more forecasting models for generating the one or more forecasts for each horizon; and

an output subsystem configured to provide the generated one or more forecasts for the cash flow of the one or more business units, as an output, to the one or more users on one or more user interfaces associated with one or more electronic devices associated with the one or more users.

15. The ML-based system of claim 14, wherein in determining the one or more features associated with the one or more financial information using the plurality of input AI models, the feature determining subsystem is configured to:

determine a payment date of one or more open invoices at a time of forecast based on one or more historical payment patterns, using a first input AI model of the plurality of input AI models;

compute an expected amount from the one or more open invoices across n number of weeks from a week of forecast run, based on the determined payment date of the one or more invoices, using the first input AI model of the plurality of input AI models;

determine at least one of: an expected creation and clearance of one or more invoices, one or more credit memos, and pre-deductions across the one or more horizons, using a second input AI model;

determine a deduction to be claimed for the n number of weeks from the week of the forecast run, using a third input AI model, wherein a value associated with the n number of weeks depends on a week cutoff from the first input AI model;

compute a deduction claim rate using at least one of: one or more closed accounts receivable (AR) invoices, and one or more actuals from bank statements, based on an optimum accuracy in historical time period, using the third input AI model;

determine an expected payment against at least one of: one or more sales orders and one or more purchase orders, based on an average time taken from posting of at least one of: the one or more sales orders and the one or more purchase orders, to clearance of the one or more invoices linked to the at least one of: the one or more sales orders and the one or more purchase orders, on a user level, using a fourth input AI model;

compute an expected amount from at least one of: the one or more sales orders and the one or more purchase orders, across n number of weeks from a week of forecast run, based on the determined payment date of the one or more invoices, using the fourth input AI model, wherein a value of the n number of weeks depends on a distribution of an actual clearance of at least one of: the one or more sales orders and the one or more purchase orders, across one or more weeks;

determine an expected credit application against one or more open invoices at a time of the forecast based on at least one of: one or more historical credit application patterns and a claim rate of the one or more users, using a fifth input AI model;

determine cash flow for a predetermined horizon based on at least one of: one or more historical trends and seasonality with time series data, using a sixth input AI model.

100

One or More
Electronic
Devices 102

One or More
Data Sources 108

Network
106

ML-Based Computing
System 104

Plurality of
Subsystems
110

**FIG. 1**

104

Memory 202

Plurality of Subsystems 110

Data Obtaining Subsystem 210

Data Pre-processing Subsystem 212

Feature Determining Subsystem 214

Feature Combination Generating Subsystem 216

Forecast Generating Subsystem 218

Output Subsystem 220

Training Subsystem 222

Accuracy Assessment Subsystem 224

Performance Monitoring Subsystem 226

Re-training Subsystem 228

System Bus 208

Storage Unit 206

Hardware Processor(s) 204

**FIG. 2**

300

**302**                            Data sources

| ERP | Bank | ← External | Internal → | P2P | Deduction claims |

**304**                           Data standardization

| Datetime conversation | Numeric conversation | Handling null records fields | Currency conversion | Intra company removal |

**306**

Intelligent AI inference

**308**                Input AI models for multiple horizons

| First input AI model | Second input AI model | Third input AI model | Fourth input AI model | Fifth input AI model | Sixth input AI model |

**310**               AI model- cash forecasting
Evaluates a plurality of input AI model combinations to create final model

**FIG. 3**

400

| | 7_in v | 6_in v | 5_in v | 4_in v | 3_in v | 2_in v | 1_in v | 0_in v | 1_in v | 2_in v | 3_in v | 4_in v | 5_in v | 6_in v | 7_in v |
|---|---|---|---|---|---|---|---|---|---|---|---|---|---|---|---|
| 2022-01-31 | 0 M | 0 M | 0 M | 0 M | 2 M | 0 M | 4 M | 49 M | 27 M | 19 M | 1 M | 0 M | 0 M | 0 M | 0 M |
| 2022-02-07 | 0 M | 0 M | 0 M | 1 M | 0 M | 2 M | 10 M | 32 M | 42 M | 5 M | 2 M | 0 M | 0 M | 0 M | 0 M |
| 2022-02-14 | 0 M | 0 M | 0 M | 0 M | 1 M | 3 M | 8 M | 46 M | 26 M | 19 M | 1 M | 0 M | 0 M | 0 M | 0 M |
| 2022-02-21 | 0 M | 0 M | 0 M | 0 M | 1 M | 3 M | 9 M | 32 M | 47 M | 12 M | 1 M | 0 M | 0 M | 0 M | 0 M |
| 2022-02-28 | 0 M | 0 M | 1 M | 2 M | 2 M | 4 M | 7 M | 53 M | 34 M | 18 M | 0 M | 0 M | 0 M | 0 M | 0 M |
| 2022-03-07 | 0 M | 0 M | 1 M | 1 M | 4 M | 2 M | 9 M | 37 M | 52 M | 7 M | 0 M | 0 M | 0 M | 0 M | 0 M |
| 2022-03-14 | 0 M | 0 M | 1 M | 3 M | 2 M | 5 M | 6 M | 59 M | 34 M | 19 M | 0 M | 0 M | 0 M | 0 M | 0 M |
| 2022-03-21 | 0 M | 1 M | 2 M | 0 M | 2 M | 2 M | 8 M | 37 M | 53 M | 10 M | 1 M | 0 M | 0 M | 0 M | 0 M |
| 2022-03-28 | 0 M | 1 M | 0 M | 2 M | 1 M | 2 M | 3 M | 60 M | 34 M | 17 M | 1 M | 0 M | 0 M | 0 M | 0 M |
| 2022-04-04 | 0 M | 0 M | 1 M | 1 M | 2 M | 1 M | 25 M | 36 M | 47 M | 11 M | 1 M | 0 M | 0 M | 0 M | 0 M |
| 2022-04-11 | 0 M | 0 M | 1 M | 1 M | 0 M | 2 M | 6 M | 53 M | 32 M | 8 M | 3 M | 0 M | 0 M | 0 M | 0 M |
| 2022-04-18 | 0 M | 0 M | 1 M | 0 M | 2 M | 1 M | 23 M | 34 M | 26 M | 20 M | 1 M | 0 M | 0 M | 0 M | 0 M |
| 2022-04-25 | 0 M | 0 M | 0 M | 1 M | 0 M | 1 M | 4 M | 29 M | 42 M | 7 M | 1 M | 0 M | 0 M | 0 M | 0 M |
| 2022-05-02 | 0 M | 0 M | 1 M | 0 M | 1 M | 1 M | 7 M | 44 M | 26 M | 16 M | 1 M | 0 M | 0 M | 0 M | 0 M |
| 2022-05-09 | 0 M | 1 M | 0 M | 0 M | 0 M | 1 M | 7 M | 29 M | 44 M | 5 M | 1 M | 0 M | 0 M | 0 M | 0 M |

( A )

**FIG. 4A**

A

| | | | | | | | | | | | | | | | |
|---|---|---|---|---|---|---|---|---|---|---|---|---|---|---|---|
| 2022-05-16 | 1 M | 0 M | 0 M | 0 M | 0 M | 1 M | 6 M | 49 M | 29 M | 15 M | 0 M | 0 M | 0 M | 0 M | 0 M |
| 2022-05-23 | 0 M | 0 M | 0 M | 0 M | 1 M | 1 M | 6 M | 31 M | 41 M | 7 M | 0 M | 0 M | 0 M | 0 M | 0 M |
| 2022-05-30 | 0 M | 0 M | 0 M | 0 M | 0 M | 2 M | 8 M | 45 M | 23 M | 12 M | 0 M | 0 M | 0 M | 0 M | 0 M |
| 2022-06-06 | 0 M | 0 M | 0 M | 0 M | 0 M | 1 M | 9 M | 25 M | 30 M | 7 M | 0 M | 0 M | 0 M | 0 M | 0 M |
| 2022-06-13 | 0 M | 0 M | 0 M | 0 M | 0 M | 2 M | 3 M | 38 M | 21 M | 7 M | 0 M | 0 M | 0 M | 0 M | 0 M |
| 2022-06-20 | 0 M | 0 M | 0 M | 0 M | 0 M | 1 M | 5 M | 24 M | 25 M | 5 M | 0 M | 0 M | 0 M | 0 M | 0 M |
| 2022-06-27 | 0 M | 0 M | 0 M | 0 M | 0 M | 0 M | 3 M | 25 M | 16 M | 8 M | 0 M | 0 M | 0 M | 0 M | 0 M |
| 2022-07-04 | 0 M | 0 M | 0 M | 0 M | 0 M | 0 M | 10 M | 18 M | 28 M | 5 M | 0 M | 0 M | 0 M | 0 M | 0 M |
| 2022-07-11 | 0 M | 0 M | 0 M | 0 M | 0 M | 0 M | 5 M | 30 M | 19 M | 5 M | 1 M | 0 M | 0 M | 0 M | 0 M |
| 2022-07-18 | 0 M | 0 M | 0 M | 0 M | 0 M | 0 M | 14 M | 22 M | 19 M | 13 M | 0 M | 0 M | 0 M | 0 M | 0 M |
| 2022-07-25 | 0 M | 0 M | 0 M | 0 M | 0 M | 1 M | 3 M | 22 M | 35 M | 6 M | 1 M | 0 M | 0 M | 0 M | 0 M |
| 2022-08-01 | 0 M | 0 M | 0 M | 0 M | 1 M | 0 M | 4 M | 38 M | 21 M | 14 M | 0 M | 0 M | 0 M | 0 M | 0 M |
| 2022-08-08 | 0 M | 0 M | 0 M | 0 M | 0 M | 0 M | 4 M | 23 M | 34 M | 5 M | 0 M | 0 M | 0 M | 0 M | 0 M |
| 2022-08-15 | 0 M | 0 M | 0 M | 0 M | 0 M | 1 M | 4 M | 39 M | 18 M | 9 M | 0 M | 0 M | 0 M | 0 M | 0 M |
| 2022-08-22 | 0 M | 0 M | 0 M | 0 M | 0 M | 0 M | 6 M | 20 M | 24 M | 4 M | 0 M | 0 M | 0 M | 0 M | 0 M |

B

**FIG. 4B**

( B )

| Date | | | | | | | | | | | | | | | |
|---|---|---|---|---|---|---|---|---|---|---|---|---|---|---|---|
| 2022-08-29 | 0 M | 0 M | 0 M | 0 M | 0 M | 1 M | 4 M | 29 M | 17 M | 9 M | 0 M | 0 M | 0 M | 0 M | 0 M |
| 2022-09-05 | 0 M | 0 M | 0 M | 0 M | 0 M | 0 M | 6 M | 20 M | 23 M | 4 M | 0 M | 0 M | 0 M | 0 M | 0 M |
| 2022-09-12 | 0 M | 0 M | 0 M | 0 M | 0 M | 1 M | 7 M | 29 M | 18 M | 4 M | 1 M | 0 M | 0 M | 0 M | 0 M |
| 2022-09-19 | 0 M | 0 M | 0 M | 0 M | 0 M | 0 M | 4 M | 23 M | 17 M | 10 M | 0 M | 0 M | 0 M | 0 M | 0 M |
| 2022-09-26 | 0 M | 0 M | 0 M | 0 M | 0 M | 1 M | 4 M | 23 M | 28 M | 7 M | 0 M | 0 M | 0 M | 0 M | 0 M |
| 2022-10-03 | 0 M | 0 M | 0 M | 0 M | 0 M | 0 M | 7 M | 32 M | 29 M | 3 M | 0 M | 0 M | 0 M | 0 M | 0 M |
| 2022-10-10 | 0 M | 0 M | 0 M | 0 M | 0 M | 0 M | 5 M | 36 M | 21 M | 3 M | 0 M | 0 M | 0 M | 0 M | 0 M |
| 2022-10-17 | 0 M | 0 M | 0 M | 0 M | 0 M | 1 M | 20 M | 25 M | 19 M | 10 M | 0 M | 0 M | 0 M | 0 M | 0 M |
| 2022-10-24 | 0 M | 0 M | 0 M | 0 M | 0 M | 1 M | 5 M | 21 M | 32 M | 3 M | 0 M | 0 M | 0 M | 0 M | 0 M |
| 2022-10-31 | 0 M | 0 M | 0 M | 0 M | 0 M | 0 M | 5 M | 36 M | 16 M | 9 M | 0 M | 0 M | 0 M | 0 M | 0 M |
| 2022-11-07 | 0 M | 0 M | 0 M | 0 M | 0 M | 0 M | 5 M | 20 M | 28 M | 3 M | 0 M | 0 M | 0 M | 0 M | 0 M |
| 2022-11-14 | 0 M | 0 M | 0 M | 0 M | 0 M | 1 M | 2 M | 34 M | 19 M | 11 M | 0 M | 0 M | 0 M | 0 M | 0 M |
| 2022-11-21 | 0 M | 0 M | 0 M | 0 M | 0 M | 0 M | 5 M | 22 M | 25 M | 4 M | 0 M | 0 M | 0 M | 0 M | 0 M |
| 2022-11-28 | 0 M | 0 M | 0 M | 0 M | 0 M | 1 M | 8 M | 32 M | 12 M | 8 M | 0 M | 0 M | 0 M | 0 M | 0 M |
| 2022-12-05 | 0 M | 0 M | 0 M | 0 M | 0 M | 0 M | 4 M | 17 M | 23 M | 5 M | 0 M | 0 M | 0 M | 0 M | 0 M |
| 2022-12-12 | 0 M | 0 M | 0 M | 0 M | 0 M | 0 M | 3 M | 32 M | 15 M | 3 M | 1 M | 0 M | 0 M | 0 M | 0 M |

( C )

**FIG. 4C**

| Date | | | | | | | | | | | | | | | |
|---|---|---|---|---|---|---|---|---|---|---|---|---|---|---|---|
| 2022-12-19 | 0 M | 0 M | 0 M | 0 M | 0 M | 0 M | 3 M | 18 M | 14 M | 10 M | 0 M | 0 M | 0 M | 0 M | 0 M |
| 2022-12-26 | 0 M | 0 M | 0 M | 0 M | 0 M | 1 M | 2 M | 16 M | 23 M | 3 M | 0 M | 0 M | 0 M | 0 M | 0 M |
| 2023-01-02 | 0 M | 0 M | 0 M | 0 M | 1 M | 0 M | 5 M | 24 M | 12 M | 7 M | 0 M | 0 M | 0 M | 0 M | 0 M |
| 2023-01-09 | 0 M | 0 M | 0 M | 0 M | 0 M | 0 M | 3 M | 14 M | 20 M | 3 M | 0 M | 0 M | 0 M | 0 M | 0 M |
| 2023-01-16 | 0 M | 0 M | 0 M | 0 M | 0 M | 1 M | 1 M | 24 M | 14 M | 9 M | 0 M | 0 M | 0 M | 0 M | 0 M |
| 2023-01-23 | 0 M | 0 M | 0 M | 0 M | 0 M | 0 M | 2 M | 16 M | 25 M | 3 M | 1 M | 0 M | 0 M | 0 M | 0 M |
| 2023-01-30 | 0 M | 0 M | 0 M | 0 M | 0 M | 0 M | 3 M | 29 M | 15 M | 8 M | 0 M | 0 M | 0 M | 0 M | 0 M |
| 2023-02-06 | 0 M | 0 M | 0 M | 0 M | 0 M | 0 M | 2 M | 17 M | 24 M | 4 M | 0 M | 0 M | 0 M | 0 M | 0 M |
| 2023-02-13 | 0 M | 0 M | 0 M | 0 M | 0 M | 1 M | 2 M | 27 M | 17 M | 9 M | 0 M | 0 M | 0 M | 0 M | 0 M |
| 2023-02-20 | 0 M | 0 M | 0 M | 0 M | 0 M | 0 M | 2 M | 20 M | 23 M | 4 M | 0 M | 0 M | 0 M | 0 M | 0 M |
| 2023-02-27 | 0 M | 0 M | 0 M | 0 M | 0 M | 0 M | 3 M | 25 M | 15 M | 9 M | 0 M | 0 M | 0 M | 0 M | 0 M |
| 2023-03-06 | 0 M | 0 M | 0 M | 0 M | 0 M | 0 M | 3 M | 17 M | 23 M | 4 M | 0 M | 0 M | 0 M | 0 M | 0 M |
| 2023-03-13 | 0 M | 0 M | 0 M | 0 M | 0 M | 0 M | 3 M | 28 M | 18 M | 4 M | 0 M | 0 M | 0 M | 0 M | 0 M |
| 2023-03-20 | 0 M | 0 M | 0 M | 0 M | 0 M | 0 M | 4 M | 18 M | 14 M | 9 M | 0 M | 0 M | 0 M | 0 M | 0 M |
| 2023-03-27 | 0 M | 0 M | 0 M | 0 M | 0 M | 0 M | 4 M | 15 M | 24 M | 6 M | 0 M | 0 M | 0 M | 0 M | 0 M |
| 2023-04-03 | 0 M | 0 M | 0 M | 0 M | 0 M | 0 M | 2 M | 26 M | 24 M | 3 M | 0 M | 0 M | 0 M | 0 M | 0 M |

**FIG. 4D**

(D)

| Date | | | | | | | | | | | | | | | |
|---|---|---|---|---|---|---|---|---|---|---|---|---|---|---|---|
| 2023-04-10 | 0 M | 0 M | 0 M | 0 M | 0 M | 0 M | 3 M | 28 M | 15 M | 3 M | 1 M | 0 M | 0 M | 0 M | 0 M |
| 2023-04-17 | 0 M | 0 M | 0 M | 0 M | 0 M | 0 M | 13 M | 19 M | 16 M | 9 M | 0 M | 0 M | 0 M | 0 M | 0 M |
| 2023-04-24 | 0 M | 0 M | 0 M | 0 M | 0 M | 0 M | 3 M | 19 M | 26 M | 4 M | 1 M | 0 M | 0 M | 0 M | 0 M |
| 2023-05-01 | 0 M | 0 M | 0 M | 0 M | 0 M | 0 M | 4 M | 28 M | 18 M | 13 M | 0 M | 0 M | 0 M | 0 M | 0 M |
| 2023-05-08 | 0 M | 0 M | 0 M | 0 M | 0 M | 0 M | 3 M | 20 M | 28 M | 3 M | 0 M | 0 M | 0 M | 0 M | 0 M |
| 2023-05-15 | 0 M | 0 M | 0 M | 0 M | 0 M | 0 M | 5 M | 32 M | 17 M | 9 M | 0 M | 0 M | 0 M | 0 M | 0 M |
| 2023-05-22 | 0 M | 0 M | 0 M | 0 M | 0 M | 0 M | 3 M | 18 M | 26 M | 3 M | 0 M | 0 M | 0 M | 0 M | 0 M |
| 2023-05-29 | 0 M | 0 M | 0 M | 0 M | 0 M | 1 M | 4 M | 29 M | 17 M | 9 M | 0 M | 0 M | 0 M | 0 M | 0 M |
| 2023-06-05 | 0 M | 0 M | 0 M | 0 M | 0 M | 0 M | 5 M | 19 M | 25 M | 5 M | 0 M | 0 M | 0 M | 0 M | 0 M |
| 2023-06-12 | 0 M | 0 M | 0 M | 0 M | 0 M | 1 M | 3 M | 32 M | 19 M | 4 M | 1 M | 0 M | 0 M | 0 M | 0 M |
| 2023-06-19 | 0 M | 0 M | 0 M | 0 M | 0 M | 0 M | 3 M | 21 M | 18 M | 11 M | 0 M | 0 M | 0 M | 0 M | 0 M |
| 2023-06-26 | 0 M | 0 M | 0 M | 0 M | 0 M | 1 M | 3 M | 19 M | 27 M | 9 M | 0 M | 0 M | 0 M | 0 M | 0 M |
| 2023-07-03 | 0 M | 0 M | 0 M | 0 M | 0 M | 0 M | 4 M | 29 M | 31 M | 4 M | 0 M | 0 M | 0 M | 0 M | 0 M |
| 2023-07-10 | 0 M | 0 M | 0 M | 0 M | 0 M | 0 M | 5 M | 33 M | 18 M | 4 M | 0 M | 0 M | 0 M | 0 M | 0 M |
| 2023-07-17 | 0 M | 0 M | 0 M | 0 M | 0 M | 0 M | 17 M | 20 M | 21 M | 10 M | 0 M | 0 M | 0 M | 0 M | 0 M |
| 2023-07-24 | 0 M | 0 M | 0 M | 0 M | 0 M | 1 M | 4 M | 24 M | 31 M | 4 M | 0 M | 0 M | 0 M | 0 M | 0 M |
| 2023-07-31 | 0 M | 0 M | 0 M | 0 M | 1 M | 0 M | 4 M | 34 M | 21 M | 12 M | 0 M | 0 M | 0 M | 0 M | 0 M |
| 2023-08-07 | 0 M | 0 M | 0 M | 0 M | 0 M | 0 M | 4 M | 24 M | 33 M | 5 M | 0 M | 0 M | 0 M | 0 M | 0 M |

**FIG. 4E**

500

Feature spread analysis

**FIG. 5**

600

| | 0-fs-inv | 1-fs-inv | 2-fs-inv | 3-fs-inv | 0-fs-cm | 1-fs-cm | 2-fs-cm | 3-fs-cm | 0-fs-pd | 1-fs-pd | 2-fs-pd | 3-fs-pd |
|---|---|---|---|---|---|---|---|---|---|---|---|---|
| 2022-01-31 | 0 M | 8 M | 31 M | 63 M | 0 M | -1 M | -6 M | -16 M | 0 M | 0 M | -1 M | -4 M |
| 2022-02-07 | 0 M | 2 M | 28 M | 56 M | 0 M | 0 M | -6 M | -14 M | 0 M | 0 M | -1 M | -3 M |
| 2022-02-14 | 0 M | 8 M | 22 M | 49 M | 0 M | -1 M | -4 M | -12 M | 0 M | 0 M | -1 M | -3 M |
| 2022-02-21 | 0 M | 2 M | 16 M | 46 M | 0 M | 0 M | -3 M | -11 M | 0 M | 0 M | -1 M | -3 M |
| 2022-02-28 | 0 M | 7 M | 26 M | 50 M | 0 M | -1 M | -5 M | -12 M | 0 M | 0 M | -1 M | -3 M |
| 2022-03-07 | 0 M | 2 M | 22 M | 48 M | 0 M | 0 M | -4 M | -12 M | 0 M | 0 M | -1 M | -3 M |
| 2022-03-14 | 0 M | 5 M | 25 M | 53 M | 0 M | -1 M | -5 M | -13 M | 0 M | 0 M | -1 M | -3 M |
| 2022-03-21 | 0 M | 3 M | 25 M | 56 M | 0 M | 0 M | -5 M | -14 M | 0 M | 0 M | -1 M | -3 M |
| 2022-03-28 | 0 M | 3 M | 30 M | 57 M | 0 M | 0 M | -6 M | -14 M | 0 M | 0 M | -1 M | -4 M |
| 2022-04-04 | 0 M | 5 M | 30 M | 56 M | 0 M | -1 M | -6 M | -14 M | 0 M | 0 M | -1 M | -4 M |
| 2022-04-11 | 0 M | 2 M | 29 M | 52 M | 0 M | 0 M | -6 M | -13 M | 0 M | 0 M | -1 M | -3 M |
| 2022-04-18 | 0 M | 7 M | 29 M | 51 M | 0 M | -1 M | -6 M | -13 M | 0 M | 0 M | -1 M | -3 M |
| 2022-04-25 | 0 M | 2 M | 29 M | 51 M | 0 M | 0 M | -6 M | -13 M | 0 M | 0 M | -1 M | -3 M |
| 2022-05-02 | 0 M | 7 M | 25 M | 52 M | 0 M | -1 M | -5 M | -13 M | 0 M | 0 M | -1 M | -3 M |
| 2022-05-09 | 0 M | 2 M | 25 M | 47 M | 0 M | 0 M | -5 M | -12 M | 0 M | 0 M | -1 M | -3 M |
| 2022-05-16 | 0 M | 2 M | 24 M | 50 M | 0 M | 0 M | -5 M | -12 M | 0 M | 0 M | -1 M | -3 M |
| 2022-05-23 | 0 M | 2 M | 24 M | 50 M | 0 M | 0 M | -5 M | -12 M | 0 M | 0 M | -1 M | -3 M |
| 2022-05-30 | 0 M | 2 M | 24 M | 52 M | 0 M | 0 M | -5 M | -13 M | 0 M | 0 M | -1 M | -3 M |
| 2022-06-06 | 0 M | 6 M | 24 M | 55 M | 0 M | -1 M | -5 M | -14 M | 0 M | 0 M | -1 M | -3 M |

A

**FIG. 6A**

A

| 2022-06-13 | 0 M | 2 M | 24 M | 51 M | 0 M | 0 M | -5 M | -13 M | 0 M | 0 M | -1 M | -3 M |
| 2022-06-20 | 0 M | 5 M | 24 M | 58 M | 0 M | -1 M | -5 M | -14 M | 0 M | 0 M | -1 M | -4 M |
| 2022-06-27 | 0 M | 3 M | 19 M | 48 M | 0 M | 0 M | -4 M | -12 M | 0 M | 0 M | -1 M | -3 M |
| 2022-07-04 | 0 M | 9 M | 31 M | 57 M | 0 M | -1 M | -6 M | -14 M | 0 M | 0 M | -1 M | -4 M |
| 2022-07-11 | 0 M | 1 M | 23 M | 48 M | 0 M | 0 M | -5 M | -12 M | 0 M | 0 M | -1 M | -3 M |
| 2022-07-18 | 0 M | 8 M | 29 M | 60 M | 0 M | -1 M | -6 M | -15 M | 0 M | 0 M | -1 M | -4 M |
| 2022-07-25 | 0 M | 2 M | 20 M | 46 M | 0 M | 0 M | -4 M | -12 M | 0 M | 0 M | -1 M | -3 M |
| 2022-08-01 | 0 M | 7 M | 31 M | 52 M | 0 M | -1 M | -6 M | -13 M | 0 M | 0 M | -1 M | -3 M |
| 2022-08-08 | 0 M | 2 M | 18 M | 46 M | 0 M | 0 M | -4 M | -12 M | 0 M | 0 M | -1 M | -3 M |
| 2022-08-15 | 0 M | 4 M | 17 M | 35 M | 0 M | -1 M | -3 M | -9 M | 0 M | 0 M | -1 M | -2 M |
| 2022-08-22 | 0 M | 1 M | 15 M | 39 M | 0 M | 0 M | -3 M | -10 M | 0 M | 0 M | -1 M | -2 M |
| 2022-08-29 | 0 M | 1 M | 9 M | 27 M | 0 M | 0 M | -2 M | -7 M | 0 M | 0 M | 0 M | -2 M |
| 2022-09-05 | 0 M | 3 M | 18 M | 36 M | 0 M | 0 M | -4 M | -9 M | 0 M | 0 M | -1 M | -2 M |
| 2022-09-12 | 0 M | 1 M | 18 M | 41 M | 0 M | 0 M | -4 M | -10 M | 0 M | 0 M | -1 M | -3 M |
| 2022-09-19 | 0 M | 5 M | 25 M | 47 M | 0 M | -1 M | -5 M | -12 M | 0 M | 0 M | -1 M | -3 M |
| 2022-09-26 | 0 M | 1 M | 19 M | 42 M | 0 M | 0 M | -4 M | -11 M | 0 M | 0 M | -1 M | -3 M |
| 2022-10-03 | 0 M | 6 M | 26 M | 51 M | 0 M | -1 M | -5 M | -13 M | 0 M | 0 M | -1 M | -3 M |
| 2022-10-10 | 0 M | 2 M | 23 M | 46 M | 0 M | 0 M | -5 M | -11 M | 0 M | 0 M | -1 M | -3 M |
| 2022-10-17 | 0 M | 7 M | 27 M | 52 M | 0 M | -1 M | -5 M | -13 M | 0 M | 0 M | -1 M | -3 M |
| 2022-10-24 | 0 M | 2 M | 20 M | 44 M | 0 M | 0 M | -4 M | -11 M | 0 M | 0 M | -1 M | -3 M |

B

**FIG. 6B**

B

| 2022-10-31 | 0 M | 7 M | 27 M | 50 M | 0 M | -1 M | -5 M | -12 M | 0 M | 0 M | -1 M | -3 M |
| 2022-11-07 | 0 M | 2 M | 21 M | 41 M | 0 M | 0 M | -4 M | -10 M | 0 M | 0 M | -1 M | -3 M |
| 2022-11-14 | 0 M | 1 M | 17 M | 39 M | 0 M | 0 M | -3 M | -10 M | 0 M | 0 M | -1 M | -2 M |
| 2022-11-21 | 0 M | 1 M | 20 M | 39 M | 0 M | 0 M | -4 M | -10 M | 0 M | 0 M | -1 M | -2 M |
| 2022-11-28 | 0 M | 1 M | 17 M | 41 M | 0 M | 0 M | -3 M | -10 M | 0 M | 0 M | -1 M | -3 M |
| 2022-12-05 | 0 M | 4 M | 22 M | 42 M | 0 M | -1 M | -4 M | -11 M | 0 M | 0 M | -1 M | -3 M |
| 2022-12-12 | 0 M | 2 M | 22 M | 45 M | 0 M | 0 M | -4 M | -11 M | 0 M | 0 M | -1 M | -3 M |
| 2022-12-19 | 0 M | 4 M | 22 M | 47 M | 0 M | -1 M | -4 M | -12 M | 0 M | 0 M | -1 M | -3 M |
| 2022-12-26 | 0 M | 1 M | 19 M | 50 M | 0 M | 0 M | -4 M | -12 M | 0 M | 0 M | -1 M | -3 M |
| 2023-01-02 | 0 M | 7 M | 27 M | 56 M | 0 M | -1 M | -5 M | -14 M | 0 M | 0 M | -1 M | -3 M |
| 2023-01-09 | 0 M | 1 M | 20 M | 43 M | 0 M | 0 M | -4 M | -11 M | 0 M | 0 M | -1 M | -3 M |
| 2023-01-16 | 0 M | 6 M | 27 M | 53 M | 0 M | -1 M | -5 M | -13 M | 0 M | 0 M | -1 M | -3 M |
| 2023-01-23 | 0 M | 1 M | 20 M | 46 M | 0 M | 0 M | -4 M | -11 M | 0 M | 0 M | -1 M | -3 M |
| 2023-01-30 | 0 M | 9 M | 28 M | 55 M | 0 M | -1 M | -6 M | -14 M | 0 M | 0 M | -1 M | -3 M |
| 2023-02-06 | 0 M | 1 M | 24 M | 49 M | 0 M | 0 M | -5 M | -12 M | 0 M | 0 M | -1 M | -3 M |
| 2023-02-13 | 0 M | 1 M | 17 M | 43 M | 0 M | 0 M | -3 M | -11 M | 0 M | 0 M | -1 M | -3 M |
| 2023-02-20 | 0 M | 2 M | 21 M | 49 M | 0 M | 0 M | -4 M | -12 M | 0 M | 0 M | -1 M | -3 M |
| 2023-02-27 | 0 M | 1 M | 18 M | 42 M | 0 M | 0 M | -4 M | -11 M | 0 M | 0 M | -1 M | -3 M |
| 2023-03-06 | 0 M | 4 M | 23 M | 53 M | 0 M | -1 M | -5 M | -13 M | 0 M | 0 M | -1 M | -3 M |
| 2023-03-13 | 0 M | 2 M | 23 M | 47 M | 0 M | 0 M | -5 M | -12 M | 0 M | 0 M | -1 M | -3 M |

C

**FIG. 6C**

C

| 2023-03-20 | 0 M | 4 M | 28 M | 58 M | 0 M | -1 M | -6 M | -15 M | 0 M | 0 M | -1 M | -4 M |
|---|---|---|---|---|---|---|---|---|---|---|---|---|
| 2023-03-27 | 0 M | 2 M | 23 M | 52 M | 0 M | 0 M | -5 M | -13 M | 0 M | 0 M | -1 M | -3 M |
| 2023-04-03 | 0 M | 3 M | 33 M | 64 M | 0 M | -1 M | -7 M | -16 M | 0 M | 0 M | -1 M | -4 M |
| 2023-04-10 | 0 M | 2 M | 22 M | 58 M | 0 M | 0 M | -4 M | -14 M | 0 M | 0 M | -1 M | -4 M |
| 2023-04-17 | 0 M | 1 M | 21 M | 49 M | 0 M | 0 M | -4 M | -12 M | 0 M | 0 M | -1 M | -3 M |
| 2023-04-24 | 0 M | 2 M | 26 M | 53 M | 0 M | 0 M | -5 M | -13 M | 0 M | 0 M | -1 M | -3 M |
| 2023-05-01 | 0 M | 2 M | 26 M | 58 M | 0 M | 0 M | -5 M | -14 M | 0 M | 0 M | -1 M | -4 M |
| 2023-05-08 | 0 M | 2 M | 26 M | 54 M | 0 M | 0 M | -5 M | -14 M | 0 M | 0 M | -1 M | -3 M |
| 2023-05-15 | 0 M | 5 M | 26 M | 56 M | 0 M | -1 M | -5 M | -14 M | 0 M | 0 M | -1 M | -3 M |
| 2023-05-22 | 0 M | 4 M | 26 M | 59 M | 0 M | -1 M | -5 M | -15 M | 0 M | 0 M | -1 M | -4 M |
| 2023-05-29 | 0 M | 2 M | 26 M | 56 M | 0 M | 0 M | -5 M | -14 M | 0 M | 0 M | -1 M | -4 M |
| 2023-06-05 | 0 M | 2 M | 26 M | 53 M | 0 M | 0 M | -5 M | -13 M | 0 M | 0 M | -1 M | -3 M |
| 2023-06-12 | 0 M | 3 M | 26 M | 52 M | 0 M | 0 M | -5 M | -13 M | 0 M | 0 M | -1 M | -3 M |
| 2023-06-19 | 0 M | 6 M | 26 M | 54 M | 0 M | -1 M | -5 M | -13 M | 0 M | 0 M | -1 M | -3 M |
| 2023-06-26 | 0 M | 2 M | 23 M | 48 M | 0 M | 0 M | -5 M | -12 M | 0 M | 0 M | -1 M | -3 M |
| 2023-07-03 | 0 M | 3 M | 29 M | 60 M | 0 M | 0 M | -6 M | -15 M | 0 M | 0 M | -1 M | -4 M |
| 2023-07-10 | 0 M | 2 M | 20 M | 57 M | 0 M | 0 M | -4 M | -14 M | 0 M | 0 M | -1 M | -4 M |
| 2023-07-17 | 0 M | 7 M | 31 M | 52 M | 0 M | -1 M | -6 M | -13 M | 0 M | 0 M | -1 M | -3 M |
| 2023-07-24 | 0 M | 2 M | 18 M | 55 M | 0 M | 0 M | -4 M | -14 M | 0 M | 0 M | -1 M | -3 M |
| 2023-07-31 | 0 M | 4 M | 17 M | 56 M | 0 M | -1 M | -3 M | -14 M | 0 M | 0 M | -1 M | -3 M |
| 2023-08-07 | 0 M | 1 M | 15 M | 54 M | 0 M | 0 M | -3 M | -13 M | 0 M | 0 M | -1 M | -3 M |

**FIG. 6D**

700

| | -7_dd | -6_dd | -5_dd | -4_dd | -3_dd | -2_dd | -1_dd | 0_ded | 1_ded | 2_ded | 3_ded | 4_ded | 5_ded | 6_ded | 7_ded |
|---|---|---|---|---|---|---|---|---|---|---|---|---|---|---|---|
| 2022-01-31 | 0 M | 0 M | 0 M | 0 M | 0 M | 0 M | 0 M | -5 M | -3 M | -2 M | 0 M | 0 M | 0 M | 0 M | 0 M |
| 2022-02-07 | 0 M | 0 M | 0 M | 0 M | 0 M | 0 M | -1 M | -3 M | -4 M | -1 M | 0 M | 0 M | 0 M | 0 M | 0 M |
| 2022-02-14 | 0 M | 0 M | 0 M | 0 M | 0 M | 0 M | -1 M | -5 M | -3 M | -2 M | 0 M | 0 M | 0 M | 0 M | 0 M |
| 2022-02-21 | 0 M | 0 M | 0 M | 0 M | 0 M | 0 M | -1 M | -3 M | -5 M | -1 M | 0 M | 0 M | 0 M | 0 M | 0 M |
| 2022-02-28 | 0 M | 0 M | 0 M | 0 M | 0 M | 0 M | -1 M | -5 M | -3 M | -2 M | 0 M | 0 M | 0 M | 0 M | 0 M |
| 2022-03-07 | 0 M | 0 M | 0 M | 0 M | 0 M | 0 M | -1 M | -4 M | -5 M | -1 M | 0 M | 0 M | 0 M | 0 M | 0 M |
| 2022-03-14 | 0 M | 0 M | 0 M | 0 M | 0 M | -1 M | -1 M | -6 M | -3 M | -2 M | 0 M | 0 M | 0 M | 0 M | 0 M |
| 2022-03-21 | 0 M | 0 M | 0 M | 0 M | 0 M | 0 M | -1 M | -4 M | -5 M | -1 M | 0 M | 0 M | 0 M | 0 M | 0 M |
| 2022-03-28 | 0 M | 0 M | 0 M | 0 M | 0 M | 0 M | 0 M | -6 M | -3 M | -2 M | 0 M | 0 M | 0 M | 0 M | 0 M |
| 2022-04-04 | 0 M | 0 M | 0 M | 0 M | 0 M | 0 M | -3 M | -4 M | -5 M | -1 M | 0 M | 0 M | 0 M | 0 M | 0 M |
| 2022-04-11 | 0 M | 0 M | 0 M | 0 M | 0 M | 0 M | -1 M | -5 M | -3 M | -1 M | 0 M | 0 M | 0 M | 0 M | 0 M |
| 2022-04-18 | 0 M | 0 M | 0 M | 0 M | 0 M | 0 M | -2 M | -3 M | -3 M | -2 M | 0 M | 0 M | 0 M | 0 M | 0 M |
| 2022-04-25 | 0 M | 0 M | 0 M | 0 M | 0 M | 0 M | 0 M | -3 M | -4 M | -1 M | 0 M | 0 M | 0 M | 0 M | 0 M |
| 2022-05-02 | 0 M | 0 M | 0 M | 0 M | 0 M | 0 M | -1 M | -4 M | -3 M | -2 M | 0 M | 0 M | 0 M | 0 M | 0 M |

A

**FIG. 7A**

A

| | | | | | | | | | | | | | | |
|---|---|---|---|---|---|---|---|---|---|---|---|---|---|---|
| 2022-05-09 | 0 M | 0 M | 0 M | 0 M | 0 M | 0 M | -1 M | -3 M | -4 M | -1 M | 0 M | 0 M | 0 M | 0 M | 0 M |
| 2022-05-16 | 0 M | 0 M | 0 M | 0 M | 0 M | 0 M | -1 M | -5 M | -3 M | -2 M | 0 M | 0 M | 0 M | 0 M | 0 M |
| 2022-05-23 | 0 M | 0 M | 0 M | 0 M | 0 M | 0 M | -1 M | -3 M | -4 M | -1 M | 0 M | 0 M | 0 M | 0 M | 0 M |
| 2022-05-30 | 0 M | 0 M | 0 M | 0 M | 0 M | 0 M | -1 M | -4 M | -2 M | -1 M | 0 M | 0 M | 0 M | 0 M | 0 M |
| 2022-06-06 | 0 M | 0 M | 0 M | 0 M | 0 M | 0 M | -1 M | -2 M | -3 M | -1 M | 0 M | 0 M | 0 M | 0 M | 0 M |
| 2022-06-13 | 0 M | 0 M | 0 M | 0 M | 0 M | 0 M | 0 M | -4 M | -2 M | -1 M | 0 M | 0 M | 0 M | 0 M | 0 M |
| 2022-06-20 | 0 M | 0 M | 0 M | 0 M | 0 M | 0 M | 0 M | -2 M | -2 M | -1 M | 0 M | 0 M | 0 M | 0 M | 0 M |
| 2022-06-27 | 0 M | 0 M | 0 M | 0 M | 0 M | 0 M | 0 M | -2 M | -2 M | -1 M | 0 M | 0 M | 0 M | 0 M | 0 M |
| 2022-07-04 | 0 M | 0 M | 0 M | 0 M | 0 M | 0 M | -1 M | -2 M | -3 M | 0 M | 0 M | 0 M | 0 M | 0 M | 0 M |
| 2022-07-11 | 0 M | 0 M | 0 M | 0 M | 0 M | 0 M | 0 M | -3 M | -2 M | -1 M | 0 M | 0 M | 0 M | 0 M | 0 M |
| 2022-07-18 | 0 M | 0 M | 0 M | 0 M | 0 M | 0 M | -1 M | -2 M | -2 M | -1 M | 0 M | 0 M | 0 M | 0 M | 0 M |
| 2022-07-25 | 0 M | 0 M | 0 M | 0 M | 0 M | 0 M | 0 M | -2 M | -3 M | -1 M | 0 M | 0 M | 0 M | 0 M | 0 M |
| 2022-08-01 | 0 M | 0 M | 0 M | 0 M | 0 M | 0 M | 0 M | -4 M | -2 M | -1 M | 0 M | 0 M | 0 M | 0 M | 0 M |
| 2022-08-08 | 0 M | 0 M | 0 M | 0 M | 0 M | 0 M | 0 M | -2 M | -3 M | 0 M | 0 M | 0 M | 0 M | 0 M | 0 M |
| 2022-08-15 | 0 M | 0 M | 0 M | 0 M | 0 M | 0 M | 0 M | -4 M | -2 M | -1 M | 0 M | 0 M | 0 M | 0 M | 0 M |

B

**FIG. 7B**

B

| Date | | | | | | | | | | | | | | | |
|---|---|---|---|---|---|---|---|---|---|---|---|---|---|---|---|
| 2022-08-22 | 0 M | 0 M | 0 M | 0 M | 0 M | 0 M | -1 M | -2 M | -2 M | 0 M | 0 M | 0 M | 0 M | 0 M | 0 M |
| 2022-08-29 | 0 M | 0 M | 0 M | 0 M | 0 M | 0 M | 0 M | -3 M | -2 M | -1 M | 0 M | 0 M | 0 M | 0 M | 0 M |
| 2022-09-05 | 0 M | 0 M | 0 M | 0 M | 0 M | 0 M | -1 M | -2 M | -2 M | 0 M | 0 M | 0 M | 0 M | 0 M | 0 M |
| 2022-09-12 | 0 M | 0 M | 0 M | 0 M | 0 M | 0 M | -1 M | -3 M | -2 M | 0 M | 0 M | 0 M | 0 M | 0 M | 0 M |
| 2022-09-19 | 0 M | 0 M | 0 M | 0 M | 0 M | 0 M | 0 M | -2 M | -2 M | -1 M | 0 M | 0 M | 0 M | 0 M | 0 M |
| 2022-09-26 | 0 M | 0 M | 0 M | 0 M | 0 M | 0 M | 0 M | -2 M | -3 M | -1 M | 0 M | 0 M | 0 M | 0 M | 0 M |
| 2022-10-03 | 0 M | 0 M | 0 M | 0 M | 0 M | 0 M | -1 M | -3 M | -3 M | 0 M | 0 M | 0 M | 0 M | 0 M | 0 M |
| 2022-10-10 | 0 M | 0 M | 0 M | 0 M | 0 M | 0 M | 0 M | -4 M | -2 M | 0 M | 0 M | 0 M | 0 M | 0 M | 0 M |
| 2022-10-17 | 0 M | 0 M | 0 M | 0 M | 0 M | 0 M | -2 M | -3 M | -2 M | -1 M | 0 M | 0 M | 0 M | 0 M | 0 M |
| 2022-10-24 | 0 M | 0 M | 0 M | 0 M | 0 M | 0 M | -1 M | -2 M | -3 M | 0 M | 0 M | 0 M | 0 M | 0 M | 0 M |
| 2022-10-31 | 0 M | 0 M | 0 M | 0 M | 0 M | 0 M | 0 M | -4 M | -2 M | -1 M | 0 M | 0 M | 0 M | 0 M | 0 M |
| 2022-11-07 | 0 M | 0 M | 0 M | 0 M | 0 M | 0 M | -1 M | -2 M | -3 M | 0 M | 0 M | 0 M | 0 M | 0 M | 0 M |
| 2022-11-14 | 0 M | 0 M | 0 M | 0 M | 0 M | 0 M | 0 M | -3 M | -2 M | -1 M | 0 M | 0 M | 0 M | 0 M | 0 M |
| 2022-11-21 | 0 M | 0 M | 0 M | 0 M | 0 M | 0 M | 0 M | -2 M | -2 M | 0 M | 0 M | 0 M | 0 M | 0 M | 0 M |
| 2022-11-28 | 0 M | 0 M | 0 M | 0 M | 0 M | 0 M | -1 M | -3 M | -1 M | -1 M | 0 M | 0 M | 0 M | 0 M | 0 M |
| 2022-12-05 | 0 M | 0 M | 0 M | 0 M | 0 M | 0 M | 0 M | -2 M | -2 M | 0 M | 0 M | 0 M | 0 M | 0 M | 0 M |

C

**FIG. 7C**

C

| | | | | | | | | | | | | | | |
|---|---|---|---|---|---|---|---|---|---|---|---|---|---|---|
| 2022-12-12 | 0 M | 0 M | 0 M | 0 M | 0 M | 0 M | 0 M | -3 M | -2 M | 0 M | 0 M | 0 M | 0 M | 0 M |
| 2022-12-19 | 0 M | 0 M | 0 M | 0 M | 0 M | 0 M | 0 M | -2 M | -1 M | -1 M | 0 M | 0 M | 0 M | 0 M |
| 2022-12-26 | 0 M | 0 M | 0 M | 0 M | 0 M | 0 M | 0 M | -2 M | -2 M | 0 M | 0 M | 0 M | 0 M | 0 M |
| 2023-01-02 | 0 M | 0 M | 0 M | 0 M | 0 M | 0 M | 0 M | -2 M | -1 M | -1 M | 0 M | 0 M | 0 M | 0 M |
| 2023-01-09 | 0 M | 0 M | 0 M | 0 M | 0 M | 0 M | 0 M | -1 M | -2 M | 0 M | 0 M | 0 M | 0 M | 0 M |
| 2023-01-16 | 0 M | 0 M | 0 M | 0 M | 0 M | 0 M | 0 M | -2 M | -1 M | -1 M | 0 M | 0 M | 0 M | 0 M |
| 2023-01-23 | 0 M | 0 M | 0 M | 0 M | 0 M | 0 M | 0 M | -2 M | -2 M | 0 M | 0 M | 0 M | 0 M | 0 M |
| 2023-01-30 | 0 M | 0 M | 0 M | 0 M | 0 M | 0 M | 0 M | -3 M | -1 M | -1 M | 0 M | 0 M | 0 M | 0 M |
| 2023-02-06 | 0 M | 0 M | 0 M | 0 M | 0 M | 0 M | 0 M | -2 M | -2 M | 0 M | 0 M | 0 M | 0 M | 0 M |
| 2023-02-13 | 0 M | 0 M | 0 M | 0 M | 0 M | 0 M | 0 M | -3 M | -2 M | -1 M | 0 M | 0 M | 0 M | 0 M |
| 2023-02-20 | 0 M | 0 M | 0 M | 0 M | 0 M | 0 M | 0 M | -2 M | -2 M | 0 M | 0 M | 0 M | 0 M | 0 M |
| 2023-02-27 | 0 M | 0 M | 0 M | 0 M | 0 M | 0 M | 0 M | -2 M | -1 M | -1 M | 0 M | 0 M | 0 M | 0 M |
| 2023-03-06 | 0 M | 0 M | 0 M | 0 M | 0 M | 0 M | 0 M | -2 M | -2 M | 0 M | 0 M | 0 M | 0 M | 0 M |
| 2023-03-13 | 0 M | 0 M | 0 M | 0 M | 0 M | 0 M | 0 M | -3 M | -2 M | 0 M | 0 M | 0 M | 0 M | 0 M |
| 2023-03-20 | 0 M | 0 M | 0 M | 0 M | 0 M | 0 M | 0 M | -2 M | -1 M | -1 M | 0 M | 0 M | 0 M | 0 M |
| 2023-03-27 | 0 M | 0 M | 0 M | 0 M | 0 M | 0 M | 0 M | -2 M | -2 M | -1 M | 0 M | 0 M | 0 M | 0 M |
| 2023-04-03 | 0 M | 0 M | 0 M | 0 M | 0 M | 0 M | 0 M | -3 M | -2 M | 0 M | 0 M | 0 M | 0 M | 0 M |
| 2023-04-10 | 0 M | 0 M | 0 M | 0 M | 0 M | 0 M | 0 M | -3 M | -1 M | 0 M | 0 M | 0 M | 0 M | 0 M |
| 2023-04-17 | 0 M | 0 M | 0 M | 0 M | 0 M | 0 M | -1 M | -2 M | -2 M | -1 M | 0 M | 0 M | 0 M | 0 M |

D

**FIG. 7D**

D

| | | | | | | | | | | | | | | |
|---|---|---|---|---|---|---|---|---|---|---|---|---|---|---|
| 2023-04-24 | 0 M | 0 M | 0 M | 0 M | 0 M | 0 M | 0 M | -2 M | -3 M | 0 M | 0 M | 0 M | 0 M | 0 M | 0 M |
| 2023-05-01 | 0 M | 0 M | 0 M | 0 M | 0 M | 0 M | 0 M | -3 M | -2 M | -1 M | 0 M | 0 M | 0 M | 0 M | 0 M |
| 2023-05-08 | 0 M | 0 M | 0 M | 0 M | 0 M | 0 M | 0 M | -2 M | -3 M | 0 M | 0 M | 0 M | 0 M | 0 M | 0 M |
| 2023-05-15 | 0 M | 0 M | 0 M | 0 M | 0 M | 0 M | 0 M | -3 M | -2 M | -1 M | 0 M | 0 M | 0 M | 0 M | 0 M |
| 2023-05-22 | 0 M | 0 M | 0 M | 0 M | 0 M | 0 M | 0 M | -2 M | -3 M | 0 M | 0 M | 0 M | 0 M | 0 M | 0 M |
| 2023-05-29 | 0 M | 0 M | 0 M | 0 M | 0 M | 0 M | 0 M | -3 M | -2 M | -1 M | 0 M | 0 M | 0 M | 0 M | 0 M |
| 2023-06-05 | 0 M | 0 M | 0 M | 0 M | 0 M | 0 M | -1 M | -2 M | -3 M | -1 M | 0 M | 0 M | 0 M | 0 M | 0 M |
| 2023-06-12 | 0 M | 0 M | 0 M | 0 M | 0 M | 0 M | 0 M | -3 M | -2 M | 0 M | 0 M | 0 M | 0 M | 0 M | 0 M |
| 2023-06-19 | 0 M | 0 M | 0 M | 0 M | 0 M | 0 M | 0 M | -2 M | -2 M | -1 M | 0 M | 0 M | 0 M | 0 M | 0 M |
| 2023-06-26 | 0 M | 0 M | 0 M | 0 M | 0 M | 0 M | 0 M | -2 M | -3 M | -1 M | 0 M | 0 M | 0 M | 0 M | 0 M |
| 2023-07-03 | 0 M | 0 M | 0 M | 0 M | 0 M | 0 M | 0 M | -3 M | -3 M | 0 M | 0 M | 0 M | 0 M | 0 M | 0 M |
| 2023-07-10 | 0 M | 0 M | 0 M | 0 M | 0 M | 0 M | -1 M | -3 M | -2 M | 0 M | 0 M | 0 M | 0 M | 0 M | 0 M |
| 2023-07-17 | 0 M | 0 M | 0 M | 0 M | 0 M | 0 M | -2 M | -2 M | -2 M | -1 M | 0 M | 0 M | 0 M | 0 M | 0 M |
| 2023-07-24 | 0 M | 0 M | 0 M | 0 M | 0 M | 0 M | 0 M | -2 M | -3 M | 0 M | 0 M | 0 M | 0 M | 0 M | 0 M |
| 2023-07-31 | 0 M | 0 M | 0 M | 0 M | 0 M | 0 M | 0 M | -3 M | -2 M | -1 M | 0 M | 0 M | 0 M | 0 M | 0 M |
| 2023-08-07 | 0 M | 0 M | 0 M | 0 M | 0 M | 0 M | 0 M | -2 M | -3 M | 0 M | 0 M | 0 M | 0 M | 0 M | 0 M |

**FIG. 7E**

800

| | -7_so | -6_so | -5_so | -4_so | -3_so | -2_so | -1_so | 0_so | 1_so | 2_so | 3_so | 4_so | 5_so | 6_so | 7_so |
|---|---|---|---|---|---|---|---|---|---|---|---|---|---|---|---|
| 2022-01-31 | 0 M | 0 M | 0 M | 0 M | 1 M | 0 M | 3 M | 36 M | 21 M | 14 M | 1 M | 0 M | 0 M | 0 M | 0 M |
| 2022-02-07 | 0 M | 0 M | 0 M | 1 M | 0 M | 1 M | 7 M | 24 M | 31 M | 4 M | 1 M | 0 M | 0 M | 0 M | 0 M |
| 2022-02-14 | 0 M | 0 M | 0 M | 0 M | 0 M | 3 M | 6 M | 34 M | 20 M | 15 M | 1 M | 0 M | 0 M | 0 M | 0 M |
| 2022-02-21 | 0 M | 0 M | 0 M | 0 M | 1 M | 2 M | 7 M | 24 M | 35 M | 9 M | 1 M | 0 M | 0 M | 0 M | 0 M |
| 2022-02-28 | 0 M | 0 M | 0 M | 1 M | 1 M | 3 M | 6 M | 40 M | 25 M | 13 M | 0 M | 0 M | 0 M | 0 M | 0 M |
| 2022-03-07 | 0 M | 0 M | 1 M | 1 M | 3 M | 2 M | 7 M | 28 M | 39 M | 5 M | 0 M | 0 M | 0 M | 0 M | 0 M |
| 2022-03-14 | 0 M | 0 M | 1 M | 2 M | 2 M | 4 M | 5 M | 44 M | 25 M | 14 M | 0 M | 0 M | 0 M | 0 M | 0 M |
| 2022-03-21 | 0 M | 0 M | 1 M | 0 M | 1 M | 1 M | 6 M | 28 M | 40 M | 7 M | 0 M | 0 M | 0 M | 0 M | 0 M |
| 2022-03-28 | 0 M | 1 M | 0 M | 1 M | 1 M | 1 M | 2 M | 45 M | 25 M | 13 M | 1 M | 0 M | 0 M | 0 M | 0 M |
| 2022-04-04 | 0 M | 0 M | 0 M | 1 M | 1 M | 1 M | 19 M | 27 M | 35 M | 8 M | 1 M | 0 M | 0 M | 0 M | 0 M |
| 2022-04-11 | 0 M | 0 M | 1 M | 1 M | 0 M | 2 M | 4 M | 40 M | 24 M | 6 M | 2 M | 0 M | 0 M | 0 M | 0 M |
| 2022-04-18 | 0 M | 0 M | 0 M | 0 M | 1 M | 0 M | 18 M | 26 M | 20 M | 15 M | 0 M | 0 M | 0 M | 0 M | 0 M |
| 2022-04-25 | 0 M | 0 M | 0 M | 1 M | 0 M | 1 M | 3 M | 22 M | 31 M | 5 M | 1 M | 0 M | 0 M | 0 M | 0 M |
| 2022-05-02 | 0 M | 0 M | 1 M | 0 M | 1 M | 1 M | 5 M | 33 M | 19 M | 12 M | 1 M | 0 M | 0 M | 0 M | 0 M |

(A)

**FIG. 8A**

A

| Date | | | | | | | | | | | | | | | |
|---|---|---|---|---|---|---|---|---|---|---|---|---|---|---|---|
| 2022-05-09 | 0 M | 1 M | 0 M | 0 M | 0 M | 1 M | 6 M | 22 M | 33 M | 4 M | 1 M | 0 M | 0 M | 0 M | 0 M |
| 2022-05-16 | 0 M | 0 M | 0 M | 0 M | 0 M | 1 M | 5 M | 37 M | 22 M | 11 M | 0 M | 0 M | 0 M | 0 M | 0 M |
| 2022-05-23 | 0 M | 0 M | 0 M | 0 M | 0 M | 1 M | 5 M | 23 M | 31 M | 5 M | 0 M | 0 M | 0 M | 0 M | 0 M |
| 2022-05-30 | 0 M | 0 M | 0 M | 0 M | 0 M | 1 M | 6 M | 33 M | 17 M | 9 M | 0 M | 0 M | 0 M | 0 M | 0 M |
| 2022-06-06 | 0 M | 0 M | 0 M | 0 M | 0 M | 0 M | 7 M | 18 M | 22 M | 5 M | 0 M | 0 M | 0 M | 0 M | 0 M |
| 2022-06-13 | 0 M | 0 M | 0 M | 0 M | 0 M | 1 M | 3 M | 29 M | 15 M | 5 M | 0 M | 0 M | 0 M | 0 M | 0 M |
| 2022-06-20 | 0 M | 0 M | 0 M | 0 M | 0 M | 0 M | 4 M | 18 M | 19 M | 4 M | 0 M | 0 M | 0 M | 0 M | 0 M |
| 2022-06-27 | 0 M | 0 M | 0 M | 0 M | 0 M | 0 M | 2 M | 19 M | 12 M | 6 M | 0 M | 0 M | 0 M | 0 M | 0 M |
| 2022-07-04 | 0 M | 0 M | 0 M | 0 M | 0 M | 0 M | 7 M | 13 M | 21 M | 4 M | 0 M | 0 M | 0 M | 0 M | 0 M |
| 2022-07-11 | 0 M | 0 M | 0 M | 0 M | 0 M | 0 M | 4 M | 22 M | 15 M | 4 M | 1 M | 0 M | 0 M | 0 M | 0 M |
| 2022-07-18 | 0 M | 0 M | 0 M | 0 M | 0 M | 0 M | 11 M | 17 M | 14 M | 10 M | 0 M | 0 M | 0 M | 0 M | 0 M |
| 2022-07-25 | 0 M | 0 M | 0 M | 0 M | 0 M | 1 M | 2 M | 16 M | 26 M | 4 M | 1 M | 0 M | 0 M | 0 M | 0 M |
| 2022-08-01 | 0 M | 0 M | 0 M | 0 M | 1 M | 0 M | 3 M | 29 M | 16 M | 11 M | 0 M | 0 M | 0 M | 0 M | 0 M |
| 2022-08-08 | 0 M | 0 M | 0 M | 0 M | 0 M | 0 M | 3 M | 17 M | 25 M | 4 M | 0 M | 0 M | 0 M | 0 M | 0 M |
| 2022-08-15 | 0 M | 0 M | 0 M | 0 M | 0 M | 1 M | 3 M | 29 M | 13 M | 7 M | 0 M | 0 M | 0 M | 0 M | 0 M |
| 2022-08-22 | 0 M | 0 M | 0 M | 0 M | 0 M | 0 M | 4 M | 15 M | 18 M | 3 M | 0 M | 0 M | 0 M | 0 M | 0 M |
| 2022-08-29 | 0 M | 0 M | 0 M | 0 M | 0 M | 1 M | 3 M | 22 M | 13 M | 7 M | 0 M | 0 M | 0 M | 0 M | 0 M |

B

**FIG. 8B**

( B )

| | | | | | | | | | | | | | | | |
|---|---|---|---|---|---|---|---|---|---|---|---|---|---|---|---|
| 2022-09-05 | 0 M | 0 M | 0 M | 0 M | 0 M | 0 M | 5 M | 15 M | 18 M | 3 M | 0 M | 0 M | 0 M | 0 M | 0 M |
| 2022-09-12 | 0 M | 0 M | 0 M | 0 M | 0 M | 1 M | 5 M | 22 M | 14 M | 3 M | 1 M | 0 M | 0 M | 0 M | 0 M |
| 2022-09-19 | 0 M | 0 M | 0 M | 0 M | 0 M | 0 M | 3 M | 17 M | 13 M | 8 M | 0 M | 0 M | 0 M | 0 M | 0 M |
| 2022-09-26 | 0 M | 0 M | 0 M | 0 M | 0 M | 1 M | 3 M | 17 M | 21 M | 5 M | 0 M | 0 M | 0 M | 0 M | 0 M |
| 2022-10-03 | 0 M | 0 M | 0 M | 0 M | 0 M | 0 M | 5 M | 24 M | 21 M | 2 M | 0 M | 0 M | 0 M | 0 M | 0 M |
| 2022-10-10 | 0 M | 0 M | 0 M | 0 M | 0 M | 0 M | 3 M | 27 M | 15 M | 2 M | 0 M | 0 M | 0 M | 0 M | 0 M |
| 2022-10-17 | 0 M | 0 M | 0 M | 0 M | 0 M | 1 M | 15 M | 19 M | 14 M | 7 M | 0 M | 0 M | 0 M | 0 M | 0 M |
| 2022-10-24 | 0 M | 0 M | 0 M | 0 M | 0 M | 1 M | 4 M | 16 M | 24 M | 3 M | 0 M | 0 M | 0 M | 0 M | 0 M |
| 2022-10-31 | 0 M | 0 M | 0 M | 0 M | 0 M | 0 M | 4 M | 27 M | 12 M | 7 M | 0 M | 0 M | 0 M | 0 M | 0 M |
| 2022-11-07 | 0 M | 0 M | 0 M | 0 M | 0 M | 0 M | 4 M | 15 M | 21 M | 2 M | 0 M | 0 M | 0 M | 0 M | 0 M |
| 2022-11-14 | 0 M | 0 M | 0 M | 0 M | 0 M | 1 M | 1 M | 26 M | 14 M | 8 M | 0 M | 0 M | 0 M | 0 M | 0 M |
| 2022-11-21 | 0 M | 0 M | 0 M | 0 M | 0 M | 0 M | 4 M | 17 M | 18 M | 3 M | 0 M | 0 M | 0 M | 0 M | 0 M |
| 2022-11-28 | 0 M | 0 M | 0 M | 0 M | 0 M | 1 M | 6 M | 24 M | 9 M | 6 M | 0 M | 0 M | 0 M | 0 M | 0 M |
| 2022-12-05 | 0 M | 0 M | 0 M | 0 M | 0 M | 0 M | 3 M | 13 M | 18 M | 4 M | 0 M | 0 M | 0 M | 0 M | 0 M |
| 2022-12-12 | 0 M | 0 M | 0 M | 0 M | 0 M | 0 M | 2 M | 24 M | 11 M | 2 M | 0 M | 0 M | 0 M | 0 M | 0 M |
| 2022-12-19 | 0 M | 0 M | 0 M | 0 M | 0 M | 0 M | 2 M | 13 M | 10 M | 7 M | 0 M | 0 M | 0 M | 0 M | 0 M |

( C )

**FIG. 8C**

C

| Date | | | | | | | | | | | | | | | |
|---|---|---|---|---|---|---|---|---|---|---|---|---|---|---|---|
| 2022-12-26 | 0 M | 0 M | 0 M | 0 M | 0 M | 0 M | 1 M | 12 M | 17 M | 2 M | 0 M | 0 M | 0 M | 0 M | 0 M |
| 2023-01-02 | 0 M | 0 M | 0 M | 0 M | 0 M | 0 M | 4 M | 18 M | 9 M | 6 M | 0 M | 0 M | 0 M | 0 M | 0 M |
| 2023-01-09 | 0 M | 0 M | 0 M | 0 M | 0 M | 0 M | 2 M | 10 M | 15 M | 2 M | 0 M | 0 M | 0 M | 0 M | 0 M |
| 2023-01-16 | 0 M | 0 M | 0 M | 0 M | 0 M | 0 M | 1 M | 18 M | 11 M | 7 M | 0 M | 0 M | 0 M | 0 M | 0 M |
| 2023-01-23 | 0 M | 0 M | 0 M | 0 M | 0 M | 0 M | 1 M | 12 M | 19 M | 2 M | 0 M | 0 M | 0 M | 0 M | 0 M |
| 2023-01-30 | 0 M | 0 M | 0 M | 0 M | 0 M | 0 M | 2 M | 21 M | 11 M | 6 M | 0 M | 0 M | 0 M | 0 M | 0 M |
| 2023-02-06 | 0 M | 0 M | 0 M | 0 M | 0 M | 0 M | 2 M | 13 M | 18 M | 3 M | 0 M | 0 M | 0 M | 0 M | 0 M |
| 2023-02-13 | 0 M | 0 M | 0 M | 0 M | 0 M | 0 M | 1 M | 20 M | 13 M | 7 M | 0 M | 0 M | 0 M | 0 M | 0 M |
| 2023-02-20 | 0 M | 0 M | 0 M | 0 M | 0 M | 0 M | 2 M | 15 M | 17 M | 3 M | 0 M | 0 M | 0 M | 0 M | 0 M |
| 2023-02-27 | 0 M | 0 M | 0 M | 0 M | 0 M | 0 M | 2 M | 19 M | 11 M | 7 M | 0 M | 0 M | 0 M | 0 M | 0 M |
| 2023-03-06 | 0 M | 0 M | 0 M | 0 M | 0 M | 0 M | 2 M | 13 M | 17 M | 3 M | 0 M | 0 M | 0 M | 0 M | 0 M |
| 2023-03-13 | 0 M | 0 M | 0 M | 0 M | 0 M | 0 M | 2 M | 21 M | 13 M | 3 M | 0 M | 0 M | 0 M | 0 M | 0 M |
| 2023-03-20 | 0 M | 0 M | 0 M | 0 M | 0 M | 0 M | 3 M | 14 M | 11 M | 7 M | 0 M | 0 M | 0 M | 0 M | 0 M |
| 2023-03-27 | 0 M | 0 M | 0 M | 0 M | 0 M | 0 M | 3 M | 12 M | 18 M | 4 M | 0 M | 0 M | 0 M | 0 M | 0 M |
| 2023-04-03 | 0 M | 0 M | 0 M | 0 M | 0 M | 0 M | 2 M | 20 M | 18 M | 2 M | 0 M | 0 M | 0 M | 0 M | 0 M |
| 2023-04-10 | 0 M | 0 M | 0 M | 0 M | 0 M | 0 M | 2 M | 21 M | 11 M | 2 M | 1 M | 0 M | 0 M | 0 M | 0 M |
| 2023-04-17 | 0 M | 0 M | 0 M | 0 M | 0 M | 0 M | 10 M | 14 M | 12 M | 7 M | 0 M | 0 M | 0 M | 0 M | 0 M |
| 2023-04-24 | 0 M | 0 M | 0 M | 0 M | 0 M | 0 M | 2 M | 14 M | 19 M | 3 M | 0 M | 0 M | 0 M | 0 M | 0 M |

D

**FIG. 8D**

(D)

| | | | | | | | | | | | | | | |
|---|---|---|---|---|---|---|---|---|---|---|---|---|---|---|
| 2023-05-01 | 0 M | 0 M | 0 M | 0 M | 0 M | 0 M | 3 M | 21 M | 13 M | 10 M | 0 M | 0 M | 0 M | 0 M | 0 M |
| 2023-05-08 | 0 M | 0 M | 0 M | 0 M | 0 M | 0 M | 3 M | 15 M | 21 M | 2 M | 0 M | 0 M | 0 M | 0 M | 0 M |
| 2023-05-15 | 0 M | 0 M | 0 M | 0 M | 0 M | 0 M | 4 M | 24 M | 12 M | 7 M | 0 M | 0 M | 0 M | 0 M | 0 M |
| 2023-05-22 | 0 M | 0 M | 0 M | 0 M | 0 M | 0 M | 3 M | 14 M | 19 M | 2 M | 0 M | 0 M | 0 M | 0 M | 0 M |
| 2023-05-29 | 0 M | 0 M | 0 M | 0 M | 0 M | 1 M | 3 M | 22 M | 13 M | 6 M | 0 M | 0 M | 0 M | 0 M | 0 M |
| 2023-06-05 | 0 M | 0 M | 0 M | 0 M | 0 M | 0 M | 4 M | 14 M | 19 M | 4 M | 0 M | 0 M | 0 M | 0 M | 0 M |
| 2023-06-12 | 0 M | 0 M | 0 M | 0 M | 0 M | 1 M | 2 M | 24 M | 14 M | 3 M | 1 M | 0 M | 0 M | 0 M | 0 M |
| 2023-06-19 | 0 M | 0 M | 0 M | 0 M | 0 M | 0 M | 3 M | 15 M | 14 M | 8 M | 0 M | 0 M | 0 M | 0 M | 0 M |
| 2023-06-26 | 0 M | 0 M | 0 M | 0 M | 0 M | 1 M | 2 M | 14 M | 20 M | 7 M | 0 M | 0 M | 0 M | 0 M | 0 M |
| 2023-07-03 | 0 M | 0 M | 0 M | 0 M | 0 M | 0 M | 3 M | 22 M | 23 M | 3 M | 0 M | 0 M | 0 M | 0 M | 0 M |
| 2023-07-10 | 0 M | 0 M | 0 M | 0 M | 0 M | 0 M | 4 M | 25 M | 13 M | 3 M | 0 M | 0 M | 0 M | 0 M | 0 M |
| 2023-07-17 | 0 M | 0 M | 0 M | 0 M | 0 M | 0 M | 13 M | 15 M | 16 M | 8 M | 0 M | 0 M | 0 M | 0 M | 0 M |
| 2023-07-24 | 0 M | 0 M | 0 M | 0 M | 0 M | 1 M | 3 M | 18 M | 23 M | 3 M | 0 M | 0 M | 0 M | 0 M | 0 M |
| 2023-07-31 | 0 M | 0 M | 0 M | 0 M | 1 M | 0 M | 3 M | 26 M | 16 M | 9 M | 0 M | 0 M | 0 M | 0 M | 0 M |
| 2023-08-07 | 0 M | 0 M | 0 M | 0 M | 0 M | 0 M | 3 M | 18 M | 25 M | 4 M | 0 M | 0 M | 0 M | 0 M | 0 M |

**FIG. 8E**

900

| | -7_cm | -6_cm | -5_cm | -4_cm | -3_cm | -2_cm | -1_cm | 0_cm | 1_cm | 2_cm | 3_cm | 4_cm | 5_cm | 6_cm | 7_cm |
|---|---|---|---|---|---|---|---|---|---|---|---|---|---|---|---|
| 2022-01-31 | 0 M | 0 M | 0 M | 0 M | 0 M | -1 M | -2 M | -6 M | -15 M | -1 M | -9 M | -1 M | 0 M | 0 M | 0 M |
| 2022-02-07 | 0 M | 0 M | 0 M | 0 M | -1 M | -2 M | -3 M | -14 M | -4 M | -9 M | -1 M | -7 M | 0 M | 0 M | 0 M |
| 2022-02-14 | 0 M | 0 M | 0 M | 0 M | -1 M | -3 M | -2 M | -4 M | -12 M | -1 M | -6 M | -1 M | 0 M | 0 M | 0 M |
| 2022-02-21 | 0 M | 0 M | 0 M | 0 M | 0 M | 0 M | -2 M | -13 M | -12 M | -6 M | 0 M | -9 M | 0 M | 0 M | 0 M |
| 2022-02-28 | 0 M | 0 M | 0 M | 0 M | 0 M | -1 M | -10 M | -21 M | -11 M | 0 M | -12 M | -2 M | 0 M | 0 M | 0 M |
| 2022-03-07 | 0 M | 0 M | 0 M | 0 M | 0 M | -1 M | -17 M | -12 M | -6 M | -8 M | -3 M | -3 M | 0 M | 0 M | 0 M |
| 2022-03-14 | 0 M | 0 M | 0 M | 0 M | 0 M | -2 M | -4 M | -2 M | -5 M | -6 M | -1 M | -12 M | 0 M | 0 M | 0 M |
| 2022-03-21 | 0 M | 0 M | 0 M | 0 M | -1 M | -1 M | -3 M | -7 M | -11 M | -1 M | -12 M | -2 M | 0 M | 0 M | 0 M |
| 2022-03-28 | 0 M | 0 M | 0 M | 0 M | 0 M | -1 M | -2 M | -11 M | -2 M | -12 M | -2 M | -3 M | 0 M | 0 M | 0 M |
| 2022-04-04 | 0 M | 0 M | 0 M | 0 M | 0 M | -2 M | -11 M | -8 M | -13 M | -2 M | -4 M | -6 M | 0 M | 0 M | 0 M |
| 2022-04-11 | 0 M | 0 M | 0 M | 0 M | -2 M | -6 M | -6 M | -15 M | -3 M | -3 M | -7 M | -4 M | 0 M | 0 M | 0 M |
| 2022-04-18 | 0 M | 0 M | 0 M | 0 M | -6 M | -2 M | -2 M | -4 M | -5 M | -8 M | -4 M | -1 M | 0 M | 0 M | 0 M |
| 2022-04-25 | 0 M | 0 M | 0 M | 0 M | -4 M | -1 M | -5 M | -7 M | -14 M | -3 M | -1 M | -1 M | 0 M | 0 M | 0 M |
| 2022-05-02 | 0 M | 0 M | 0 M | 0 M | -2 M | -1 M | -3 M | -16 M | -5 M | -2 M | 0 M | -7 M | 0 M | 0 M | 0 M |

( A )

**FIG. 9A**

(A)

| Date | | | | | | | | | | | | | | | |
|------|---|---|---|---|---|---|---|---|---|---|---|---|---|---|---|
| 2022-05-09 | 0 M | 0 M | 0 M | 0 M | 0 M | -1 M | -12 M | -7 M | -3 M | 0 M | -6 M | -7 M | 0 M | 0 M | 0 M |
| 2022-05-16 | 0 M | 0 M | 0 M | 0 M | -1 M | -8 M | -4 M | -7 M | 0 M | -10 M | -4 M | -1 M | 0 M | 0 M | 0 M |
| 2022-05-23 | 0 M | 0 M | 0 M | 0 M | -1 M | -3 M | -4 M | -2 M | -14 M | -11 M | -1 M | -5 M | 0 M | 0 M | 0 M |
| 2022-05-30 | 0 M | 0 M | 0 M | 0 M | 0 M | -3 M | -3 M | -8 M | -10 M | -2 M | -4 M | -1 M | 0 M | 0 M | 0 M |
| 2022-06-06 | 0 M | 0 M | 0 M | 0 M | -3 M | -4 M | -10 M | -2 M | -6 M | -4 M | -1 M | -1 M | 0 M | 0 M | 0 M |
| 2022-06-13 | 0 M | 0 M | 0 M | 0 M | -2 M | -1 M | -5 M | -6 M | -4 M | -2 M | -1 M | -2 M | 0 M | 0 M | 0 M |
| 2022-06-20 | 0 M | 0 M | 0 M | 0 M | -1 M | -3 M | -4 M | -7 M | -2 M | -2 M | -2 M | -1 M | 0 M | 0 M | 0 M |
| 2022-06-27 | 0 M | 0 M | 0 M | 0 M | -2 M | 0 M | -5 M | -4 M | -8 M | -3 M | -1 M | 0 M | 0 M | 0 M | 0 M |
| 2022-07-04 | 0 M | 0 M | 0 M | 0 M | 0 M | -1 M | -4 M | -9 M | -3 M | -3 M | 0 M | -4 M | 0 M | 0 M | 0 M |
| 2022-07-11 | 0 M | 0 M | 0 M | 0 M | -1 M | -6 M | -3 M | -5 M | -3 M | -1 M | -5 M | -4 M | 0 M | 0 M | 0 M |
| 2022-07-18 | 0 M | 0 M | 0 M | 0 M | -8 M | -1 M | -7 M | -2 M | -2 M | -4 M | -2 M | -1 M | 0 M | 0 M | 0 M |
| 2022-07-25 | 0 M | 0 M | 0 M | 0 M | -1 M | -3 M | -2 M | -4 M | -12 M | -2 M | -1 M | 0 M | 0 M | 0 M | 0 M |
| 2022-08-01 | 0 M | 0 M | 0 M | 0 M | 0 M | 0 M | -1 M | -13 M | -5 M | -2 M | -1 M | -3 M | 0 M | 0 M | 0 M |
| 2022-08-08 | 0 M | 0 M | 0 M | 0 M | 0 M | -2 M | -12 M | -7 M | -3 M | 0 M | -3 M | -2 M | 0 M | 0 M | 0 M |
| 2022-08-15 | 0 M | 0 M | 0 M | 0 M | -1 M | -3 M | -7 M | -3 M | -1 M | -4 M | -3 M | -1 M | 0 M | 0 M | 0 M |

(B)

**FIG. 9B**

B

| Date | | | | | | | | | | | | | | |
|---|---|---|---|---|---|---|---|---|---|---|---|---|---|---|
| 2022-08-22 | 0 M | 0 M | 0 M | 0 M | -3 M | -4 M | -2 M | -5 M | -4 M | -3 M | -2 M | -1 M | 0 M | 0 M | 0 M |
| 2022-08-29 | 0 M | 0 M | 0 M | 0 M | -4 M | 0 M | -6 M | -6 M | -13 M | -2 M | -1 M | -3 M | 0 M | 0 M | 0 M |
| 2022-09-05 | 0 M | 0 M | 0 M | 0 M | 0 M | -3 M | -7 M | -14 M | -3 M | -2 M | -3 M | 0 M | 0 M | 0 M | 0 M |
| 2022-09-12 | 0 M | 0 M | 0 M | 0 M | -1 M | -5 M | -15 M | -4 M | -2 M | -4 M | 0 M | -2 M | 0 M | 0 M | 0 M |
| 2022-09-19 | 0 M | 0 M | 0 M | 0 M | -5 M | -11 M | -3 M | -2 M | -5 M | -1 M | -2 M | -2 M | 0 M | 0 M | 0 M |
| 2022-09-26 | 0 M | 0 M | 0 M | 0 M | -10 M | -2 M | -2 M | -6 M | -5 M | -2 M | -3 M | -1 M | 0 M | 0 M | 0 M |
| 2022-10-03 | 0 M | 0 M | 0 M | 0 M | -1 M | -2 M | -8 M | -3 M | -3 M | -3 M | -1 M | -3 M | 0 M | 0 M | 0 M |
| 2022-10-10 | 0 M | 0 M | 0 M | 0 M | -3 M | -5 M | -3 M | -4 M | -3 M | -2 M | -3 M | -2 M | 0 M | 0 M | 0 M |
| 2022-10-17 | 0 M | 0 M | 0 M | 0 M | -2 M | -2 M | -3 M | -5 M | -3 M | -3 M | -1 M | -1 M | 0 M | 0 M | 0 M |
| 2022-10-24 | 0 M | 0 M | 0 M | 0 M | -1 M | -2 M | -4 M | -7 M | -10 M | -2 M | -1 M | -1 M | 0 M | 0 M | 0 M |
| 2022-10-31 | 0 M | 0 M | 0 M | 0 M | -2 M | -3 M | -6 M | -7 M | -3 M | -2 M | -1 M | -2 M | 0 M | 0 M | 0 M |
| 2022-11-07 | 0 M | 0 M | 0 M | 0 M | -2 M | -5 M | -6 M | -7 M | -3 M | -2 M | -2 M | -1 M | 0 M | 0 M | 0 M |
| 2022-11-14 | 0 M | 0 M | 0 M | 0 M | -3 M | -3 M | -5 M | -4 M | -6 M | -2 M | -1 M | -3 M | 0 M | 0 M | 0 M |
| 2022-11-21 | 0 M | 0 M | 0 M | 0 M | -4 M | -1 M | -6 M | -5 M | -10 M | -1 M | -3 M | -1 M | 0 M | 0 M | 0 M |
| 2022-11-28 | 0 M | 0 M | 0 M | 0 M | -2 M | -3 M | -15 M | -11 M | -10 M | -3 M | -1 M | -3 M | 0 M | 0 M | 0 M |

C

**FIG. 9C**

C

| | | | | | | | | | | | | | | | |
|---|---|---|---|---|---|---|---|---|---|---|---|---|---|---|---|
| 2022-12-05 | 0 M | 0 M | 0 M | 0 M | -1 M | -3 M | -7 M | -6 M | -9 M | -4 M | -6 M | -4 M | 0 M | 0 M | 0 M |
| 2022-12-12 | 0 M | 0 M | 0 M | 0 M | -2 M | -7 M | -3 M | -9 M | -6 M | -6 M | -6 M | -2 M | 0 M | 0 M | 0 M |
| 2022-12-19 | 0 M | 0 M | 0 M | 0 M | -2 M | -5 M | -7 M | -6 M | -14 M | -12 M | -3 M | -2 M | 0 M | 0 M | 0 M |
| 2022-12-26 | 0 M | 0 M | 0 M | 0 M | -1 M | -6 M | -4 M | -15 M | -11 M | -3 M | -2 M | -2 M | 0 M | 0 M | 0 M |
| 2023-01-02 | 0 M | 0 M | 0 M | 0 M | -1 M | -11 M | -6 M | -12 M | -3 M | -4 M | -2 M | -6 M | 0 M | 0 M | 0 M |
| 2023-01-09 | 0 M | 0 M | 0 M | 0 M | -17 M | -7 M | -2 M | -1 M | -3 M | -2 M | -5 M | 0 M | 0 M | 0 M | 0 M |
| 2023-01-16 | 0 M | 0 M | 0 M | 0 M | -2 M | -1 M | -2 M | -5 M | -1 M | -23 M | -2 M | -5 M | 0 M | 0 M | 0 M |
| 2023-01-23 | 0 M | 0 M | 0 M | 0 M | -1 M | 0 M | -5 M | -2 M | -23 M | -1 M | -5 M | -1 M | 0 M | 0 M | 0 M |
| 2023-01-30 | 0 M | 0 M | 0 M | 0 M | 0 M | -2 M | -1 M | -25 M | -2 M | -3 M | -4 M | -1 M | 0 M | 0 M | 0 M |
| 2023-02-06 | 0 M | 0 M | 0 M | 0 M | -2 M | -1 M | -4 M | -4 M | -4 M | -2 M | -5 M | -6 M | 0 M | 0 M | 0 M |
| 2023-02-13 | 0 M | 0 M | 0 M | 0 M | 0 M | -3 M | -1 M | -9 M | -2 M | -3 M | -3 M | 0 M | 0 M | 0 M | 0 M |
| 2023-02-20 | 0 M | 0 M | 0 M | 0 M | -1 M | -1 M | -7 M | -4 M | -24 M | -5 M | -1 M | -3 M | 0 M | 0 M | 0 M |
| 2023-02-27 | 0 M | 0 M | 0 M | 0 M | 0 M | 0 M | -5 M | -20 M | -6 M | -1 M | -3 M | -3 M | 0 M | 0 M | 0 M |
| 2023-03-06 | 0 M | 0 M | 0 M | 0 M | -1 M | -18 M | -3 M | -8 M | -5 M | -3 M | -4 M | -4 M | 0 M | 0 M | 0 M |
| 2023-03-13 | 0 M | 0 M | 0 M | 0 M | 0 M | -3 M | -4 M | -4 M | -5 M | -5 M | -5 M | -2 M | 0 M | 0 M | 0 M |
| 2023-03-20 | 0 M | 0 M | 0 M | 0 M | -1 M | -1 M | -1 M | -8 M | -7 M | -7 M | -3 M | -1 M | 0 M | 0 M | 0 M |

D

**FIG. 9D**

D

| Date | | | | | | | | | | | | | | | |
|---|---|---|---|---|---|---|---|---|---|---|---|---|---|---|---|
| 2023-03-27 | 0 M | 0 M | 0 M | 0 M | -1 M | -1 M | -4 M | -15 M | -4 M | -5 M | -1 M | -1 M | 0 M | 0 M | 0 M |
| 2023-04-03 | 0 M | 0 M | 0 M | 0 M | 0 M | -1 M | -9 M | -14 M | -11 M | -1 M | -1 M | 0 M | 0 M | 0 M | 0 M |
| 2023-04-10 | 0 M | 0 M | 0 M | 0 M | 0 M | -1 M | -9 M | -6 M | -2 M | -1 M | 0 M | -2 M | 0 M | 0 M | 0 M |
| 2023-04-17 | 0 M | 0 M | 0 M | 0 M | -1 M | -9 M | -6 M | -4 M | -2 M | -1 M | -2 M | -1 M | 0 M | 0 M | 0 M |
| 2023-04-24 | 0 M | 0 M | 0 M | 0 M | -2 M | -1 M | -3 M | -7 M | -7 M | -2 M | -1 M | -4 M | 0 M | 0 M | 0 M |
| 2023-05-01 | 0 M | 0 M | 0 M | 0 M | 0 M | 0 M | -3 M | -10 M | -5 M | -9 M | -3 M | -2 M | 0 M | 0 M | 0 M |
| 2023-05-08 | 0 M | 0 M | 0 M | 0 M | 0 M | -1 M | -7 M | -6 M | -10 M | -3 M | -2 M | -2 M | 0 M | 0 M | 0 M |
| 2023-05-15 | 0 M | 0 M | 0 M | 0 M | 0 M | -6 M | -3 M | -14 M | -6 M | -2 M | -1 M | -1 M | 0 M | 0 M | 0 M |
| 2023-05-22 | 0 M | 0 M | 0 M | 0 M | -1 M | -1 M | -6 M | -6 M | -3 M | -4 M | -1 M | 0 M | 0 M | 0 M | 0 M |
| 2023-05-29 | 0 M | 0 M | 0 M | 0 M | 0 M | -4 M | -5 M | -11 M | -4 M | -1 M | -1 M | -2 M | 0 M | 0 M | 0 M |
| 2023-06-05 | 0 M | 0 M | 0 M | 0 M | -3 M | 0 M | -10 M | -8 M | -4 M | -1 M | -1 M | -2 M | 0 M | 0 M | 0 M |

E

**FIG. 9E**

E

↓

| | | | | | | | | | | | | | | | |
|---|---|---|---|---|---|---|---|---|---|---|---|---|---|---|---|
| 2023-06-12 | 0 M | 0 M | 0 M | 0 M | -2 M | -3 M | -8 M | -15 M | -2 M | -6 M | 0 M | 0 M | 0 M | 0 M | 0 M |
| 2023-06-19 | 0 M | 0 M | 0 M | 0 M | -2 M | -1 M | -7 M | -4 M | -4 M | -2 M | -1 M | 0 M | 0 M | 0 M | 0 M |
| 2023-06-26 | 0 M | 0 M | 0 M | 0 M | 0 M | -4 M | -4 M | -5 M | -9 M | -1 M | -1 M | 0 M | 0 M | 0 M | 0 M |
| 2023-07-03 | 0 M | 0 M | 0 M | 0 M | -2 M | 0 M | -2 M | -11 M | -2 M | -1 M | 0 M | -2 M | 0 M | 0 M | 0 M |
| 2023-07-10 | 0 M | 0 M | 0 M | 0 M | 0 M | -2 M | -8 M | -5 M | -3 M | 0 M | 0 M | 0 M | 0 M | 0 M | 0 M |
| 2023-07-17 | 0 M | 0 M | 0 M | 0 M | -1 M | -6 M | -2 M | -6 M | -5 M | -2 M | -1 M | -1 M | 0 M | 0 M | 0 M |
| 2023-07-24 | 0 M | 0 M | 0 M | 0 M | -4 M | -1 M | -5 M | -6 M | -4 M | -2 M | -3 M | 0 M | 0 M | 0 M | 0 M |
| 2023-07-31 | 0 M | 0 M | 0 M | 0 M | 0 M | 0 M | -5 M | -3 M | -4 M | -3 M | -1 M | 0 M | 0 M | 0 M | 0 M |
| 2023-08-07 | 0 M | 0 M | 0 M | 0 M | 0 M | -1 M | -5 M | -9 M | -5 M | -2 M | -1 M | -2 M | 0 M | 0 M | 0 M |

**FIG. 9F**

1000

Proprietary model pool

Regression model pool

Invoice data

Invoice payment date model

Sales data

Future sales or expense model

Data Source 108

Deduction data

Deduction claim rate model

SO-PO data

SO-PO model

Credit memo data

Credit application model

M1

M2

M3

M4

M k-3

M k-2

M k-1

M k

M n-3

M n-2

M n-1

M n

Model selection

Regression model for short and medium term

Forecast: Advanced stacked forecast algorithm (ASFA)

Bank model for long term

Bank data

Bank model

**FIG. 10**

**FIG. 11**

1200

| | 1_inv | 0_inv | 1_inv | 1_so | 0_so | 1_so | 0-fs-inv | 1-fs-cm | 0-fs-pd | 1_ded | 0_ded | 1_ded | 1_cm | 0_cm | 1_cm | BankCash |
|---|---|---|---|---|---|---|---|---|---|---|---|---|---|---|---|---|
| 2022-01-31 | 4 M | 49 M | 27 M | 3 M | 36 M | 21 M | 0 M | 0 M | 4 M | 0 M | -5 M | -3 M | -2 M | -6 M | -15 M | 80 M |
| 2022-02-07 | 10 M | 32 M | 42 M | 7 M | 24 M | 31 M | 0 M | -1 M | 2 M | -1 M | -3 M | -4 M | -3 M | -14 M | -4 M | 109 M |
| 2022-02-14 | 8 M | 46 M | 26 M | 6 M | 34 M | 20 M | 0 M | -1 M | 3 M | -1 M | -5 M | -3 M | -2 M | -4 M | -12 M | 31 M |
| 2022-02-21 | 9 M | 32 M | 47 M | 7 M | 24 M | 35 M | 0 M | -1 M | 2 M | -1 M | -3 M | -5 M | -2 M | -13 M | -12 M | 64 M |
| 2022-02-28 | 7 M | 53 M | 34 M | 6 M | 40 M | 25 M | 0 M | -1 M | 4 M | -1 M | -5 M | -3 M | -10 M | -21 M | -11 M | 54 M |
| 2022-03-07 | 9 M | 37 M | 52 M | 7 M | 28 M | 39 M | 0 M | -1 M | 3 M | -1 M | -4 M | -5 M | -17 M | -12 M | -6 M | 64 M |
| 2022-03-14 | 6 M | 59 M | 34 M | 5 M | 44 M | 25 M | 0 M | -1 M | 4 M | -1 M | -6 M | -3 M | -4 M | -2 M | -5 M | 54 M |
| 2022-03-21 | 8 M | 37 M | 53 M | 6 M | 28 M | 40 M | 0 M | -1 M | 3 M | -1 M | -4 M | -5 M | -3 M | -7 M | -11 M | 72 M |
| 2022-03-28 | 3 M | 60 M | 34 M | 2 M | 45 M | 25 M | 0 M | 0 M | 5 M | 0 M | -6 M | -3 M | -2 M | -11 M | -2 M | 55 M |
| 2022-04-04 | 25 M | 36 M | 47 M | 19 M | 27 M | 35 M | 0 M | -3 M | 3 M | -3 M | -4 M | -5 M | -11 M | -8 M | -13 M | 47 M |
| 2022-04-11 | 6 M | 53 M | 32 M | 4 M | 40 M | 24 M | 0 M | -1 M | 4 M | -1 M | -5 M | -3 M | -6 M | -15 M | -3 M | 36 M |
| 2022-04-18 | 23 M | 34 M | 26 M | 18 M | 26 M | 20 M | 0 M | -3 M | 3 M | -2 M | -3 M | -3 M | -2 M | -4 M | -5 M | 46 M |
| 2022-04-25 | 4 M | 29 M | 42 M | 3 M | 22 M | 31 M | 0 M | 0 M | 2 M | 0 M | -3 M | -4 M | -5 M | -7 M | -14 M | 44 M |
| 2022-05-02 | 7 M | 44 M | 26 M | 5 M | 33 M | 19 M | 0 M | -1 M | 3 M | -1 M | -4 M | -3 M | -3 M | -16 M | -5 M | 43 M |

( A )

**FIG. 12A**

|  | | | | | | | | | | | | | | | |
|---|---|---|---|---|---|---|---|---|---|---|---|---|---|---|---|
| 2022-05-09 | 7 M | 29 M | 44 M | 6 M | 22 M | 33 M | 0 M | -1 M | 2 M | -1 M | -3 M | -4 M | -12 M | -7 M | -3 M | 43 M |
| 2022-05-16 | 6 M | 49 M | 29 M | 5 M | 37 M | 22 M | 0 M | -1 M | 4 M | -1 M | -5 M | -3 M | -4 M | -7 M | 0 M | 34 M |
| 2022-05-23 | 6 M | 31 M | 41 M | 5 M | 23 M | 31 M | 0 M | -1 M | 2 M | -1 M | -3 M | -4 M | -4 M | -2 M | -14 M | 33 M |
| 2022-05-30 | 8 M | 45 M | 23 M | 6 M | 33 M | 17 M | 0 M | -1 M | 3 M | -1 M | -4 M | -2 M | -3 M | -8 M | -10 M | 69 M |
| 2022-06-06 | 9 M | 25 M | 30 M | 7 M | 18 M | 22 M | 0 M | -1 M | 2 M | -1 M | -2 M | -3 M | -10 M | -2 M | -6 M | 68 M |
| 2022-06-13 | 3 M | 38 M | 21 M | 3 M | 29 M | 15 M | 0 M | 0 M | 3 M | 0 M | -4 M | -2 M | -5 M | -6 M | -4 M | 35 M |
| 2022-06-20 | 5 M | 24 M | 25 M | 4 M | 18 M | 19 M | 0 M | -1 M | 2 M | 0 M | -2 M | -2 M | -4 M | -7 M | -2 M | 53 M |
| 2022-06-27 | 3 M | 25 M | 16 M | 2 M | 19 M | 12 M | 0 M | 0 M | 2 M | 0 M | -2 M | -2 M | -5 M | -4 M | -8 M | 39 M |
| 2022-07-04 | 10 M | 18 M | 28 M | 7 M | 13 M | 21 M | 0 M | -1 M | 1 M | -1 M | -2 M | -3 M | -4 M | -9 M | -3 M | 37 M |
| 2022-07-11 | 5 M | 30 M | 19 M | 4 M | 22 M | 15 M | 0 M | -1 M | 2 M | 0 M | -3 M | -2 M | -3 M | -5 M | -3 M | 55 M |
| 2022-07-18 | 14 M | 22 M | 19 M | 11 M | 17 M | 14 M | 0 M | -2 M | 2 M | -1 M | -2 M | -2 M | -7 M | -2 M | -2 M | 40 M |
| 2022-07-25 | 3 M | 22 M | 35 M | 2 M | 16 M | 26 M | 0 M | 0 M | 2 M | 0 M | -2 M | -3 M | -2 M | -4 M | -12 M | 36 M |
| 2022-08-01 | 4 M | 38 M | 21 M | 3 M | 29 M | 16 M | 0 M | 0 M | 3 M | 0 M | -4 M | -2 M | -1 M | -13 M | -5 M | 41 M |
| 2022-08-08 | 4 M | 23 M | 34 M | 3 M | 17 M | 25 M | 0 M | 0 M | 2 M | 0 M | -2 M | -3 M | -12 M | -7 M | -3 M | 48 M |
| 2022-08-15 | 4 M | 39 M | 18 M | 3 M | 29 M | 13 M | 0 M | 0 M | 3 M | 0 M | -4 M | -2 M | -7 M | -3 M | -1 M | 31 M |

**FIG. 12B**

B

| Date | | | | | | | | | | | | | | | | | |
|---|---|---|---|---|---|---|---|---|---|---|---|---|---|---|---|---|---|
| 2022-08-22 | 6 M | 20 M | 24 M | 4 M | 15 M | 18 M | | 0 M | -1 M | 2 M | -1 M | -2 M | -2 M | -2 M | -5 M | -4 M | 30 M |
| 2022-08-29 | 4 M | 29 M | 17 M | 3 M | 22 M | 13 M | | 0 M | 0 M | 2 M | 0 M | -3 M | -2 M | -6 M | -6 M | -13 M | 55 M |
| 2022-09-05 | 6 M | 20 M | 23 M | 5 M | 15 M | 18 M | | 0 M | -1 M | 2 M | -1 M | -2 M | -2 M | -7 M | -14 M | -3 M | 65 M |
| 2022-09-12 | 7 M | 29 M | 18 M | 5 M | 22 M | 14 M | | 0 M | -1 M | 2 M | -1 M | -3 M | -2 M | -15 M | -4 M | -2 M | 28 M |
| 2022-09-19 | 4 M | 23 M | 17 M | 3 M | 17 M | 13 M | | 0 M | 0 M | 2 M | 0 M | -2 M | -2 M | -3 M | -2 M | -5 M | 29 M |
| 2022-09-26 | 4 M | 23 M | 28 M | 3 M | 17 M | 21 M | | 0 M | 0 M | 2 M | 0 M | -2 M | -3 M | -2 M | -6 M | -5 M | 28 M |
| 2022-10-03 | 7 M | 32 M | 29 M | 5 M | 24 M | 21 M | | 0 M | -1 M | 2 M | -1 M | -3 M | -3 M | -8 M | -3 M | -3 M | 46 M |
| 2022-10-10 | 5 M | 36 M | 21 M | 3 M | 27 M | 15 M | | 0 M | -1 M | 3 M | 0 M | -4 M | -2 M | -3 M | -4 M | -3 M | 37 M |
| 2022-10-17 | 20 M | 25 M | 19 M | 15 M | 19 M | 14 M | | 0 M | -2 M | 2 M | -2 M | -3 M | -2 M | -3 M | -5 M | -3 M | 34 M |
| 2022-10-24 | 5 M | 21 M | 32 M | 4 M | 16 M | 24 M | | 0 M | -1 M | 2 M | -1 M | -2 M | -3 M | -4 M | -7 M | -10 M | 27 M |
| 2022-10-31 | 5 M | 36 M | 16 M | 4 M | 27 M | 12 M | | 0 M | -1 M | 3 M | 0 M | -4 M | -2 M | -6 M | -7 M | -3 M | 28 M |
| 2022-11-07 | 5 M | 20 M | 28 M | 4 M | 15 M | 21 M | | 0 M | -1 M | 1 M | -1 M | -2 M | -3 M | -6 M | -7 M | -3 M | 55 M |
| 2022-11-14 | 2 M | 34 M | 19 M | 1 M | 26 M | 14 M | | 0 M | 0 M | 3 M | 0 M | -3 M | -2 M | -5 M | -4 M | -6 M | 41 M |
| 2022-11-21 | 5 M | 22 M | 25 M | 4 M | 17 M | 18 M | | 0 M | -1 M | 2 M | 0 M | -2 M | -2 M | -6 M | -5 M | -10 M | 37 M |
| 2022-11-28 | 8 M | 32 M | 12 M | 6 M | 24 M | | 9 M | 0 M | -1 M | 2 M | -1 M | -3 M | -1 M | -15 M | -11 M | -10 M | 85 M |

C

**FIG. 12C**

C

| | | | | | | | | | | | | | | | | |
|---|---|---|---|---|---|---|---|---|---|---|---|---|---|---|---|---|
| 2022-12-05 | 4 M | 17 M | 23 M | 3 M | | 13 M | 18 M | 0 M | -1 M | 1 M | 0 M | -2 M | -2 M | -7 M | -6 M | -9 M | 82 M |
| 2022-12-12 | 3 M | 32 M | 15 M | 2 M | | 24 M | 11 M | 0 M | 0 M | 2 M | 0 M | -3 M | -2 M | -3 M | -9 M | -6 M | 41 M |
| 2022-12-19 | 3 M | 18 M | 14 M | 2 M | | 13 M | 10 M | 0 M | 0 M | 1 M | 0 M | -2 M | -1 M | -7 M | -6 M | -14 M | 67 M |
| 2022-12-26 | 2 M | 16 M | 23 M | 1 M | | 12 M | 17 M | 0 M | 0 M | 1 M | 0 M | -2 M | -2 M | -4 M | -15 M | -11 M | 15 M |
| 2023-01-02 | 5 M | 24 M | 12 M | 4 M | | 18 M | 9 M | 0 M | -1 M | 2 M | 0 M | -2 M | -1 M | -6 M | -12 M | -3 M | 105 M |
| 2023-01-09 | 3 M | 14 M | 20 M | 2 M | | 10 M | 15 M | 0 M | 0 M | 1 M | 0 M | -1 M | -2 M | -2 M | -1 M | -3 M | 58 M |
| 2023-01-16 | 1 M | 24 M | 14 M | 1 M | | 18 M | 11 M | 0 M | 0 M | 2 M | 0 M | -2 M | -1 M | -2 M | -5 M | -1 M | 45 M |
| 2023-01-23 | 2 M | 16 M | 25 M | 1 M | | 12 M | 19 M | 0 M | 0 M | 1 M | 0 M | -2 M | -2 M | -5 M | -2 M | -23 M | 60 M |
| 2023-01-30 | 3 M | 29 M | 15 M | 2 M | | 21 M | 11 M | 0 M | 0 M | 2 M | 0 M | -3 M | -1 M | -1 M | -25 M | -2 M | 92 M |
| 2023-02-06 | 2 M | 17 M | 24 M | 2 M | | 13 M | 18 M | 0 M | 0 M | 1 M | 0 M | -2 M | -2 M | -4 M | -4 M | -4 M | 51 M |
| 2023-02-13 | 2 M | 27 M | 17 M | 1 M | | 20 M | 13 M | 0 M | 0 M | 2 M | 0 M | -3 M | -2 M | -1 M | -9 M | -2 M | 35 M |
| 2023-02-20 | 2 M | 20 M | 23 M | 2 M | | 15 M | 17 M | 0 M | 0 M | 1 M | 0 M | -2 M | -2 M | -7 M | -4 M | -24 M | 33 M |
| 2023-02-27 | 3 M | 25 M | 15 M | 2 M | | 19 M | 11 M | 0 M | 0 M | 2 M | 0 M | -2 M | -1 M | -5 M | -20 M | -6 M | 45 M |
| 2023-03-06 | 3 M | 17 M | 23 M | 2 M | | 13 M | 17 M | 0 M | 0 M | 1 M | 0 M | -2 M | -2 M | -3 M | -8 M | -5 M | 76 M |
| 2023-03-13 | 3 M | 28 M | 18 M | 2 M | | 21 M | 13 M | 0 M | 0 M | 2 M | 0 M | -3 M | -2 M | -4 M | -4 M | -5 M | 30 M |

D

**FIG. 12D**

| | | | | | | | | | | | | | | | | |
|---|---|---|---|---|---|---|---|---|---|---|---|---|---|---|---|---|
| 2023-03-20 | 4 M | 18 M | 14 M | 3 M | 14 M | 11 M | 0 M | 0 M | 1 M | 0 M | -2 M | -1 M | -1 M | -8 M | -7 M | 53 M |
| 2023-03-27 | 4 M | 15 M | 24 M | 3 M | 12 M | 18 M | 0 M | 0 M | 1 M | 0 M | -2 M | -2 M | -4 M | -15 M | -4 M | 39 M |
| 2023-04-03 | 2 M | 26 M | 24 M | 2 M | 20 M | 18 M | 0 M | 0 M | 2 M | 0 M | -3 M | -2 M | -9 M | -14 M | -11 M | 34 M |
| 2023-04-10 | 3 M | 28 M | 15 M | 2 M | 21 M | 11 M | 0 M | 0 M | 2 M | 0 M | -3 M | -1 M | -9 M | -6 M | -2 M | 68 M |
| 2023-04-17 | 13 M | 19 M | 16 M | 10 M | 14 M | 12 M | 0 M | -1 M | 1 M | -1 M | -2 M | -2 M | -6 M | -4 M | -2 M | 37 M |
| 2023-04-24 | 3 M | 19 M | 26 M | 2 M | 14 M | 19 M | 0 M | 0 M | 1 M | 0 M | -2 M | -3 M | -3 M | -7 M | -7 M | 67 M |
| 2023-05-01 | 4 M | 28 M | 18 M | 3 M | 21 M | 13 M | 0 M | 0 M | 2 M | 0 M | -3 M | -2 M | -3 M | -10 M | -5 M | 28 M |
| 2023-05-08 | 3 M | 20 M | 28 M | 3 M | 15 M | 21 M | 0 M | 0 M | 1 M | 0 M | -2 M | -3 M | -7 M | -6 M | -10 M | 39 M |
| 2023-05-15 | 5 M | 32 M | 17 M | 4 M | 24 M | 12 M | 0 M | -1 M | 2 M | 0 M | -3 M | -2 M | -3 M | -14 M | -6 M | 26 M |
| 2023-05-22 | 3 M | 18 M | 26 M | 3 M | 14 M | 19 M | 0 M | 0 M | 1 M | 0 M | -2 M | -3 M | -6 M | -6 M | -3 M | 38 M |
| 2023-05-29 | 4 M | 29 M | 17 M | 3 M | 22 M | 13 M | 0 M | 0 M | 2 M | 0 M | -3 M | -2 M | -5 M | -11 M | -4 M | 29 M |

**FIG. 12E**

E

| | | | | | | | | | | | | | | | | |
|---|---|---|---|---|---|---|---|---|---|---|---|---|---|---|---|---|
| 2023-06-05 | 5 M | 19 M | 25 M | 4 M | 14 M | 19 M | 0 M | -1 M | 1 M | -1 M | -2 M | -3 M | -10 M | -8 M | -4 M | 45 M |
| 2023-06-12 | 3 M | 32 M | 19 M | 2 M | 24 M | 14 M | 0 M | 0 M | 2 M | 0 M | -3 M | -2 M | -8 M | -15 M | -2 M | 30 M |
| 2023-06-19 | 3 M | 21 M | 18 M | 3 M | 15 M | 14 M | 0 M | 0 M | 2 M | 0 M | -2 M | -2 M | -7 M | -4 M | -4 M | 14 M |
| 2023-06-26 | 3 M | 19 M | 27 M | 2 M | 14 M | 20 M | 0 M | 0 M | 1 M | 0 M | -2 M | -3 M | -4 M | -5 M | -9 M | 21 M |
| 2023-07-03 | 4 M | 29 M | 31 M | 3 M | 22 M | 23 M | 0 M | 0 M | 2 M | 0 M | -3 M | -3 M | -2 M | -11 M | -2 M | 53 M |
| 2023-07-10 | 5 M | 33 M | 18 M | 4 M | 25 M | 13 M | 0 M | -1 M | 2 M | -1 M | -3 M | -2 M | -8 M | -5 M | -3 M | 40 M |
| 2023-07-17 | 17 M | 20 M | 21 M | 13 M | 15 M | 16 M | 0 M | -2 M | 2 M | -2 M | -2 M | -2 M | -2 M | -6 M | -5 M | 26 M |
| 2023-07-24 | 4 M | 24 M | 31 M | 3 M | 18 M | 23 M | 0 M | 0 M | 2 M | 0 M | -2 M | -3 M | -5 M | -6 M | -4 M | 22 M |
| 2023-07-31 | 4 M | 34 M | 21 M | 3 M | 26 M | 16 M | 0 M | 0 M | 3 M | 0 M | -3 M | -2 M | -5 M | -3 M | -4 M | 44 M |
| 2023-08-07 | 4 M | 24 M | 33 M | 3 M | 18 M | 25 M | 0 M | 0 M | 2 M | 0 M | -2 M | -3 M | -5 M | -9 M | -5 M | 46 M |

**FIG. 12F**

1300

**FIG. 13**

1400

Accuracy comparison across different models

◆ ASFA ● Alternate week ⬟ Aging report

**FIG. 14**

1500

| OBTAIN DATA ASSOCIATED WITH ONE OR MORE BUSINESS UNITS FROM ONE OR MORE DATA SOURCES | 1502 |

| PRE-PROCESS THE DATA TO GENERATE PRE-PROCESSED DATA | 1504 |

| DETERMINE ONE OR MORE FEATURES ASSOCIATED WITH ONE OR MORE FINANCIAL INFORMATION FOR ONE OR MORE HORIZONS BASED ON THE PRE-PROCESSED DATA USING A PLURALITY OF INPUT ARTIFICIAL INTELLIGENCE (AI) MODELS | 1506 |

| GENERATE ONE OR MORE FEATURE COMBINATIONS BY INTEGRATING THE ONE OR MORE FEATURES ASSOCIATED WITH ONE OR MORE FINANCIAL INFORMATION, FOR EACH HORIZON OF THE ONE OR MORE HORIZONS | 1508 |

| GENERATE ONE OR MORE FORECASTS FOR EACH HORIZON FOR A PRE-DETERMINED TIME INTERVAL, USING A STACKED AI MODEL INCLUDING ONE OR MORE FORECASTING MODELS | 1510 |

| PROVIDE THE GENERATED ONE OR MORE FORECASTS FOR THE CASH FLOW OF THE ONE OR MORE BUSINESS UNITS, AS AN OUTPUT, TO THE ONE OR MORE USERS ON ONE OR MORE USER INTERFACES ASSOCIATED WITH ONE OR MORE ELECTRONIC DEVICES ASSOCIATED WITH THE ONE OR MORE USERS | 1512 |

| RE-TRAIN THE ONE OR MORE FORECASTING MODELS OF THE STACKED AI MODEL BY ADJUSTING ONE OR MORE VALUES OF ONE OR MORE PARAMETERS, WHEN AN ACCURACY OF THE ONE OR MORE FORECASTING MODELS OF THE STACKED AI MODEL, IS BELOW A PREDETERMINED ACCURACY THRESHOLD VALUE | 1514 |

**FIG. 15**

Europäisches
Patentamt
European
Patent Office
Office européen
des brevets

# EUROPEAN SEARCH REPORT

**Application Number**

EP 25 22 7149

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/386308 A1 (TZUR ANAT PARUSH [IL] ET AL) 21 November 2024 (2024-11-21)<br>* paragraph [0025] *<br>* paragraph [0036] *<br>* paragraph [0038] *<br>* paragraph [0042] *<br>* paragraph [0046] - paragraph [0048] *<br>* paragraph [0050] - paragraph [0051] *<br>* paragraph [0054] - paragraph [0055] *<br>* paragraph [0058] *<br>----- | 1-15 | INV.<br>G06Q10/04<br>G06N20/00<br>G06Q40/12 |
| A | US 2022/101375 A1 (MORENO JOSE [US] ET AL) 31 March 2022 (2022-03-31)<br>* paragraph [0034] *<br>* paragraph [0067] *<br>----- | 1-15 | |
| A | US 2021/042581 A1 (KURSUN EREN [US]) 11 February 2021 (2021-02-11)<br>* paragraph [0047] - paragraph [0049] *<br>* figure 3 *<br>----- | 1-15 | |
| A | US 2023/004873 A1 (LOCKETT ALAN JUSTIN [US] ET AL) 5 January 2023 (2023-01-05)<br>* paragraph [0099] *<br>----- | 1-15 | **TECHNICAL FIELDS SEARCHED (IPC)**<br>G06Q<br>G06E<br>G06N |
| A | TAO ZHE ET AL: "Class Incremental Learning for Light-Weighted Networks", IEEE TRANSACTIONS ON CIRCUITS AND SYSTEMS FOR VIDEO TECHNOLOGY, IEEE, USA, vol. 34, no. 12, 20 July 2024 (2024-07-20), pages 12210-12220, XP011995311, ISSN: 1051-8215, DOI: 10.1109/TCSVT.2024.3424302 [retrieved on 2024-07-22]<br>* section V *<br>----- | 1-15 | |

The present search report has been drawn up for all claims

| Place of search | Date of completion of the search | Examiner |
|---|---|---|
| The Hague | 23 January 2026 | Stark, Konrad |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 22 7149

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2026

| Patent document cited in search report | Publication date | Patent family member(s) | Publication date |
|---|---|---|---|
| US 2024386308 A1 | 21-11-2024 | NONE | |
| US 2022101375 A1 | 31-03-2022 | NONE | |
| US 2021042581 A1 | 11-02-2021 | NONE | |
| US 2023004873 A1 | 05-01-2023 | US 2021240937 A1<br>US 2023004873 A1 | 05-08-2021<br>05-01-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 942821
- US 305483